(19)

**Europäisches Patentamt**
**European Patent Office**
**Office européen des brevets**

(11) **EP 4 654 144 A1**

(12) **EUROPEAN PATENT APPLICATION**

(43) Date of publication:
26.11.2025 Bulletin 2025/48

(21) Application number: 25178166.2

(22) Date of filing: 22.05.2025

(51) International Patent Classification (IPC):
*G06T 15/06* (2011.01)

(52) Cooperative Patent Classification (CPC):
G06T 15/06

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 24.05.2024 GB 202407459
07.04.2025 GB 202505211

(71) Applicant: **Imagination Technologies Limited**
**Kings Langley,**
**Hertfordshire WD4 8LZ (GB)**

(72) Inventors:
• **FENNEY, Simon James**
  **Kings Langley, WD4 8LZ (GB)**
• **AMAN, Aytek**
  **Kings Langley, WD4 8LZ (GB)**
• **ALLEN, Henry**
  **Kings Langley, WD4 8LZ (GB)**

(74) Representative: **Slingsby Partners LLP**
**1 Kingsway**
**London WC2B 6AN (GB)**

(54) **OBJECT INTERSECTION TESTING IN A RAY TRACING SYSTEM**

(57)    Object intersection testing in a ray tracing system. There is provided a method of determining, in a ray tracing system, whether a ray intersects an object of a scene, wherein the object is contained within a bounding region that is finite and forms part of an object partitioning hierarchy. The method comprising: determining that the ray intersects the bounding region; obtaining at least one contained region, wherein each at least one contained region is contained within, and smaller than, extents of a geometry defined by the object; determining that the ray intersects a contained region of the at least one contained region; and determining whether the ray intersects the object in dependence on at least determining that the ray intersects the contained region.

FIGURE 5a

**Description**

CROSS-REFERENCE TO RELATED APPLICATION

This application claims priority from UK patent applications GB2407459.3 and GB 2505211.9, filed on 24 May 2024 and 7 April 2025 respectively, which are herein incorporated by reference in their entirety.

TECHNICAL FIELD

The present disclosure is directed to techniques of performing intersection testing and traversing acceleration structures in a ray tracing system.

BACKGROUND

Ray tracing is a computational rendering technique for generating an image of a scene (e.g., a 3D scene) by tracing paths of light ('rays') through a scene, usually from the viewpoint of a camera, but also as secondary rays, for example from object reflections. Each ray is modelled as originating from the camera and passing through a pixel into the scene. As a ray traverses the scene it may intersect objects within the scene, thus creating secondary rays. The interaction between rays and objects can be modelled to create realistic visual effects. For example, in response to determining an intersection of a ray with an object, a shader program (i.e., a portion of computer code) may be executed in respect of the intersection. A programmer can write the shader program to define how the system reacts to the intersection which may, for example, cause one or more secondary rays to be emitted into the scene, e.g., to represent a reflection of the ray from the intersected object or a refraction of the ray through the object (e.g., if the object is transparent or translucent). As another example, the shader program could cause one or more rays to be emitted into the scene for the purposes of determining whether the object is in shadow at the intersection point, i.e., so-called 'shadow rays'. The result of executing the shader program (and processing the relevant secondary rays) can be the calculation of a colour value for the pixel the ray passed through.

Rendering an image of a scene using ray tracing may involve performing many intersection tests, e.g., billions of intersection tests for rendering an image of a scene. In order to reduce the number of intersection tests that need to be performed, ray tracing systems typically use an acceleration structure, sometimes abbreviated to 'AS', wherein each node of an acceleration structure represents a region within the scene. Nodes can have successive generations of child nodes, which represent successively smaller regions of the scene, and which are within regions associated with the parent node. Thus, acceleration structures are often hierarchical (e.g., having a tree structure) such that they include multiple levels of nodes, wherein nodes near the top of the acceleration structure represent relatively large regions in the scene (e.g., the root node may represent the whole scene), and nodes near the bottom of the acceleration structure represent smaller regions in the scene. A "tree node" refers to a node which has pointers (or references) to other nodes in the hierarchical acceleration structure, i.e., a tree node has child nodes in the hierarchical acceleration structure. A "leaf node" refers to a node which has one or more pointers to one or more primitives or a patch of primitives, i.e., a leaf node does not typically have further child nodes in the hierarchical acceleration structure. In other words, leaf nodes of the acceleration structure represent regions bounding one or more primitives of an object, and it is typically necessary to reach a leaf node in an AS in order to process a ray accordingly. The acceleration structure can have different structures in different examples, e.g., a grid structure, an octree structure, or generally any other space partitioning structure (e.g., a k-d tree) or a bounding volume hierarchy.

In some examples, the nodes represent axis-aligned bounding boxes (AABBs) in the scene, where each AABB bounds some object or a specific portion of an object. Intersection testing generally proceeds in a recursive manner, i.e., by testing the ray for intersection with the root node of the acceleration structure first, and in response to a 'hit' testing each child nodes of the root node. If the ray 'misses' a parent node, intersection testing of the child nodes of that parent node can be avoided, saving computational effort. If a ray is found to intersect a leaf node, the ray can be tested against the objects (i.e., primitives) within the region represented by the leaf node to thereby determine whether an object intersects the ray. Typically, a ray needs to be tested against a leaf node (i.e., primitive) of an object in order to determine that the ray intersects the object. Furthermore, it is typically necessary to reach a leaf node, thereby determining an intersection with an object, in order to reduce the so-called 'maximum culling distance' of the ray. This maximum culling distance represents an effective endpoint of a ray and may therefore represent the position at which a ray is occluded by some object in the scene. Nodes which correspond to a region in a scene that are more distant than the maximum culling distance therefore need not be tested for intersection. Thus, if the ray tracing system can determine that an object (or a portion thereof) associated with a distant node is occluded by an object of a closer node, the more distant node need not be tested against the ray. This is the case for intersection rays such as primary and secondary rays. In other words, for ray tracing in general, it is desirable to find the 'closest hit' of a ray as soon as possible, since this is computationally efficient. However, finding the closest hit in the fewest possible steps is non-trivial, and indeed unknowable in most cases. Even where heuristics can be employed to more efficiently seek a node believed to contain the 'closest hit', there is no way of knowing *a priori* which node contains the closest-hit object. The problem is amplified for traversal algorithms that test nodes in parallel. Parallel traversal algorithms traverse different branches of the acceleration structure in parallel, and thus are more likely to test a larger number of nodes than a non-parallel search. In particular, parallel traversal algorithms are more likely (than non-parallel searches) to perform tests on nodes representing objects which are, in reality, occluded.

For some types of rays, the closest intersection might not need to be identified. For example, when processing shadow rays, an indication that there is at least one intersection is sufficient, without determining which of the intersections is the closest. Some APIs may terminate the traversal of an acceleration structure for shadow rays in response to finding any intersection, thereby reducing the number of intersection tests that need to be performed. However, as mentioned above, it is still typically required to determine an intersection with a leaf node in order to determine, with certainty, that there is at least one intersection with an object. In some cases, this is non-trivial, as there may be many hierarchical levels (e.g., from about 5 levels up to about 40 levels) in the acceleration structure between the root node of the object and a leaf node of the object that contains the point of intersection. This may be the case, for example, for objects with complex/detailed surfaces, which are therefore constructed using hundreds of thousands, millions, or even billions of primitives.

An alternative way of considering a Ray-Bounding Volume test, e.g. Ray vs AABB, is that it is a "Conservative Visibility Test" of an object or collection of primitives, in that a given test determines either a) the ray definitely misses the object *or* b) unknown - the ray *might* hit or miss the object. That is, the test is allowed to produce false positives but never false negatives. To obtain 100% certainty of a positive case requires further traversal through the hierarchy to a leaf node.

Some publications have noted that, for the case of shadow rays, just knowing there is an intersection with the light ray may be sufficient to determine that a location is in shadow, i.e. that it is 'occluded'. These have proposed, when tracing shadow rays, to substitute existing geometry with approximate 'occluding' geometry that, say, have fewer primitives and thus be cheaper to traverse. However approximate models often lead to visual artifacts which are unacceptable.

In "Accelerating Shadow Rays Using Volumetric Occluders and Modified kd-Tree Traversal" (High Performance Graphics 2009), Djeu et al identify a scene object that is known to be a solid, closed and watertight polygon mesh. Within that mesh, they construct sets of "volumetric occluders" from nodes of the k-d tree deemed opaque, that are *strictly* within the closed interior of the mesh. The assumption is that there are usually significantly fewer volumetric occluders for a given mesh than primitives. These occluders can be included in the acceleration structure but are only considered for shadow rays. When testing a shadow ray, they can test the volumetric occluders of a given object earlier than its primitives. For this method to work, types of object must be closed, solid, and watertight, and the acceleration structure must be a space-partitioning structure such as a k-d tree.

The present disclosure is directed to methods of improving traversal of acceleration structures and improved methods of determining intersections with objects, with the aim of solving the aforementioned problems.

## SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a method of determining, in a ray tracing system, whether a ray intersects an object of a scene, wherein the object is contained within a bounding region that is finite and forms part of an object partitioning hierarchy, the method comprising:

    determining that the ray intersects the bounding region;
    obtaining at least one contained region, wherein each at least one contained region is contained within, and smaller than, extents of a geometry defined by the object;
    determining that the ray intersects a contained region of the at least one contained region; and
    determining whether the ray intersects the object in dependence on at least determining that the ray intersects the contained region. In some examples, the object partitioning hierarchy is a bounding volume hierarchy.

This provides means for conservatively hit testing a ray against an object to determine whether there is a hit with the object. Advantageously, this determination, i.e., determining the existence of an intersection between the object and the ray, is done by determining that the ray intersects the contained region of the at least one contained region. This potentially obviates the need to test for intersection between a ray and a triangle/primitive of the object. The present method thereby determines the existence of an intersection between an object and a ray in (potentially significantly) fewer intersection tests. In other words, the existence of an intersection between an object and a ray can be conservatively determined without the need to traverse down to a leaf node (e.g., a triangle/primitive) of the object partitioning hierarchy, which can be very time consuming.

There is also provided a method of determining, in a ray tracing system, whether a ray intersects an object of a scene, wherein the object is contained within a union of one or more bounding regions that are finite, wherein the one or more bounding regions form part of an object partitioning hierarchy, the method comprising:

determining that the ray intersects a region defined by the union of the one or more bounding regions;
obtaining at least one contained region, wherein each at least one contained region is contained within, and smaller than, extents of a geometry defined by the object;
determining that the ray intersects a contained region of the at least one contained region; and
determining whether the ray intersects the object in dependence on at least determining that the ray intersects the contained region.

In example implementations, the method further comprises, in response to determining that the ray intersects the object: updating an endpoint of the ray, defined by a maximum valid distance of the ray, by reducing the maximum valid distance by an amount that is no greater than a distance between the endpoint of the ray and an intersection point between the ray and the contained region. The reduction of the maximum valid distance may be applied along the direction of the ray.

In example implementations, the method comprises determining the amount by which to reduce the maximum valid distance in dependence on a position of an intersection point between at least one of i) the ray and the contained region and ii) the ray and the bounding region.

In some examples, the method further comprises outputting an indication that the result of the reduced maximum valid distance, wherein the outputted indication is used in the ray tracing system for rendering an image of a 3D scene.

In example implementations, the method comprises forming a queue of a plurality of intersection tests between the ray and a plurality of further bounding regions, the method comprising culling a subset of intersection tests in the queue in dependence on determining that the ray intersects the object. In example implementations, the method comprises culling the subset of intersection tests comprises determining whether a maximum distance condition is satisfied, wherein the maximum distance condition is satisfied if an updated endpoint of the ray defined by the reduced maximum valid distance is at least as far along a direction of the ray as an intersection point between the ray and a further bounding region associated with a respective queued intersection test.

In example implementations, updating the end point of the ray comprises setting an updated end point of the ray to be equal to an intersection point, between the ray and the contained region, that is least far along a direction of the ray. In other words, the updated endpoint may be equal an entry point between the ray and the contained region. This is the intersection point, of the two intersection points between the ray and the contained object, that is furthest from the original endpoint of the ray. Put another way, the updated endpoint is set as the first point (i.e., entry point) at which the ray intersects the contained region along a direction of the ray.

In example implementations, updating the endpoint of the ray comprises: determining that a start point of the ray lies outside the bounding region; and determining that the intersection point, between the ray and the contained region, that is least far along a direction of the ray is less far along a direction of the ray than the endpoint of the ray. The start point of the ray may be defined by, or equivalent to, a minimum valid distance of the ray.

In example implementations, there is a plurality of contained regions, and wherein updating the endpoint of the ray comprises: determining that the ray intersects a subset of contained regions of the plurality of contained regions; and setting an updated endpoint of the ray to be equal to an intersection point between the ray and a contained region in the subset that is least far along a direction of the ray.

In example implementations, updating the endpoint of the ray comprises setting an updated endpoint of the ray to be equal to an intersection point, between the ray and the bounding region, that is furthest along a direction of the ray.

In example implementations, the method comprises: determining that a start point of the ray lies within the bounding region; and determining that the intersection point, between the ray and the bounding region, that is furthest along a direction of the ray is less far along a direction of the ray than the endpoint of the ray. The start point of the ray may be defined by a minimum valid distance of the ray.

In example implementations the object is a closed object, and wherein the extents of the geometry of the object is an external surface of the object. In some examples, the object is a convex or mostly convex solid, or whose external surface is substantially convex.

In example implementations, the object is a non-closed self-concealing object that contains a hidden region, wherein the hidden region is contained entirely within an interior of the non-closed self-concealing object, the hidden region defined by being obscured from all possible viewing angles external to the non-closed self-concealing object, wherein each at least one contained region is contained within the hidden region of the non-closed self-concealing object

In example implementations, the object comprises an open cavity, and wherein the extents of the geometry of the object defining the region that contains the contained region is an externally facing surface of the object, wherein the method comprises: in response to determining that the ray intersects the bounding region, obtaining a partial bounding region which i) contains the at least one contained region and ii) excludes all portions of the object defining openings of the open cavity.

In example implementations, one or more exception surface of the partial bounding region defines a surface of the partial bounding region which excludes the portions of the object defining the opening of the open cavity, and wherein updating the endpoint of the ray is performed in dependence on determining that the ray intersects at least one surface of the partial bounding region that is not an exception surface.

In example implementations updating the endpoint of the ray comprises: determining that a start point of the ray lies outside of the partial bounding region; determining that an intersection point, between the ray and the partial bounding volume, that is least far along a direction of the ray does not lie on an exception surface; and setting an updated endpoint of the ray to be equal to an intersection point, between the ray and the contained region, that is least far along a direction of the ray.

In example implementations, the one or more exception surfaces are selected to exclude only a subset of openings of the open cavity, wherein the subset of openings is defined such that the at least one contained region is viewable via the openings.

In example implementations, updating the endpoint of the ray further comprises: determining that a start point of the ray lies outside of the partial bounding region; determining that an intersection point, between the ray and the partial bounding volume, that is least far along a direction of the ray lies on an exception surface; and setting an updated end point of the ray to be equal to said intersection point, between the ray and the partial bounding volume, that is furthest along a direction of the ray.

In example implementations, updating the endpoint of the ray comprises: determining that a start point of the ray lies inside the partial bounding region; setting an updated end point of the ray to be equal to said intersection point, between the ray and the partial bounding volume, that is furthest along a direction of the ray. It may therefore be therefore implicit that the exit point of the ray from the partial bounding region lies on a surface that is not an exception surface.

In example implementations, an exit condition of the ray is a closest-hit exit condition. The ray may be a primary or secondary ray.

In example implementations, determining an intersection with the bounding region comprises determining the existence of an intersection between a ray and a box.

In example implementations, the exit condition for the ray is an any-hit exit condition, the method further comprising: terminating processing for that ray in response to determining that the ray intersects the object. For example, where the exit condition for the ray is an any-hit exit condition the ray may be a shadow ray.

In example implementations, the object is a closed object, and the geometry of the object is an external surface of the object, wherein determining that the ray intersects the object comprises determining that the ray intersects at least one contained region of the contained region at least once.

In example implementations, the object comprises an open cavity, and the extents of the geometry defined by the object defining the region that contains the contained region is an externally facing surface of the object.

In example implementations, the method further comprises: obtaining a partial bounding region which i) contains the at least one contained region and ii) excludes all portions of the object defining openings of the open cavity, wherein the partial bounding region comprises one or more exception surfaces which exclude the portions of the object defining openings of the open cavity.

In example implementations, determining that the ray intersects the object comprises: determining that the ray intersects at least one surface of the partial bounding region that is not an exception surface.

In example implementations, the object is a contiguous surface, and wherein the extents of the geometry defined by the object comprises an outer boundary of the surface. For example, a contiguous surface means surface without any gaps or holes. The boundary may be formed by outer edges of the surface. For example, a surface made of tessellating convex polygons, such as triangles, has a boundary formed from the unpaired edges of the polygons.

In example implementations, the bounding region is a bounding box aligned in one dimension with a plane of the contiguous surface, and wherein the at least one contained region is a contained volume that is contained within the outer boundary of the surface. For example, the contained volume may have two dimensions greater than a third, where the two greater dimensions are contained within the outer boundary of the surface.

In example implementations, the method comprises: determining that the ray intersects the contiguous surface in dependence on determining that the ray intersects opposing faces of the bounding box, where the opposing faces are aligned with the plane of the surface.

In example implementations, determining that the ray intersects the object is performed without determining that the ray intersects a primitive or leaf node associated with the object.

In example implementations the object is a 3D object, and the bounding region is an axis-aligned bounding box.

In example implementations, each at least one contained region is an axis-aligned box.

In example implementations, the method further comprises outputting an indication that the ray intersects the object, wherein the outputted indication is used in the ray tracing system for rendering an image of a scene. For example, the scene is a 3D scene.

There is provided a graphics processing system configured to perform any of the methods disclosed herein. In example implementations, the graphics processing system is embodied in hardware on an integrated circuit.

There is provided computer readable code configured to cause any of the methods disclosed herein to be performed when the code is run.

There is provided an integrated circuit definition dataset that, when processed in an integrated circuit manufacturing system, configures the integrated circuit manufacturing system to manufacture a graphics processing system as disclosed herein.

There is provided an intersection testing module, for use in a ray tracing system, configured to determine whether a ray intersects an object of a scene, wherein the object is contained within a bounding region that is finite and forms part of an object partitioning hierarchy, the intersection testing module being configured to:

> determine whether the ray intersects the bounding region;
> in response to determining that the ray intersects the bounding region, obtain at least one contained region, wherein each at least one contained region is contained within, and smaller than, extents of a geometry defined by the object;
> determine whether the ray intersects a contained region of the at least one contained region; and

determine whether the ray intersects the object at least in response to determining that the ray intersects the contained region.

There is provided a method of determining, in a ray tracing system, whether a ray intersects an object of a scene, wherein the object comprises a surface, and wherein at least a portion of the surface of the object is contained within a bounding volume, the method comprising:

> determining that the ray intersects the bounding volume at two intersection points, wherein the two intersection points represent an entry point and an exit point;
> determining that the entry point and the exit point lie on opposing faces of the bounding volume, wherein the opposing faces of the bounding volume are arranged on opposing sides of the portion of the surface of the object contained within the bounding volume; and
> determining whether the ray intersects the object at least in dependence on determining that the entry point and the exit point lie on an opposing faces of the bounding volume.

In example implementations, the portion of the surface of the object contained within the bounding volume contains no gaps, and wherein the bounding volume is partitioned, by the portion of the surface of the object, into two distinct volumes.

In example implementations, all faces of the bounding volume intersected by the object are deemed exception surfaces, the method further comprising: in response to determining that the entry point and the exit point do not lie on exception surfaces of the bounding volume, determining that the ray intersects the object.

In example implementations, the portion of the surface of the object contained within the bounding volume does not intersect any face of the bounding volume, the method further comprising: determining a contained planar region whose boundary is contained within a projection of the portion of the surface of the object onto a plane of the contained planar region. In examples, contained planar region does not overlap with the boundary or outer edge of the portion of the surface of the object.

In example implementations, the method further comprises: determining a position of the entry point and the exit point; projecting the positions of the entry point and the exit point onto the plane of the contained planar region to obtain projected entry and exit points; in response to determining that the projected entry and exit points lie within the boundary of the contained planar region, determining that that the ray intersects the object.

In example implementations, the method further comprises, in response to determining that the ray intersects the object: reducing a maximum valid distance that defines an endpoint of the ray by updating the endpoint of the ray to be equal to the exit point.

In example implementations, the method further comprises forming a queue of a plurality of intersection tests between the ray and a plurality of further bounding regions, the method comprising culling a subset of intersection tests in the queue in dependence on determining that the ray intersects the object. Culling the subset of intersection tests comprise determining whether a maximum distance condition is satisfied, wherein the maximum distance condition is satisfied if the updated endpoint of the ray defined by the reduced maximum valid distance is at least as far along a direction of the ray as an intersection point between the ray and a further bounding region associated with a respective queued intersection test.

In example implementations, an exit condition of the ray is a closest-hit exit condition. The ray may be a primary or secondary ray.

In example implementations, an exit condition for the ray is an any-hit exit condition, the method further comprising terminating processing for that ray in response to determining that the ray intersects the object.

In example implementations, the bounding volume is arranged such that the opposing faces of the bounding volume are aligned with a plane of the portion of the surface of the object contained within the bounding volume, and wherein each of the opposing faces has a larger surface area than each of the other faces of the bounding volume.

In example implementations, the bounding volume is an axis-aligned box.

In example implementations, the bounding volume is object-oriented box having one dimension aligned with a plane of the portion of the surface of the object contained within the bounding volume.

In example implementations, the object is a 3D object, and wherein the surface of the object comprises two dimensions substantially greater than a third dimension.

In example implementations, the surface of object is comprised of a plurality of tessellating convex polygons, wherein the portion of the surface contained within the bounding volume is a contiguous surface. Thus, in examples, the contiguous surface has no gaps or holes.

In example implementations, determining that the ray intersects the bounding volume at two intersection points comprises determining that the two intersection points lie within a maximum valid distance and a minimum valid distance of the ray.

In example implementations, the bounding volume forms part of an object partitioning hierarchy. The object partitioning hierarchy may be a bounding volume hierarchy.

In example implementations, determining whether the ray intersects the object is performed without determining that the ray intersects a primitive or leaf node associated with the object.

In example implementations, the method further comprises outputting an indication that the ray intersects the object, wherein the outputted indication is used in the ray tracing system for rendering an image of a scene.

There is provided a graphics processing system configured to perform any of the methods disclosed herein. The graphics processing system may be embodied in hardware on an integrated circuit.

There is provided computer readable code configured to cause any of the methods disclosed herein to be performed when the code is run.

There is provided an integrated circuit definition dataset that, when processed in an integrated circuit manufacturing system, configures the integrated circuit manufacturing system to manufacture a graphics processing system as disclosed herein.

The intersection testing module or ray tracing system may be embodied in hardware on an integrated circuit. There may be provided a method of manufacturing, at an integrated circuit manufacturing system, an intersection testing module or ray tracing system. There may be provided an integrated circuit definition dataset that, when processed in an integrated circuit manufacturing system, configures the system to manufacture an intersection testing module or ray tracing system. There may be provided a non-transitory computer readable storage medium having stored thereon a computer readable description of an intersection testing module or ray tracing system that, when processed in an integrated circuit manufacturing system, causes the integrated circuit manufacturing system to manufacture an integrated circuit embodying an intersection testing module or ray tracing system.

There may be provided an integrated circuit manufacturing system comprising: a non-transitory computer readable storage medium having stored thereon a computer readable description of the intersection testing module or ray tracing system; a layout processing system configured to process the computer readable description so as to generate a circuit layout description of an integrated circuit embodying the intersection testing module or ray tracing system; and an integrated circuit generation system configured to manufacture the intersection testing module or ray tracing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a ray tracing system according to examples described herein;

Figure 2a shows a ray and a box where the start of the ray is before the box and the end of the ray is beyond the box;

Figure 2b shows a ray and a box where both the start and the end of the ray are before the box;

Figure 3 shows a ray interacting with a 2D representation of three objects in a scene, and bounding regions associated with the objects which represent part of an acceleration structure;

Figure 4 shows the nodal structure of an acceleration structure which relates to the bounding regions in figure 3;

Figure 5a shows a 2D representation of a ray interacting with an object and a contained region within the object;

Figure 5b shows a 3D representation of the scene in figure 5a, in which the bounding region is an axis-aligned bounding box;

Figure 6a shows a first example behaviour of a ray intersecting with a contained region within a closed object;

Figure 6b shows a second example behaviour of a ray intersecting with a contained region within an object;

Figure 6c shows a first example behaviour of a ray interacting with an object containing multiple contained regions within a closed object;

Figure 6d shows a second example behaviour of a ray interacting with an object containing multiple contained regions within a closed object;

Figure 7a shows a first example behaviour of a ray intersecting with a contained region within an object containing a cavity;

Figure 7b shows a second example behaviour of a ray intersecting with a contained region within an object containing a cavity;

Figure 7c shows a third example behaviour of a ray intersecting with a contained region within an object containing a cavity;

Figure 7d shows a fourth example behaviour of a ray intersecting with a contained region within an object containing a cavity;

Figure 7e shows a 3D example of the object containing a cavity of figures 7a-7d;

Figure 8a shows an example of a shadow ray being traced towards a light source and being occluded by an object;

Figure 8b shows an example of a shadow ray being traced away from a light source that is contained within a non-closed object;

Figure 9a shows an elbow pipe object with two open ends, and the surfaces and regions used to handle ray tracing according to present embodiments;

Figure 9b shows a crooked pipe object with two open ends, and surfaces and regions used to handle ray tracing according to present embodiments;

Figure 10a shows a further example of an elbow pipe object with two open ends, and the surfaces and regions used to handle ray tracing according to present embodiments;

Figure 10b shows the same elbow pipe object as in figure 10a, with a different arrangement of bounding regions and contained regions used to handle ray tracing according to present embodiments;

Figure 11 shows a flowchart for a general method of determining whether a ray intersects an object according to examples described herein;

Figure 12 is a flowchart for a method of determining whether a ray with a closest-hit exit condition intersects with a closed object;

Figure 13 is a flowchart for a method of determining whether a ray with a closest-hit exit condition intersects with an object containing a cavity;

Figure 14 is a flowchart for a method of determining whether a ray with an any-hit exit condition intersects with an object;

Figure 15a shows a first example for dealing with ray intersecting with an object that is a 3D surface;

Figure 15b shows second first example for dealing with ray intersecting with an object that is a 3D surface, where the object is the same as in figure 15a;

Figure 16a shows a third example involving an object that is a 3D surface, and a method of bounding that object;

Figure 16b shows an example of how to deal with ray intersection testing with the 3D surface object of figure 16a;

Figure 17a shows an example of a 2D non-closed self-concealing object with a hidden region;

Figure 17b shows the 2D non-closed self-concealing object in Figure 17a and illustrates another example behaviour of a ray intersecting with a contained region within the hidden region of the non-closed self-concealing object;

Figure 18a shows an example of a 3D non-closed self-concealing object with a hidden region, in plan view;

Figure 18b shows an example of a 3D non-closed self-concealing object with a hidden region;

Figure 18c shows an example of a 3D object that resembles a non-joined pipe being open at both ends;

Figure 19 shows an example of an object contained within a union of multiple bounding regions, in accordance with present embodiments;

Figure 20 shows a computer system in which a graphics processing system is implemented; and

Figure 21 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Where appropriate, common reference numerals are used throughout the figures to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

In a ray tracing system, even when an acceleration structure is used, the amount of work involved in performing intersection testing is still very large. For example, ray tracing may be used for rendering an image of a 3D scene, where the image may have in the order of a million pixels. A primary ray may be traced for each sample position. Moreover, with super sampling, there may be multiple primary rays generated per pixel. The complexity of scenes to be rendered tends to increase with the development of graphics rendering technology, so it would not be unusual for there to be thousands of objects in a scene, each of which may be represented by many thousands of primitives. Furthermore, the images being rendered may represent frames of a sequence of frames which are to be rendered in real-time, e.g. for display to a user in real-time. For example, the user may be playing a game wherein the rendered images represent a user's view of the 3D scene as the user plays the game. In order for the sequence of frames to appear continuous, many frames may be rendered per second, e.g. 24, 30, 60, or even 120 frames per second. It can therefore be appreciated that the work involved in performing intersection testing in a ray tracing system to render scenes in real-time is vast. This problem is compounded by the desire to perform ray tracing on home computers, and even mobile devices, such as a tablet or smartphone, for which the acceptable size and power consumption may be much lower than for a standard computer.

Examples described herein may allow the power consumption and/or size of the ray tracing system to be decreased without significantly decreasing the performance of the ray tracing system (compared to the prior art described above in the background section). Different implementations can be designed to target different aspects of the trade-off between performance, power consumption, and silicon area. Other examples described herein may allow the performance to be increased without a significant increase to power consumption, or indeed with little to no increase in hardware (compared to the prior art described above).

As described above, testing rays for intersection with bounding regions, which correspond with nodes of an acceleration structure, is an extremely frequent operation in a ray tracing system. It should be appreciated that a bounding region refers to a general n-dimensional closed region, which may be axis-aligned. Preferably, for a 3D scene, the bounding region is an axis-aligned bounding box (AABB), which can be efficiently tested using box testing units (BTUs), or oriented bounding box (OBB)), which can give tighter bounds, but may be more expensive to test. In particular, the intersection testing of rays with bounding regions usually accounts for most of the intersection tests that are performed to render an image of a scene using ray tracing. Therefore, optimizations which can reduce the number of these intersection tests will be advantageous for optimizing the ray tracing system in terms any or all of i) reducing the execution time, ii) reducing power consumption, and iii) reducing the physical size of the ray tracing system.

Typically, an acceleration structure called a bounding volume hierarchy (BVH) is used. This comprises a tree structure for a set of objects comprising a set of nodes, where each node relates to a bounding region (in a 3D scene, a bounding volume) for an object. Child nodes contain successively smaller bounding regions, where the bounding regions of all child nodes are contained within the region of the parent nodes. Thus, a recursive structure is formed in which the 'leaf node' for a scene represents the endpoint of the tree. For a top-level acceleration structure (TLAS), the leaf node may represent the bounding region for an object. For a bottom-level acceleration structure (BLAS), the root may represent the leaf node of the TLAS, and a leaf node of the BLAS may represent a bounding region containing one or more primitives defining the surface of an object. As mentioned in the examples in the background section, it is typically necessary to determine an intersection with a leaf node of a BLAS in order to determine that an intersection between a ray and an object exists. This necessity carries two disadvantages: firstly, testing at a leaf node requires testing against a primitive of an object, which requires a triangle test to be carried out. Typically, triangle tests are more computationally expensive and/or time-consuming to carry out than box tests (and/or, in a hardware system, there may be fewer ray-triangle testing units than ray-box tester). Secondly, in order to traverse to a leaf node, all successive parent nodes must be traversed, which, depending on the complexity of the object, may represent a large number of box intersection tests.

For reasons explained below, regardless of whether the closest-hit needs to be identified, it is generally essential to determine that an intersection with an object exists for all types of rays. This is done in order to determine how to continue the processing of the ray. For example, an attribute of the ray may be updated or modified, or it may be determined to terminate the processing of the ray altogether. Consequently, it would be advantageous if the existence of an intersection between a ray and an object could be determined more efficiently, e.g., without the need to traverse the entirety of a BLAS all the way to a leaf node. The advantage of determining intersection with objects more efficiently is particularly noticeable for scenes with a larger number of closed objects. The problem is amplified further for traversal algorithms that test nodes of an acceleration structure in a non-depth-first and non-sorted order, e.g. a breadth-first order or hybrid thereof, or in parallel, i.e., which traverse different branches of the acceleration structure concurrently. For example, a set of intersection tests from adjacent branches of a BVH tree structure may be queued for testing either sequentially or in parallel for a given ray or packet of rays. However, parallel testing can proceed in an unpredictable order.

A ray ($r$) can be defined as $r = O + Dt$ where $O$ is a vector which represents the ray origin, $D$ is a vector which represents the ray direction and $t$ represents a distance along the ray from the origin. Each ray is associated with a maximum culling distance, also called $t_{max}$, which usually defines the maximum distance at which testing needs to be carried out (i.e., geometry testing need not be carried out beyond $t_{max}$). In other words, $t_{max}$ represents the maximum required test distance of a ray, or the current endpoint of the ray. Thus, where intersection testing is performed breadth-first or in parallel, and potentially in an unpredictable order, it may be the case that many nodes of a BVH are needlessly tested. Such testing may be a waste of the computing resources time because objects associated with those nodes may, in reality, be occluded by an object of another node that is still in the queue to be tested. The problem is that, until the closest hit has been found, $t_{max}$ cannot be updated to reflect the 'true' endpoint of the ray, which means that unnecessary compute power can be wasted testing occluded objects.

For this reason, it would be particularly advantageous to be able to reduce the value of $t_{max}$ at an earlier opportunity, e.g., by providing a method that can determine the existence of an intersection with an object much faster, e.g., with many fewer tests. For example, rather than traversing all the way down to a leaf node of an object to determine the existence of an intersection, it would be especially advantageous if the existence of that intersection could be determined based purely on box tests (which are computationally cheaper than a triangle test, i.e., a test between a ray and a primitive). More generally, it would be especially advantageous if the existence of an intersection could be determined at a higher level in the BVH, i.e., at a node much closer to the root node, thereby significantly reducing the number of box tests that need to be carried out. As noted above, a ray vs bounding region (e.g. AABB) test may be considered a 'conservative hit test of a ray against an object' that may return a 'false positive' but never a 'false negative'. A true hit can typically only be determined through traversal down through the hierarchy to, and the testing of, primitive nodes. The present disclosure provides a method that performs a new, additional, 'conservative hit test of a ray against an object' that can return either a) that there is a guaranteed hit (albeit at a conservative distance) with the object or b) an unknown result. This confers at least these two advantages compared to typical scene model, i.e., i) determining the existence of an intersection between an object and a ray using a test between a ray and a 'new type' of bounding region, rather than between a ray and a triangle/primitive, and ii) determining the existence of an intersection between an object and a ray in (potentially significantly) fewer intersection tests. Based on this dual advantage, it should be appreciated that embodiments of the present invention confer improvements in ray tracing efficiency both for algorithms which traverse an acceleration structure in parallel or in breadth order, and in the case where traversal is implemented serially or in depth order. Further, it confers a significant advantage in any system for rays that do not require the closest hit but just the existence of a hit, such as shadow rays. By the same token, embodiments of the present invention confer advantages for both hardware and software implementations.

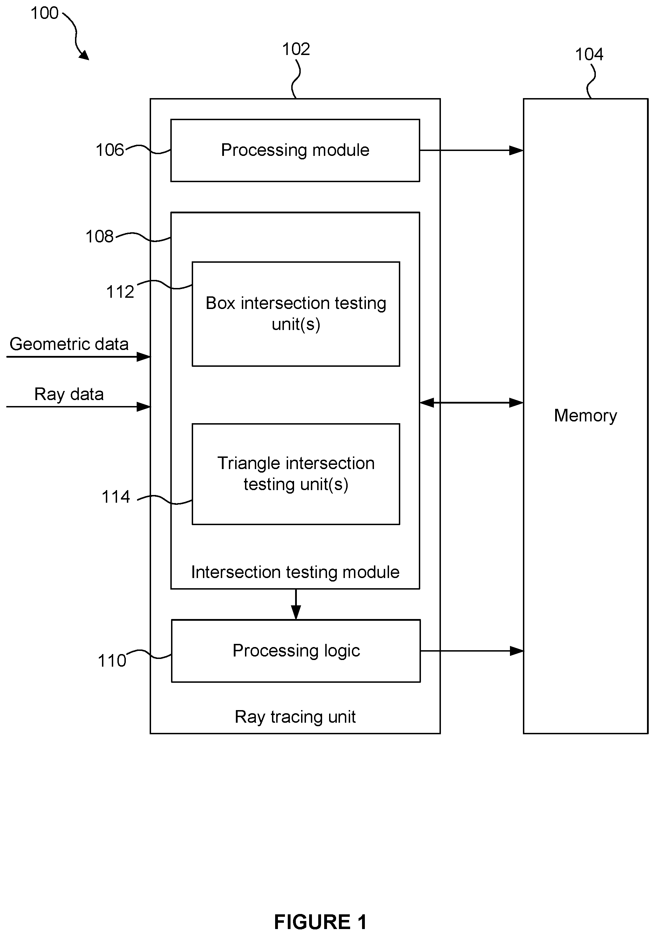

Figure 1 shows a ray tracing system 100 comprising a ray tracing unit 102 and a memory 104. The ray tracing unit 102 comprises a processing module 106, an intersection testing module 108 and processing logic 110. The intersection testing module 108 comprises one or more box intersection testing units 112, one or more triangle intersection testing units 114. In operation, the ray tracing unit 102 receives geometric data defining objects within the 3D scene. The geometric data may also contain any geometric data defining bounding regions or contained regions for use in the intersection testing, and any other geometric feature of the object that may be required (e.g., the interior volume, cavity, the convex hull, or convex deficiency/concavity of on object). The ray tracing unit 102 also receives ray data defining rays that are to be tested for intersection. The rays may be primary rays or secondary rays such as shadow rays or reflection rays. The processing module 106 is configured to generate an acceleration structure based on the geometric data and to send the acceleration structure to the memory 104 for storage therein. Alternatively, the acceleration structure may be pre-determined and form part of the geometric data. After the acceleration structure has been stored in the memory 104, the intersection testing module 108 can retrieve nodes (comprising data defining bounding volumes, e.g., axis-aligned boxes corresponding to the nodes) of the acceleration structure from the memory 104 to perform intersection testing of rays against the retrieved nodes. To avoid reading in the whole acceleration structure at a time, the intersection testing module 108 may retrieve a subset of the boxes from one level of the acceleration structure from memory 104 at each stage, based on the results of previous intersection tests. The box intersection testing unit(s) 112 perform intersection tests to determine whether or not a ray intersects each of the bounding regions corresponding to nodes of the acceleration structure (where a miss can cull vast swathes of the hierarchical acceleration structure). If a leaf node is intersected, then the appropriate ray-primitive testing is performed, e.g., for triangles, the triangle intersection testing unit(s) 114 performs one or more triangle intersection tests to determine which object(s) (if any) the ray intersects. Other primitive types may use other testing units, e.g., procedural models may be done with a shader program.

Use of the box intersection testing unit(s) 112 is extended to performing intersection tests to determine whether a ray intersects a contained region, that is contained within an object, as described below in more detail. In some embodiments, box intersection testing unit(s) 112 may be split, either logically or physically, into two box intersection testing units (or two groups of units thereof), which performs intersection tests with bounding regions and contained regions. In some examples, the same box intersection testing unit (BTU) may be configured to test bounding regions and contained regions, in other words, a single box testing unit could be used twice, i.e., once to test bounding region(s) and once to test contained region(s). In some examples, two or more box intersection testing units are configured to run in parallel: in this case, one BTU can test the bounding region(s) concurrently with the other BTU, which tests the contained region(s). The results of the intersection tests may be used to infer the existence of an intersection with an object, and to indicate which object in the scene a ray intersects. Where a triangle testing unit has determined the intersection, the result may also indicate a position of the intersection point on the object, and may also indicate a distance along the ray where the intersection occurs. Where a box testing unit indicates an intersection with an object, the result generally will not reveal the exact position at which the object and ray intersect (box testing units in some cases, or specifically modified box testing units, may provide the exact position/coordinates of an intersection point at which the object and ray intersect). Advantages of, however, embodiments of the present invention are configured to infer the existence of an intersection with an object without this information. The processing logic 110 is configured to receive the results of the intersection testing. The processing logic 110 is configured to process the results of the intersection testing to determine rendered values representing the image of the 3D scene. The rendered values determined by the processing logic 110 can be passed back to the memory 104 for storage therein to represent the image of the 3D scene.

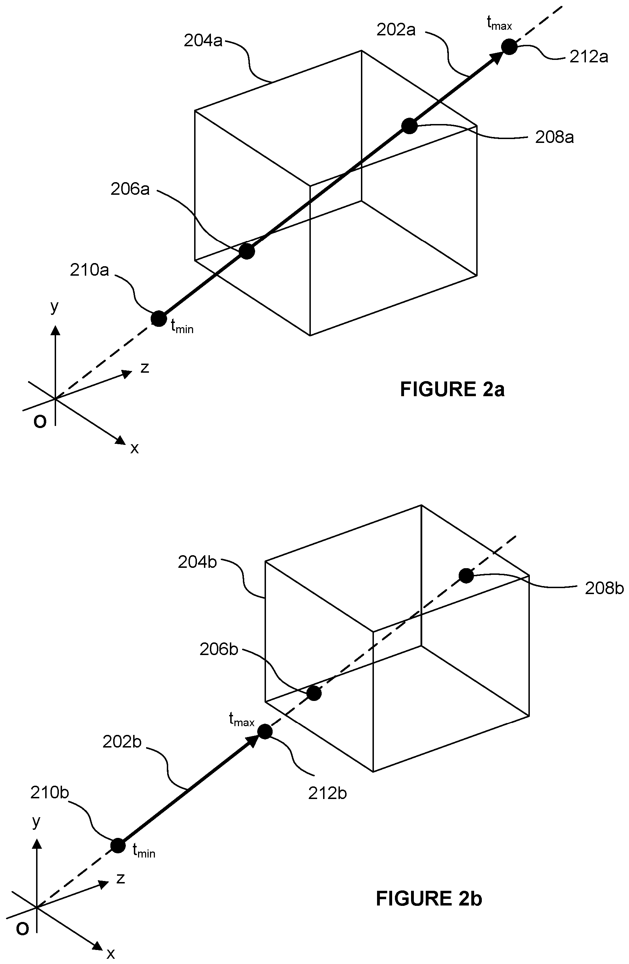

Figures 2a and 2b illustrate the purpose of the maximum culling distance, $t_{max}$, with respect to performing intersection tests with axis-aligned bounding boxes (though the general principle applies for a bounding region of suitable shape, and in 2D or 3D). Figure 2a illustrates an example in which an intersection would be found to exist between a ray 202a and a box 204a, which in this case is an axis-aligned bounding box. The ray can be defined as $r = O + Dt$ where $O$ is a vector which represents the ray origin, $D$ is a vector which represents the ray direction and $t$ represents a distance along the ray from the origin. Thus, the line defining the ray is in principle infinite. The ray itself is therefore characterised by its minimum culling distance 210a, which notionally defines the start point of the ray, and the maximum culling distance 212a, which notionally defines the endpoint of the ray. The minimum/maximum culling distance may also be referred to as the minimum/maximum valid distance of the ray.

The ray 202a intersects the boundaries of the box at two positions 206a, 208a. It will be appreciated that, elsewhere in this disclosure, the intersection point 206a that is least far along a direction of the ray may otherwise be referred to as the 'first' or 'closest' intersection point between the ray and the box. Additionally, the closest intersection point 206a can be referred to as the intersection point at which the ray 'enters' the box (i.e., since the ray vector can notionally be seen as travelling from its start point 210a to its end point 212a). Similarly, the intersection point 208a that is furthest along a direction of the ray may otherwise be referred to as the 'second' or 'furthest' intersection point between the ray and the box, or, the point at which the ray 'exits' the box. In figure 2a, both the intersection points with the box 206a, 208a, lie on positions on the ray that are in between the minimum culling distance and the maximum culling distance. Consequently, the maximum and minimum distance conditions have been satisfied, and the ray 202a will be found in intersect the bounding box 204a.

Figure 2b, by contrast, illustrates an example in which an intersection would not be found to exist between a ray 202b and a bounding region 204b. Moreover, because of the distance conditions, an intersection test between the ray (or, formally, the straight line defining the path of the ray) and the box could be avoided altogether. The ray 202b intersects a front-facing plane of the box 204b (i.e., enters the box) at point 206b, and intersects a back-facing plane of the box 204b (i.e., exits the box) at point 208b. Although the line defining the ray 202b does intersect the box 204b, the endpoint of the ray defined by the maximum culling distance 212b, $t_{max}$, is less far along the direction of the ray than either intersection point 206b, 208b. Consequently, the box intersection testing unit is able to determine that no intersection exists between the ray 202b and box 204b without ever having to perform an intersection test between the ray and the box. This example, therefore, illustrates the powerful effect that the value of $t_{max}$ can have on intersection testing operations. Specifically, if $t_{max}$ can conservatively (i.e., in a manner that does not introduce unwanted rendering artefacts) be reduced more efficiently, and/or at an earlier point during the traversal of an acceleration structure, many intersection tests with bounding regions can be avoided altogether.

The present disclosure pertains to methods of determining the existence of an intersection with an object, and the consequences of processing a ray in dependence on this determination. The methods disclosed apply to various different kinds of rays, however, the consequences of the ray processing, subsequent to determining an intersection with an object, can differ depending on the ray type. More specifically, the consequences depend on the 'exit condition' of the ray. In general, two types of rays, each with a respective exit condition, are considered in the present disclosure.

The first type is an 'intersection ray', which typically, and for the purposes of this disclosure, is associated with a 'closest-hit' exit condition. Closest-hit is used to determine the first object that a ray intersects (starting from the start point of the ray defined by $t_{min}$) along the direction of the ray. This exit condition is generally associated with primary, reflected, and transmitted rays. The second type, which include 'shadow rays', is associated with an 'any-hit' exit condition. Any-hit is used for visibility tests between two points. For example, a shadow ray is cast from a surface when checking to see if a point on that surface is lit directly by a light source. Similar types of rays are used for visibility estimation in, for example, ambient occlusion calculations. For such rays, no information other than the existence of a hit is needed, i.e., the position of an object that is hit - provided it is within the $t_{min}$, $t_{max}$ range - is not needed and is thus generally not determined. Such rays might also be used for non-graphics purposes, e.g. path finding and/or character "AI". For brevity, this class of ray will henceforth be referred to simply as shadow rays.

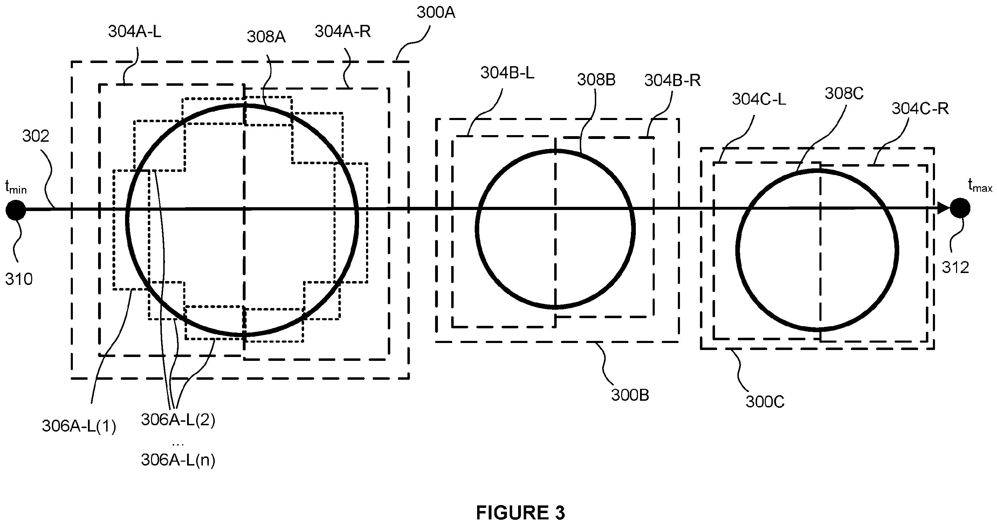

Figure 3 illustrates a 2D representation of a ray 302 and three objects 308A, 308B, 308C within a scene. The scene represented by the illustration may, in fact, be a 2D scene, though may equally be a 3D scene. The ray 302 here could be an intersection ray or a shadow ray, and the consequences for both will be explained below in more detail. Each object is depicted as being contained within a bounding region 300A, 300B, 300C. Within each object-bounding region are left-hand and right-hand bounding regions corresponding to first-generation child nodes. Thus, the left-hand bounding region 304A-L and right-hand bounding region 304A-R represent the two child nodes for the object-bounding region 300A of the first object 308A in the ray's path. Yet further, bounding regions 306A-L(1), 306A-L(2), 306A-L(n) correspond to second-generation child nodes that are contained within the left-hand bounding region 304A-L of the first object 308A. Therefore, figure 3 depicts the recursively contained set of bounding regions that make up a bounding volume hierarchy (BVH) for a set of three objects.

The ray is additionally defined by a start point 310 and an end point 312, which respectively represent the minimum culling distance, $t_{min}$, and the maximum culling distance, $t_{max}$. It can be seen that the first object 308A occludes the second 308B and third 308C objects for the ray 302 in figure 3. In a first example, let the ray be an intersection ray associated with a closest-hit exit condition. The position of the maximum culling distance is further along the ray than each of the objects and their respective bounding boxes. Therefore, the ray 302 could potentially be tested against the bounding regions for all objects. Indeed, because the ray intersects each bounding region for the objects 300A, 300B, 300C, a traversal algorithm could potentially traverse down the hierarchy for each of the objects until it reaches a leaf node for one of the objects. As mentioned above, typically, an intersection with a primitive (contained in a leaf node of the BVH) of an object would need to be found in order to safely reduce the maximum culling distance. In a worst-case scenario, therefore, a traversal algorithm could first find an intersection with a leaf node on object 308C, then subsequently traverse the portion of the BVH associated with object 308B until an intersection with a leaf node is found, and then again traverse down the portion of the BVH associated with object 308A. This worst-case scenario would therefore involve many (wasted) intersection tests with bounding regions associated with occluded objects 308B and 308C. Moreover, the maximum culling distance would be reduced three separate times in this inefficient scenario. In other, worst-case scenarios, the maximum culling distance may be incrementally reduced even more than three times.

Moreover, even if the BVH traversal algorithm decided (e.g., based on a guiding heuristic) to traverse the portion of the BVH associated with object 308A first, the algorithm would still need to traverse all the way down to a leaf node (which, as seen in the figure, would exist in the second-generation child node 306A-L(1)). During this traversal, the ray may well be tested against bounding regions that would not result in an intersection, e.g., many of the regions contained within child-node 304A-R. Consequently, even if the traversal algorithm traverses the BVH associated with the 'true' closest object 308A, there is still the potential for many wasted intersection tests before the leaf node containing the intersection is reached. This is because the position of $t_{max}$ cannot be updated until an intersection with the object has been confirmed, at which point the position of $t_{max}$ would be updated to the determined intersection point. Similarly, for shadow rays, an intersection needs to be determined before the processing of the ray can be terminated. Thus, even though $t_{max}$ need not be updated for shadow rays, shadows rays are still associated with endpoint, $t_{max}$, that defines a maximum distance that needs to be tested against geometry. Thus, all objects that are between the minimum and maximum valid distance defined by $t_{min}$ and $t_{max}$ have the potential to be tested, potentially unnecessarily (in the sense that the rendering does not depend on an intersection with more distant, occluded, objects). The present method aims to solve these problems, where the advantages relating to intersection rays and shadow rays are considered below separately.

Intersection Rays

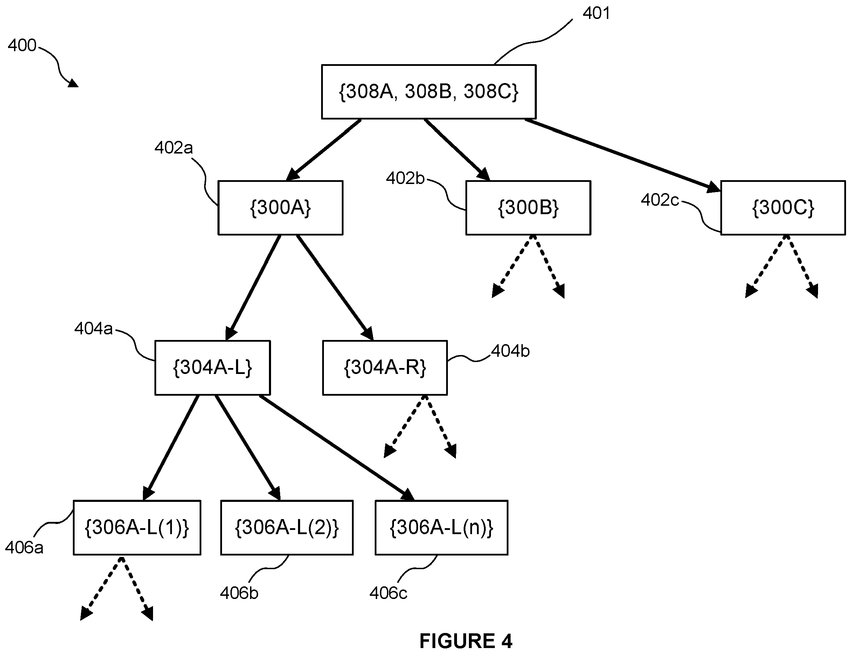

Figure 4 shows the nodal structure of the BVH 400 associated with the objects and bounding regions in figure 3. The root node 401 contains all objects. The object-bounding regions are associated with nodes 402a, 402b, 402c. The first-generation child nodes (shown) are 404a and 404b, which correspond to bounding regions {304A-L} and {304A-R} for object 308A. Second-generation child nodes (shown) are 406a, 406b, and 406c. For a software traversal algorithm, i.e., that traverses in a serial manner, traversal would likely be organised to run in a "nearest-node-first order". Traversal would typically progress in a "depth-first" manner. This means that at given node in the hierarchy the closest child node (i.e., closest to the start of the ray defined by $t_{min}$) would be tested first and, if a hit is found with the bounding region, traversal would recursively continue in this fashion down the tree structure. This nearest-node-first heuristic is applied to increase the probability that the closest object will be intersected first, thus usually reducing, and potentially removing entirely, the need to test the more distant, occluded, objects (i.e., 308B and 308C). Although the nearest-node-first heuristic does not guarantee this, the result is that the algorithm is less likely to traverse down portions of the BVH that correspond to distant, occluded, objects. For example, a nearest-node-first traversal algorithm may attempt the following path: {308A, 308B, 308C} → {300A} → {304A-L} → {304A-L(1)} → {...} → {leaf node}. Consequently, nodes 402b and 402c may never be tested. On the other hand, the nearest-node-first heuristic may inadvertently traverse down a branch of the BVH that is not, in reality, associated with the closest object. Compute time and resources can be wasted in this way. Therefore, even for methods that employ the nearest-node-first heuristic, for intersection rays there would likely be some benefit to being able to reduce $t_{max}$ early, e.g., by testing bounding regions (402a, 402b, 402c) associated with objects first such that traversal down to the leaf node of occluded or objects can be avoided altogether.

A more profound advantage is conferred in embodiments in which the traversal algorithm operates in parallel. For the avoidance of doubt, parallel traversal refers to the manner in which intersection tests are queued and performed (i.e., concurrently), rather than to the architecture of the processor(s) carrying out the tests. Nevertheless, parallelised hardware, GPUs, and/or CPUs having multiple cores are particularly suited to performing parallel traversal. For example, hardware acceleration frequently employs parallel processing of ray tracing tasks.

Parallel traversal can proceed in an apparently random order, and thus the order of intersection tests can be unpredictable. Parallel traversal methods can be viewed as traversing the BVH in a 'semi-breadth first' manner. For example, a queue of tests may be formed, where each test in the queue relates to a node of the BVH. This means that there is a reasonable chance that the algorithm may test parts of the BVH relating to objects 308A, 308B, and 308C at the same time. In other words, subsequent to being queued, nodes 402a, 402b, and 402c may be tested for intersection concurrently (though not necessarily exactly simultaneously). Generally, there is no way of knowing which of the nodes 402a, 402b, and 402c will get tested first. If, for example, node 402b is tested first, the ray will find a 'hit' with bounding region 300B, at which point the child nodes (corresponding to bounding regions 304B-L and 304B-R) will both be queued up for testing. It is therefore likely that tests from approximately the same depths in the BVH may be queued up concurrently. Concurrent traversal of separate branches of the BVH will continue until one tester reaches a leaf node and finds a successful 'hit' with an object, at which point the system can reduce the value of $t_{max}$ to that intersection point with the object. The system can then prune other branches of the BVH that are outside the valid testing range defined by $t_{max}$.

Taking this example further, it can be seen that bounding regions 300B and 300C intersect with the ray 302, as do the objects contained within them. Therefore, until the maximum valid distance, $t_{max}$, is reduced, the traversal algorithm may continue to concurrently traverse down the BVH structure branching from nodes 402b and 402c. Clearly, this is a waste of computing resources, because it can be seen in figure 3 that objects 308B and 308C are occluded by object 308A for the ray 302. Consequently, it would be highly beneficial for parallel traversal methods dealing with intersection rays (i.e., using the closest-hit exit condition) to be able to reduce $t_{max}$ at the earliest opportunity, preferably without needing to reach a leaf node.

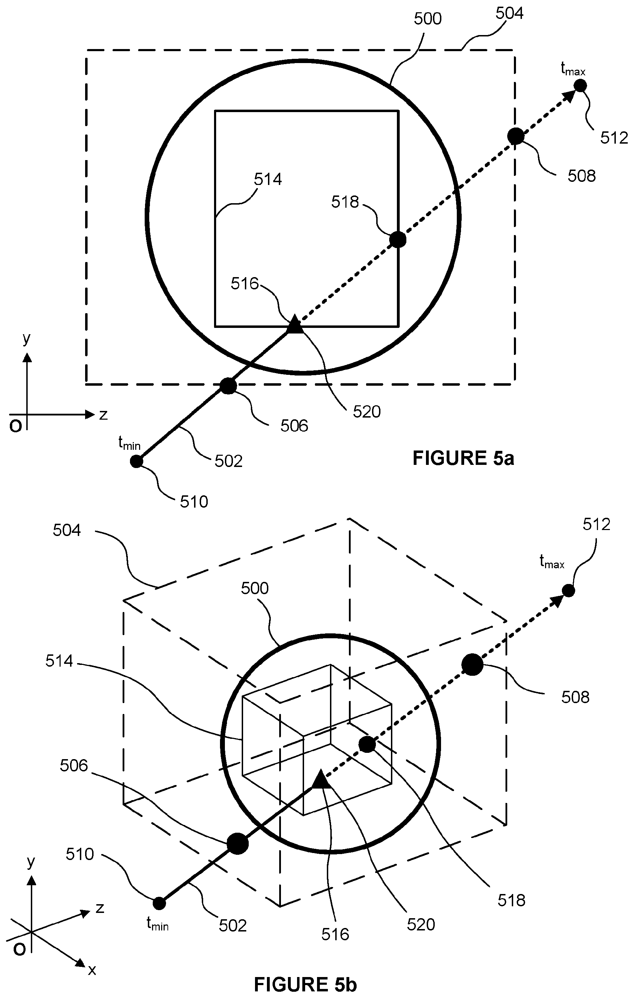

Figures 5a and 5b illustrate an embodiment of a method by which an intersection with an object can be much more efficiently determined. Figure 5a shows a 2D representation, and figure 5b shows a 3D representation of the same scene. The scene shows a ray 502 intersecting with a spherical/circular object 500. The object 500 is contained within a bounding region 504. As can be seen in figure 5b, the bounding region 504 is an axis-aligned bounding box 504, i.e., because the x, y, and z dimensions of the box are aligned with the x, y, z axes of the coordinate system. It will be appreciated that any suitable bounding volume (or an n-dimensional bounding region, in general) may be suitable. The ray 502 has a start point 510 and endpoint 512, defined by the minimum culling distance 510, $t_{min}$, and the maximum culling distance, $t_{max}$, respectively. In figures 5a and 5b, and generally in all figures illustrates bounding regions/volumes, and contained regions/volumes, the regions/volumes may be expanded and/or reduced for illustrative clarity compared to a practical implementation.

The object 500 is a closed object. For the purposes of this disclosure, a 'closed' object may be considered an object that has no 'gaps' in the surface defining its extremities, such that an unbounded ray interacting with a closed object is guaranteed to intersect with the object an even number of times (e.g., for a closed sphere, once on 'entering' the object and once on 'exiting' the object - grazing/tangential "intersections" are discounted). To take another example, a ray and a closed 3D torus would be guaranteed to intersect either zero times, twice, or four times. It should be appreciated that the 'closed' property of an object is independent of the visual attributes of that object (with the exception, for example, of 'alpha tested' geometry). For example, a closed object need not be considered 'opaque' by the ray tracing system. For example, a closed object may be opaque, translucent, transparent, or have any other attribute that informs the rendered appearance of the object. Embodiments of the present method are generally applicable to all closed objects irrespective of the object's visual or attributes.

The object 500 in figures 5a and 5b is also defined with a 'contained region' 514. The contained region is wholly contained within the external surface of the object and is thus smaller than the object 500. The contained region in figure 5b is axis-aligned, though this is not a requirement. For example, the contained region could be an oriented bounding box (OBB), meaning that its axes are oriented in the 'instance space' coordinate system used to define the object. This is in contrast to an axis-aligned bounding box (AABB), which is aligned with the axes defining the coordinate system of the 'world space' that defines the scene. In practice, it would be preferable for the contained region and the bounding volume to be defined using the same axis system. Furthermore, the contained region, or contained volume for a 3D scene, may be any suitable shape, e.g., a cuboid, sphere, prism etc provided that is relatively inexpensive to test against a ray. The advantage of placing a contained region in a closed object is that, if it can be established that i) the ray intersects with the bounding region bounding the object and ii) the ray intersects the contained region that is wholly contained within the object, it can be inferred with certainty that the ray intersects with the object. Consequently, the existence of an intersection with an object can be determined based on only two box intersection tests. The first test is between the ray and the bounding region (e.g., an AABB), and the second test is between the ray and the contained region (which may also be an axis-aligned box). Consequently, the existence of an intersection may be determined without the need to traverse down to a leaf node, thus without performing ray-primitive intersection tests with any of the primitives of the corresponding sub-tree. In the case of shadow rays, determining the existence of an intersection with a contained region may entirely avoid the need to perform an intersection test between a ray and a primitive. Furthermore, this means that the existence of an intersection with an object may be determined using only box testing units 112 (BTUs), and without employing triangle testing units 114 (TTUs), which tend not to be as computationally efficient as BTUs 112.

For an intersection ray, when the existence of an intersection with an object is determined, the maximum valid distance of the ray, $t_{max}$, is reduced by the greatest distance possible that still preserves the integrity of the rendering process (i.e., maintains watertight or non-redundantly watertight properties of the rendering algorithm). For a typical rendering process, when an intersection with a primitive is detected, $t_{max}$ is reduced to be equal to that point of the intersection. In embodiments of the present method, this exact intersection point is not (initially) determined. Therefore, different criteria are generally applied to determine how far to reduce $t_{max}$. Generally, the value to which $t_{max}$ is reduced is no greater than the distance between the endpoint of the ray (i.e., the current value of $t_{max}$) and a point of intersection with the contained region. Specifically, the new, reduced, value of $t_{max}$ may be set such that the new value is no closer to the start point of the ray than the closest point of intersection with the contained region.

In figure 5, it can be seen that the ray 502 intersects the bounding box 504 at points 506 and 508 (corresponding to the entry and exit points of the ray, based on the ray direction). The ray also can also be seen to intersect with the contained region at points 516 and 518. Given that the start point of the ray lies outside the bounding region 504, there is no need to determine whether the start point of the ray lies outside the contained region (because, by inference, it must do). However, for completeness, it is noted that the ray intersects with the contained region an even number of times, i.e., at points 516 and 518. Due to the fact that the ray 502 starts outside the bounding region 504, and intersects with the contained region 514, it can be determined that the ray intersects the object 500. This is because it can be inferred, with certainty, that the intersection point between the object 500 and the ray 502 occurs at some point between the first intersection with the bounding region 506, and the first intersection with the contained region 516. This inference is possible because the object is closed, the contained region is fully within the closed object, and the bounding region is fully outside the closed object.

The objective is therefore to reduce $t_{max}$ by the largest conservative amount given the supplied regions. The motivation for reducing $t_{max}$ as far as (conservatively) allows, is to reduce the possibility that the ray 502 will be needlessly tested against more distant, occluded, objects; it can additionally, reduce the amount of testing of geometry/boxes within the subtree corresponding to AABB 504 / object 500. It cannot be determined, without further intersection tests, where exactly the intersection point with the object is. Therefore, $t_{max}$ can be reduced, at most, to the intersection point 516, between the ray and the contained region, that is closest to the start point of the ray (i.e., the first intersection point 516 with the contained region). Consequently, $t_{max}$ can be updated to an 'updated maximum culling distance' 520, denoted by the triangle in figures 5a and 5b.

In some embodiments which are described in detail below, it is determined whether the ray starts within the bounding region and/or the contained region.. In this regard, if a ray starts within the boundary defined by a closed region, the ray will necessarily intersect with the contained (convex) region an odd number of times. There are various different ways to determine whether the start point of the ray, defined by $t_{min}$ begins inside a contained region. For example. For example, in the case where the region is a box, (no more than) six comparison tests can be performed in respect of the six planes defining the box (e.g., Xmin <= X <= Xmax, and likewise for the Y and Z dimensions) to determine an intersection, which involves determining if a portion the infinite ray is contained within the box. The portion of the ray within the box, i.e., defined by $[t_{enterbox}, t_{exitbox}]$, can then be compared to determine whether the start point lies within that portion, i.e.: $t_{enterbox} \leq t_{min} \leq t_{exitbox}$. In another example, $t_{min}$ can be multiplied by the ray direction and the result added to the ray origin to find the 3D location of the start point of the ray, and that can be compared to the contained region's bounds.

Although the contained region can be any suitable shape or dimension, it can be particularly advantageous for the contained region to be a box that is axis-aligned, which in this disclosure is denoted as an axis-aligned contained box (AACB). This is because BTUs work especially efficiently for axis-aligned geometries. Moreover, if the contained regions are axis-aligned, then the existing hardware of the BTUs can be exploited to perform tests against the contained boxes. In this regard, since BTUs may be used in embodiments to perform fast and computationally efficient intersection tests with axis-aligned bounding boxes (AABBs), embodiments that utilise the contained regions disclosed herein may use exactly the same, or very similar, hardware to also perform intersection tests on AACBs. In this way, embodiments of the present method significantly speed up the traversal of a BVH with effectively no additional hardware cost.

In other examples, the bounding region may be non-axis aligned, e.g. an oriented bounding box, (OBB), or of more general parallelopipeds or convex polytopes formed from the intersections of planar half-spaces. It would be advantageous for the contained region to be based on the same orientations. Other embodiments may allow the contained region to be a sphere or even a cylinder. In some examples, an OBB can still be efficiently tested: i.e., when an OBB is used in some examples, the ray may be transformed into a different coordinate space such that the OBB can then be handled as an AABB. Therefore, in some examples OBBs may also be able to exploit the efficiencies of BTUs that perform fastest when testing axis-aligned volumes.

The contained region may be pre-determined for each given object in a scene or may be produced by a graphics engine or other part of the ray tracing system. The construction will depend on the type of object. For example, for objects of fixed dimension (i.e., where the geometry defining the object remains the same), the contained region may be pre-defined, e.g., by the designer or algorithm/API that constructed the object. Thus, the geometry of the object may be associated with a contained region (or multiple contained regions) that is bespoke for that object. Therefore, during ray tracing, the geometry of the contained region may be transferred to a ray tracing unit 102 as part of the 'geometry data' indicated in figure 1. In other examples, the contained region may be dynamically generated once the acceleration structure/BVH has been constructed for a set of objects in a scene.

Any suitable algorithm for producing a contained region within a closed object may be employed. For example, in one method, the average centre point of an object may be determined, and a contained region is produced by expanding a region or volume around that centre point until the region occupies as much space as possible within the region defined by the relevant geometry of the object (e.g., external surface for a closed object). Algorithms such as 'flood fill' may also be used. Procedural generation and/or modification of contained regions may also be applied for contained regions contained within objects whose shape changes, e.g., moving objects. Generally, it should be appreciated that the 'procedural' construction of the contained region is performed 'offline', i.e., generally not during the real-time rendering of a scene.

In general, an objective for constructing a contained region is that the contained region occupies a maximum amount of the internal region of an object, without intersecting/overlapping with the object. This ensures that the probability of a ray interacting with the contained region is as high as possible. The contained region 514 inside the object 500 of figures 5a and 5b is merely illustrative of the concept of a contained region, and thus does not maximally occupy the internal space inside the object. It should nevertheless be appreciated that the contained region should be constructed conservatively, i.e., preferably such that it is designed to entirely avoid the possibility of a 'false positive' hit. Bounding regions such as AABBs are also generally constructed to be conservatively larger than they need to be for the same reason. Thus, contained regions are preferably constructed to be conservatively smaller than the extremities of the object within which they are contained. For example, the dimensions of a contained region may be deliberately reduced by a small value e.g., by a small absolute value such as the 'unit in the last place' (ULP), or a multiple thereof. The result of this conservative construction is that a ray will not be found to falsely intersect a contained region, which would have the undesirable consequence of implying that a ray intersects with an object when, in reality, it does not.

During traversal of a BVH, a rule or heuristic may be used to determine how and when the intersection testing unit should test a ray (or packet of rays) against a contained region. Generally, only nodes associated with a bounding region that contains an entire object (rather than a portion of that object) will be associated with a contained region. This is because, preferably, contained regions should be placed only in closed objects. Thus, the method of traversing a BVH may involve testing a ray against a contained region associated with a node in response to determining a hit with the bounding region of that node. For example, nodes associated with objects that contain a contained region may possess a flag that indicates that the ray should be tested against the contained region immediately following a 'hit' with the bounding region. After testing the contained region, if a hit is found, a (conservative) updated $t_{max}$ value may be calculated.

Furthermore, the method of traversing a BVH may involve postponing the testing of child nodes beyond a particular hierarchy level before all the nodes at that particular level have been tested. This may be especially beneficial for parallel traversal methods. For example, nodes 402a, 402b, and 402c may be 'queued' for intersecting testing in a parallelised traversal environment. In this case, testing of any child nodes stemming from nodes 402a, 402b, and 402c may be paused. In this way, the BTUs would test all bounding regions and, following a hit, would test the contained regions associated with these nodes. Following this, a comparison between the potential updated $t_{max}$ values may be performed to find the potential $t_{max}$ value that is closest to the start of the ray. The current $t_{max}$ value could then be updated to the $t_{max}$ value that is closest to the start of the ray. Subsequently, the other nodes need not be traversed any further, because it can be inferred that the objects they contain are occluded for that ray. Alternatively, each of nodes 402a, 402b, and 402c may be tested concurrently, and the value of $t_{max}$ may be updated as testing proceeds each time a value of $t_{max}$ is found that is closer to the start of the ray. Generally, though, it is advantageous to hold off the testing of child nodes until an updated value of $t_{max}$ has been determined that is least far along the ray, such that unnecessary testing of (occluded) nodes can be avoided altogether.

Shadow Rays

Shadow rays are used to render realistic shadow effects based on the simulated intersections between light sources and objects in the scene. Therefore, as mentioned above, the processing of a shadow ray involves using an 'any hit' exit condition to determine whether at least one object lies in the path of the shadow ray. Further, as mentioned above, for the sake of brevity all rays associated with an 'any-hit' exit condition (wherein an 'any-hit' test is used for visibility tests between two points), including rays used to test other visibility aspects such as ambient occlusion, may be referred to as shadow rays in this specification. Shadow rays are cast from points of visible surfaces in a scene towards the light sources of the scene. If the ray reaches the light, the point of the surface may be lit by a shader. Consequently, the processing of a shadow ray may be terminated immediately after the existence of an intersection with an object is determined.

The processing of shadow rays in embodiments of the present method is less complex than the processing of standard rays. Moreover, the advantages of processing shadow rays according to the presently-disclosed methods can, in some embodiments, be greater and more widely applicable than the advantages found with intersection rays. Since only the existence of an intersection needs to be determined for a shadow ray, the exact position of an intersection point between a shadow ray and a bounding or contained volume need not be calculated. Consequently, for a shadow ray projected from a point on a surface towards a light source, it need only be determined whether an intersection with any object exists (hence the use of the 'any-hit' exit condition with shadow rays), provided that intersection is known to lie between the light and surface being shaded. The result of the shadow ray processing will affect the shading that is applied to the point on the surface from which the shadow ray was projected. If at least one intersection does exist, the processing of the ray can be immediately terminated. Therefore, the position of $t_{max}$ need not be updated when processing a shadow ray, and the exact nature of the intersection is of lesser importance. Similarly to intersection rays, the intersection may be found based on only two intersection tests with a region/box, thus obviating the need to traverse down the BVH and find an intersection with a leaf node.

Turning back to figure 5a and 5b, the situation would be simplified if the ray being processed were a shadow ray. For shadow rays, an intersection testing method would first need to determine that at least one intersection exists between the ray and at least one point within at least one contained region. Consequently, after having determined that the ray 502 intersects the bounding region 504, once it is determined that the ray 502 intersects the contained region at either point 516 OR intersection point 518 (whichever happens to be determined first), processing of the (shadow) ray may be terminated. Thus, there would be no need to update $t_{max}$.

When shadow rays are processed, the way in which the traversal of a shadow ray through a BVH is handled can confer special advantages. Similarly to intersection rays, it can be advantageous to postpone the testing of child nodes stemming from nodes which are associated with object-bounding regions (in case objects in the child nodes turn out to be occluded by other objects in the scene).. Thus, preferably, the testing of nodes (such as 402a, 402b, 402c) which are associated with their own contained region are prioritized, as the determination of an intersection with a contained region can allow the early termination of processing of the shadow ray. Consider, for example, that figure 3 illustrates a shadow ray which is being projected towards a light source. Since the determination of an existing intersection with any of these objects 308A, 308B, 308C would result in the termination of the ray's processing, it is beneficial to test the ray against contained regions (not shown) within these objects prior to traversing down any of the child nodes. In this way, a large number of intersection tests with bounding regions are likely to be avoided.

In contrast to intersection rays, even for traversal methods which proceed in a serial manner (e.g., most software-based ray tracing implementations), the use of contained regions in objects can confer significant advantages. For example, consider an object defined in a high level of detail (LOD), i.e., a closed object whose surface is constructed of a large number of primitives. This may be the case for complex objects, or for objects that appear close to the viewpoint in a scene. For example, the frequently used 3D testing model 'Stanford dragon' is constructed of 1,132,830 primitives. Since large numbers of primitives would require a 'deep' BVH comprising many child nodes (for example, about 20 levels of nodes for a binary tree), it would typically require a large number of intersection tests to determine the existence of an intersection with such an object. This is because, typically, a shadow ray would have to traverse fully down the depth of a BVH, and moreover find a successful hit with a leaf node to determine an intersection (and thereby terminate the processing of the ray). However, if one or more contained regions are inserted into such an object containing a large number of primitives, before considering traversing the depth of the BVH, the ray can simply be tested against each of the contained regions until at least one intersection is found. Once this intersection with a contained region is found, it can safely be inferred that the ray would intersect the object. Thus, the processing of a shadow ray with a complicated object may frequently be terminated far earlier than would otherwise be possible. Beneficially, there is the potential to avoid a significant number of intersection tests that would otherwise be carried out with the many child nodes in the BVH of a detailed object.

Examples: Intersection rays

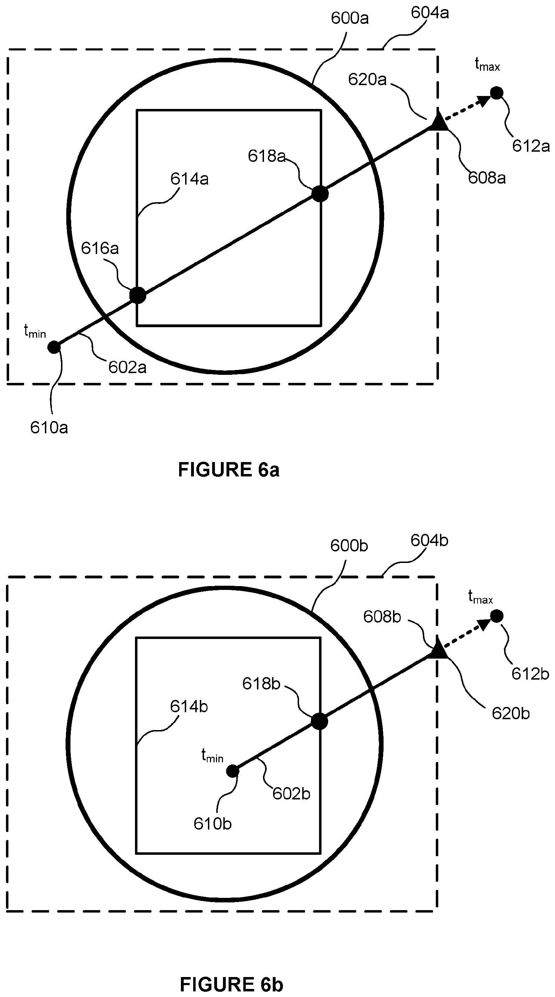

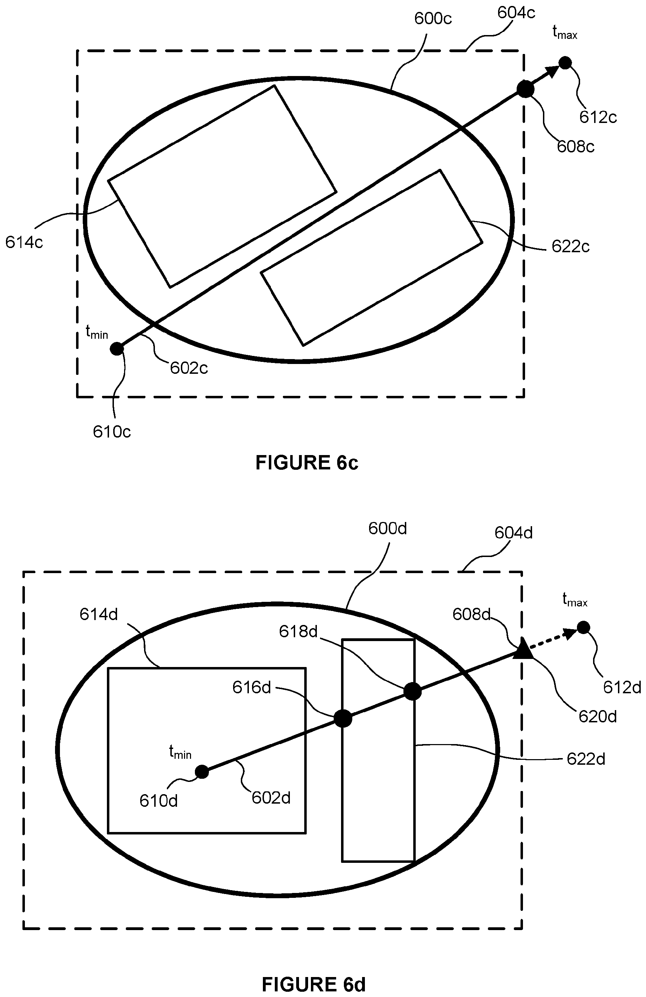

Figures 6a, 6b, 6c, and 6d illustrate four examples of the behaviour of an intersection ray with an object having one or more contained regions. The way in which an intersection ray is processed usually depends on the following factors: (a) whether the start point of the ray (defined by the minimum culling distance of the ray, $t_{min}$), is contained within the bounding region, and (b) how many contained regions the ray intersects. Not all combinations of these factors are shown in the present figures. However, the ways in which $t_{max}$ can be updated for an intersection ray are illustrated in figures 6a, 6b, 6c, and 6d. For the purposes of the following explanation, and the present disclosure in general, the following terminology is used:

- start of the ray' or 'start point' is the point defined by the minimum culling distance (alternatively called the minimum valid distance) of the ray, $t_{min}$;
- 'end of the ray' of 'ray endpoint' is the point defined by the maximum culling distance (alternatively called the minimum valid distance) of the ray, $t_{max}$;
- 'origin' or 'origin of the ray' refers to the point along the ray corresponding to a 't' value of zero. For example, the origin of the ray is indicated in figures 2a and 2b. The origin of the ray is not necessarily the same point as the start point (i.e., $t_{min}$) of the ray. Furthermore, the origin of the ray is not necessarily the same as (and is often different than) the origin of the coordinate system;
- 'closest intersection point' refers to an intersection point that is least far along a direction of the ray (and, thus, not necessarily the closest intersection point to the origin of the ray). Alternatively, this also refers to the intersection point that is closest to a start point of the ray. It will be understood that the closest intersection point should also be between $t_{min}$ and $t_{max}$.
- 'furthest intersection point' refers to an intersection point that is furthest along a direction of the ray (thus, not necessarily the furthest from the origin of the ray). Alternatively, the furthest intersection point' can refer to the intersection point that is furthest from the start point of the ray.

Figure 6a illustrates a ray 602a interacting with a bounding region 604a, a closed object 600a, and a contained region 614a. The ray 602a is defined by a minimum valid distance 610a and a maximum valid distance 612a. In this example, the start of the ray is contained within the bounding region 604a, and thus intersects it only once. This can be determined straightforwardly, e.g., where the bounding region is an AABB, six simple comparisons can be performed between the x, y, and z coordinates of the position of $t_{min}$, and the respective $x_{min}$, $x_{max}$, $y_{min}$, $y_{max}$, $z_{min}$, and $z_{max}$ positions defining the faces of the AABB. However, it is not straightforward to precisely determine where the start point of the ray is relative to the object 600a, meaning that an intersection with the object cannot be inferred in the same way as for figures 5a and 5b. Here, the ray intersects the contained region at points 616a and 618a, though it is not possible to infer where exactly the intersection with the object will lie from this. Therefore, the test for determining whether $t_{max}$ can be safely updated involves determining only whether the ray intersects with the contained region. If the conditions above are met, $t_{max}$ can be updated to the exit point of the bounding region 608a, i.e., as shown with triangular point 620a. In the case shown, the original position of $t_{max}$ 612a is further along the ray than the updated point 608a, so the updated $t_{max}$ clearly results in a reduction.

It should be appreciated that in general, regarding intersection rays in the present disclosure, the proposed updated position of $t_{max}$ may not in all cases be less far along a direction of the ray that the original position of $t_{max}$. Therefore, the following further test may be used to ensure that any update to the value of $t_{max}$ does, in fact, result in a reduction of the value of $t_{max}$: updated $t_{max}$ = MIN(current $t_{max}$, proposed updated $t_{max}$).

Figure 6b illustrates a scenario in which the start point 610b of the ray 602b is inside of the contained region, and results in the same outcome as Figure 6a. Here, it can be seen that the start point 610b of the ray 602b is contained within the contained region 614b within object 600b. Since the start of the ray is inside of the contained region, as with figure 6a it cannot be inferred that an intersection with the object 600b exists that is less far along the ray than the contained region. However, it can be inferred that the ray intersects the object somewhere within the bounding region 604b. Consequently, the position of $t_{max}$ can be conservatively updated, i.e. as shown with triangular point 620b, to the furthest intersection point 608b with the bounding region (i.e., the exit intersection point with the bounding region). This update to $t_{max}$ may still confer advantages for 'pruning' the branches of a BVH and thus reduces the likelihood of performing unnecessary intersection tests. For example, if $t_{max}$ for the ray 302 in figure 3 were updated to the furthest intersection point with bounding region 3008A (bounding object 308A), traversal of the nodes 402b, 402c associated with the more distant objects 308B, 308C would be less likely.

Figure 6c shows a different scenario in which an object 600c contains more than one contained region 614c, 622c. The start point 610c of the ray 602c is indicated as starting within the bounding region 604c. However, for the purposes of this example, the outcome for updating $t_{max}$ would be the same even if the start point of the ray were outside the bounding region 604c, or inside the object itself. It can be seen that the ray misses both of the contained regions. Consequently, it cannot be immediately inferred that the ray intersects the object 600c based on these intersection tests. This means that $t_{max}$ cannot be updated early in this case. Therefore, for this example, traversal of the ray down the BVH associated with the object 600c would need to progress until an intersection is found between the ray and a leaf node of the BVH, i.e., an intersection with a primitive of the object 600c. Only at this point could $t_{max}$ be safely updated (i.e., to the point of intersection with the leaf node).

Figure 6d shows a further example of an object containing two contained regions 614d, 622d. Here, the ray 602d has a start point 610d that begins inside the first contained region 614d and intersects the second contained region 622d twice (at points 616d and 618d). Where there are multiple contained regions, the procedure for updating $t_{max}$ involves testing the ray against up to all contained regions in the object 600d until the ray is detected to intersect at least one of the contained volumes or it is determined that it has missed all. If at least one contained region has been intersected, then the $t_{max}$ may be updated, i.e. as shown with triangular point 620d, to the exit point of the bounding region 608d, in the same manner as for figure 6b.

Figures 6a to 6d generally illustrate that the contained regions are used as mechanisms to infer whether an intersection exists between a ray and an object. Consequently, based on the position and nature of the intersection with the contained region, $t_{max}$ may be reduced to a point where it can be guaranteed that the actual intersection with the object is no further along the direction of the ray than that point. To summarize the examples in figures 6a to 6d, they describe examples in which the endpoint, $t_{max}$, of the ray may in some cases be conservatively reduced even when the start point, $t_{min}$, of the ray lies within the contained region and/or the bounding region. In these cases, the updated endpoint, $t_{max}$, of the ray cannot be set any less far along the direction of the ray than the exit intersection point of the bounding region..

The above-described methods for reducing $t_{max}$ apply in the same way to any closed objects, though the greatest advantages are obtained for closed objects that are convex or whose surface is substantially convex. This is because the advantage of the contained region is felt most strongly when there is a high probability that the contained region will be intersected by the ray. This probability will be larger when i) the object occupies as much of the internal space of the bounding volume as possible, and ii) when the projected 'silhouette' produced by the one or more contained regions occupy as much of the internal space of the object as possible. For this reason, it is often advantageous to place multiple contained regions within an object. These contained regions may overlap. To give an example, since the volume of a sphere with unit radius is $\frac{4}{3}\pi$ , and the volume of the largest cube that will fit inside that sphere is $\left(\frac{2}{\sqrt{3}}\right)^3$ , the proportion of the sphere's volume occupied by the cube is only 36.8 %. However, this proportion could be increased by filling the sphere with a plurality of smaller cubes (or volumes of another appropriate shape) which pack together to occupy the portion of the internal volume of the sphere that a single cube cannot. It should be appreciated that 'pack' here also includes allowing the contained volumes to overlap with one another. Taking this example further, if a plurality of small contained regions/boxes are packed inside an object, provided that an outer 'shell' formed by the contained regions (which potentially overlap one another) has no gaps/holes, there would be no need to fill/pack the entirety of the object with contained regions. This is because, provided that a 'shell' formed by a plurality of (potentially overlapping) contained regions has no gaps, it would be impossible for a ray to reach pass through the shell without hitting at least one of the shell-forming contained regions. In other words, packing additional contained regions inside this 'shell' of contained regions would be superfluous.

Examples: Intersection rays with concave objects

It will also be appreciated that the preceding figures all show examples with closed objects that are entirely convex. It should be appreciated that the concepts illustrated by the preceding figures nevertheless apply generally to all closed objects, including closed objects that are mostly or partially convex, e.g., the 'Stanford bunny' example. Nevertheless, even for objects with significant portions that are not convex and thus have concave regions that are not 'closed', such as a vase or a mug, contained regions can still be utilised in a modified manner to traverse a BVH efficiently. For closed objects, the contained regions are contained wholly within the external surface of the closed object. For a vase, it may not speed up traversal of the BVH to incorporate a contained region within a thin wall of the vase, since this occupies very little space and would likely not speed up the ray tracing. However, the internal volume/cavity of a vase still occupies a substantial amount of space. It should be appreciated that rays could easily be occluded by a vase, despite the fact that it has an opening and a cavity. Therefore, if it can be determined that a ray intersects an object with a large cavity such as a vase, with some extensions to the methods described, it can still be inferred for certain rays that more distant objects will be occluded by the vase such that $t_{max}$ can be safely reduced.

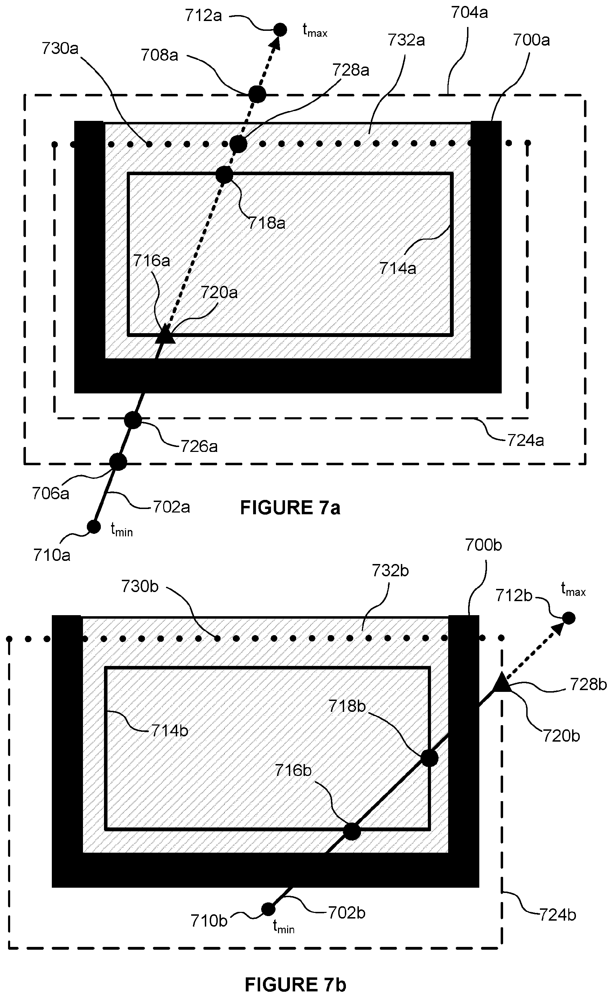

Figure 7a shows a modified use of a contained region 714a for use with an object. In this case, the object 700a comprises an open cavity, and the 2D figure is intended to be representative of a 3D mug or vase. The object is bounded by a bounding region 704a defined in the 'standard' way, i.e., such that it contains the entirety of the object. Additionally, within the standard bounding region 704a is a further bounding region referred to as a partial bounding region 724a. The partial bounding region 724a is constructed to contain all portions of the object 700a defining the open cavity, i.e., the concave portion of the object (including both external and internal walls). The partial bounding region is also constructed to exclude portions of the object defining an 'opening' of the cavity: in this case, the lip of the vase-like object 700a. Due to the fact that the partial bounding region is specifically intended to exclude 'open' portions of the object, the surface that provides this exclusion function is treated differently to other surfaces of the region, and is referred to as an 'exception surface' 730a. It should be appreciated once again that the bounding region 704a, contained region 714a, and partial bounding region 724a are intended to also represent 3D objects, i.e., boxes. In the case that the partial bounding region 724a is a 3D partial bounding box, or partial axis-aligned bounding box, five of the six faces of the partial bounding box 724a are 'standard' surfaces, and one face of the partial bounding box 724a represents the 'exception surface' 730a. In this specification, any reference to 'standard' surface means a surface of a partial bounding region that is not an exception surface.

It should be understood that all examples in the specification that are shown in 2D could equally relate to 3D examples, and vice versa. 2D examples are used primarily for illustrative clarity. References to 'surface' are used throughout the present disclosure, again, for consistency and clarity of terminology. However, references to 'surface' should not be interpreted as being restrictive to a 3D embodiment. For example, in 2D embodiments, as in figures 7a to 7d, the exception 'surface' would in fact be a line, i.e., an 'exception line'.

As mentioned above, it is desirable for the contained region, or contained regions, to be arranged (e.g., packed, or formed into a shell, as described above) such that they increase the probability that at least one contained region is hit by the ray. This thereby increases the efficiency of the traversal of the BVH. However, given that the object has an open cavity (i.e., a substantial concave portion), the contained region makes more efficient use of space if it is allowed to occupy this open cavity 732a, rather than being constrained to being constrained within the outside surfaces of the object (i.e. inside of the walls of the vase, in this example). Consequently, the contained region is constructed to be contained within the outside surfaces of the object. In figures 7a to 7d, the contained region is contained entirely within the concavity 732a of the objects merely for illustrative clarity. However, it should be appreciated that the contained region 714a-d may overlap with the inner wall of the object, so long as the contained region is i) contained within the outside surfaces of the object 700a-d, and ii) contained within the partial bounding region 724a-d. The cavity/concavity of the object may also be defined as the 'convex deficiency' of the object, which is the region of space that is formed in between the convex hull of the object and the external contours of the object. The convex deficiency 732a is shaded in figure 7a.

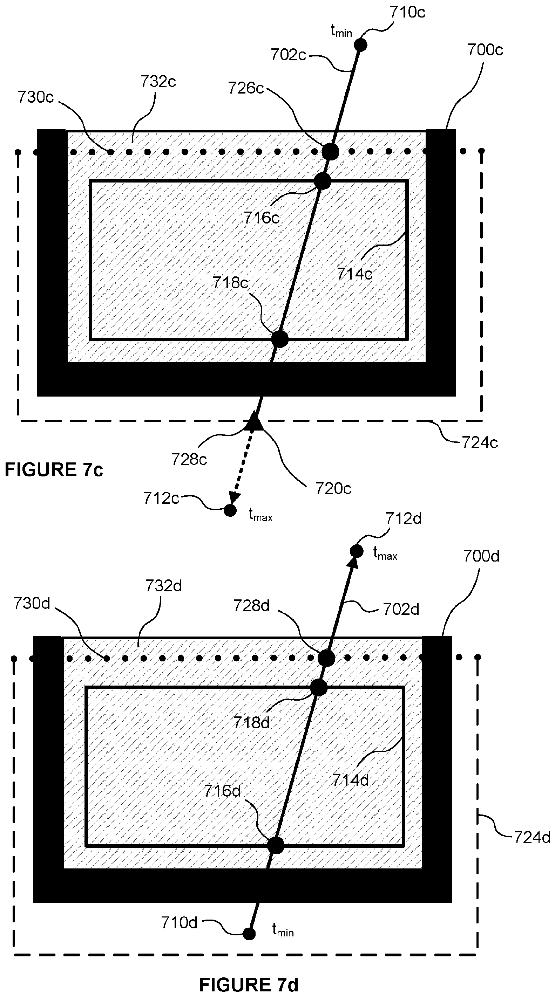

The ray 702a is defined in the standard way, i.e., having a start point, $t_{min}$, defining the minimum culling distance, and an endpoint, $t_{max}$, defining the maximum culling distance. A 'hit' with the standard bounding box 704a would also be determined in the standard way. Following this determination, it is determined whether the ray 702a intersects with the partial bounding region 724a. If the ray intersects the partial bounding region 724a, it is determined whether the ray intersects the contained volume 714a. In the standard 'closed object' scenario, $t_{max}$ could be safely updated to the closest intersection with the contained region. For the cavity object, since the object has an open face that is excluded by the 'exception surface' of the partial bounding region, at least one additional test is included to determine the type of surface on the partial bounding region with which the ray intersects. In general, the following factors are used to determine whether, or how, to update the $t_{max}$ of a ray (it is presumed in this case that the start point and end point of the ray lie outside of the partial bounding region (PBR) as in figures 7a and 7c):

1) If the ray does <u>not</u> hit a contained region then it cannot safely be determined whether the object is hit by the ray;

2) Else (i.e., the ray <u>does</u> hit at least one contained region) if the entry point on the PBR is a standard surface (regardless of the type of PBR surface at the exit point), $t_{max}$ may be adjusted to the minimum of i) the entry point of the contained region (e.g., 720a) and ii) the existing $t_{max}$;

3) Else, the entry point of the PBR must be via an exception surface (i.e., entry point 726c of figure 7c), and thus $t_{max}$ may be adjusted to the minimum of: the exit point of the PBR (e.g., 728c) and ii) the existing $t_{max}$.

Thus, in figure 7a, it is determined whether the closest intersection point between the ray 702a and the partial bounding region 724a lies on the exception surface 728a. In figure 7a, it can be seen that the closest intersection point 726a with the partial bounding region 724a is a 'standard' surface. It can also be seen that the ray intersects the contained region 714a. Therefore, it can be inferred that the ray passed through the object 704a by entering on an externally facing part of the object (i.e., a surface of the object that is not next to the main concavity 732a of the object). Consequently, the intersection point between the ray 702a and the object 700a must lie no further along the direction of the ray that the closest intersection point 716a with the contained region. This is illustrated in figure 7a by the solid portion of the ray 702a, which indicates the length of the ray that contains the intersection with the object. On this basis, $t_{max}$ can be conservatively updated, i.e. as shown with triangular point 720a, to the closest intersection point 716a with the contained region. For completeness, it is noted that, even if the start point 710a of the ray lay inside boundary of the standard bounding region 704a, the outcome would be the same in respect of updating $t_{max}$ because it is still outside of partial bounding region 724a

In figure 7b, the 'standard' bounding region is not shown for brevity, though its existence, and the existence of an intersection between the ray and the bounding region, are presumed. In figure 7b, the start point 710b of the ray lies inside the partial bounding region. Given this, it cannot easily be determined (i.e., without traversing further down the hierarchy) whether the start point of the ray lies before or after the external surface of the object 700b. However, it may be possible to conservatively determine that at least one intersection with the open object 700b exists. Specifically, if it can be determined that the ray intersects the contained region 714b, and that the start point of the ray lies outside the contained region, it may be possible to reduce $t_{max}$. In order to conservatively do this, it is determined what type of surface on the partial bounding region 724b the ray intersects with in order to infer whether the ray exited the object via the main concavity of the object. Thus, the other condition to be satisfied is whether the furthest intersection point 728b with the partial bounding region (or in this case, the only intersection point) lies on an exception surface. Since the ray does not intersect an exception surface, it can be inferred that an intersection with the object 700b must exist. Consequently, provided that it results in an overall reduction of $t_{max}$, $t_{max}$ can conservatively be updated, i.e. as shown with triangular point 720b, to the furthest intersection point 728b with the partial bounding region 724b. If the start point of the ray 710b lay outside the partial bounding region 724b in the figure 7b scenario, $t_{max}$ could be reduced even further (because, in that case, it would be possible to infer that the intersection with the object occurred no further along a direction of the ray than the closest intersection with the contained region).

Figure 7c illustrates an example where the ray 702c enters an open object 700c via the opening itself. Figure 7c therefore illustrates an example where the closest intersection point 726c between the ray 702c and the partial bounding region 724c is the exception surface 730c itself. First, it is determined whether the start point 710c of the ray 702c lies outside of the partial bounding region 724c. Here, the ray starts outside the partial bounding region 724c. Next, the method would determine whether the ray intersects the contained region 714c, which in this case it does. Finally, in order to determine how far $t_{max}$ may be reduced, it is determined whether and where the ray intersects the exception surface. In figure 7c, the closest intersection point with the partial bounding region 724c (i.e., closest to $t_{min}$) does lie on the exception surface. Thus, it can be inferred that the ray has entered the object through the main concavity, i.e., the opening of the vase-like object 700c. Consequently, the actual intersection point with the object can only be inferred to be somewhere in between the furthest intersection point 718c (i.e., the exit point) with the contained region 714c, and the furthest intersection point 728c (i.e., the exit point) with the partial bounding region 724c. Consequently, $t_{max}$ can conservatively

be updated, i.e. as shown with triangular point 720c, to the exit point 728c with the partial bounding region 724c.

Figure 7d illustrates an example where $t_{max}$ cannot be updated. Here, the start point 710d of the ray 702d lies within the partial bounding region 724d. This fact alone is not necessarily a barrier to reducing $t_{max}$, as demonstrated by the example in figure 7b. However, it can be determined for figure 7d that the furthest intersection point 728d with the partial bounding region 724d does lie on the exception surface 730d. Consequently, and despite the fact that the ray 702d intersects the contained region 714d and begins outside the contained region, no intersection with the object 702d can be safely inferred. This is because, as far as it can be determined without traversing the BVH to a leaf node, the ray may start within the cavity and exit via the opening without ever intersecting the object. Consequently, $t_{max}$ cannot be safely updated (yet), because it cannot be determined based purely on intersections with the partial bounding region and contained region whether the ray intersects the object 700d.

In summary of the behaviour of an intersection with objects containing open cavities, if the start point of the ray lies inside the partial bounding region (as in figures 7b and 7d), there is no possibility of (safely) updating $t_{max}$ to be equal to an intersection point with a contained region. However, depending on whether the ray intersects the exception surface, the value of $t_{max}$ may be updated to the furthest intersection point with the bounding region (as in figure 7b). If the start of the ray does lie outside the partial bounding region (as in figures 7a and 7c), and the ray intersects at least one contained region, it will be possible to (safely) reduce the value of $t_{max}$. However, unlike the 'standard' closed object scenarios, it may not always be possible (e.g., as in figure 7c) to conservatively reduce the value of $t_{max}$ to the closest intersection point with a contained region.

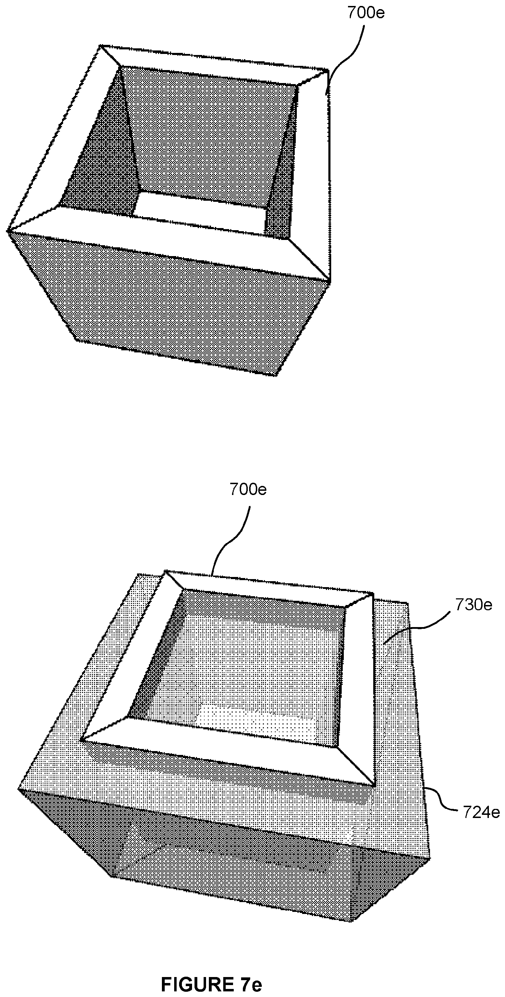

Figure 7e shows, merely for illustrative clarity, a 3D version of the object and contained region of figure 7a. Thus, figure 7e shows a 3D vase-like object 700e having walls with a finite thickness. Figure 7e also shows the 3D examples of a partial bounding region 700e, which is constructed to exclude the open face of the vase. Thus, the top surface of the partial bounding region 724e, which is intersected by the object 700e, is the exception surface 730e.

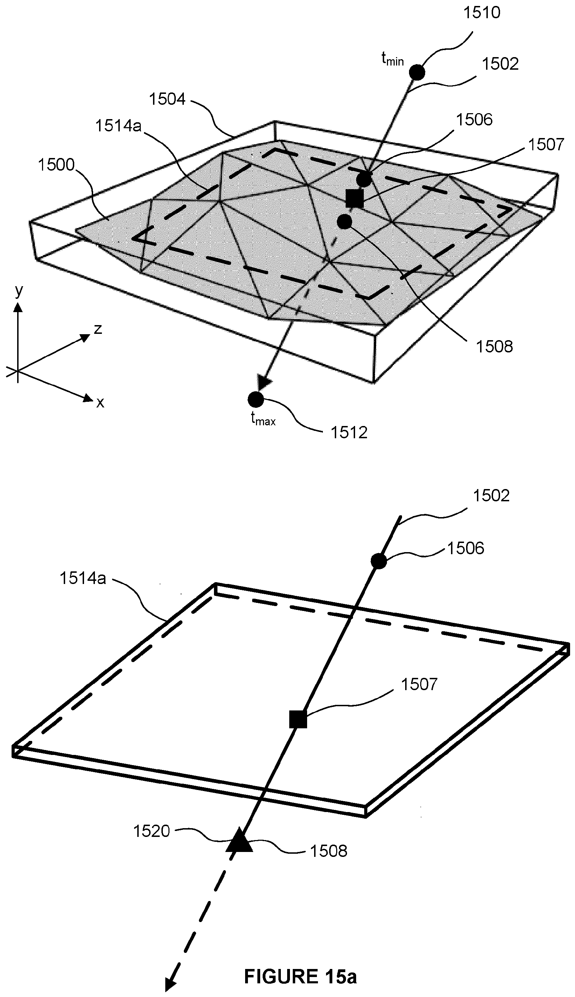

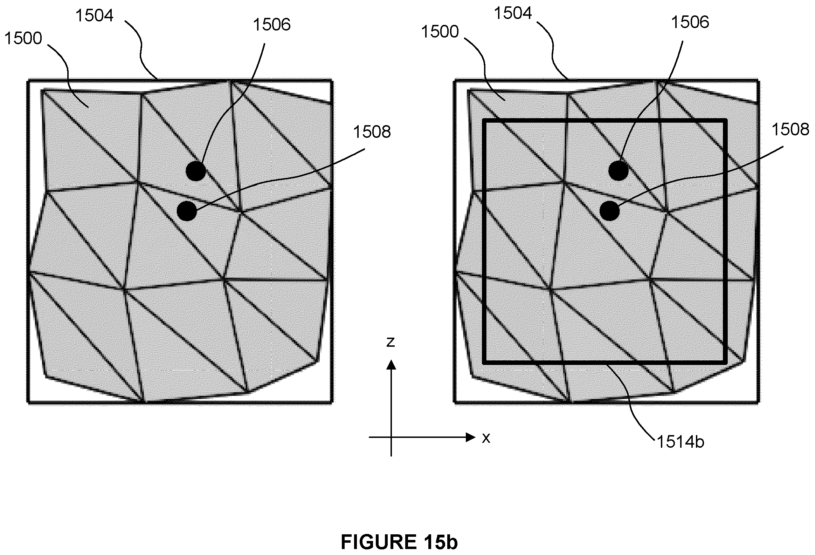

The examples in figures 7a to 7d represent an object having a cavity, which, in 3 dimensions, may represent a vase or other open vessel. However, the application of the contained region and the concave object may be applied more widely to other non-convex objects, and even to non-closed objects. For example, the contained region may be useful for rendering a wall (preferably having a contiguous surface) that has many recesses, or indeed any wall or flat 'mesh' that may comprise a large number of primitives that would be computationally intensive to ray trace down to the leaf nodes to determine the existence of an intersection. Consequently, traversal of a BVH associated with a complicated wall structure (especially for shadow rays) down to the leaf nodes can potentially be avoided. Such examples are described in more detail by figures 15a and 15b.

Examples: Shadow rays

As mentioned above, for a shadow ray projected from a point on a surface towards a light source, it is determined whether any intersections exist with at least one object in the path of the ray. In most cases, as long as the ray intersects a contained region within a closed object, the processing of the shadow ray can be terminated.

As an illustration of shadow ray behaviour, consider the scenarios of figures 6a, 6b, 6c, and 6d. For the purposes of the illustration, consider that the position $t_{max}$ in each example represents the position of a light source. In each of 6a, 6b, and 6d, the ray intersects at least once with a contained region. Consequently, other than the usual consideration that only the portion of the ray between $t_{min}$ and $t_{max}$ is considered for intersection, no other determinations or tests are needed in order to determine, with certainty, that an intersection exists with the object and that the processing of the ray can be terminated. For figure 6c, as with the intersection rays, since no intersection with a contained region exists, an intersection with the object cannot be inferred without further traversal of the BVH. However, in the example of figure 6c a better choice of contained regions could be made to improve the chances that the ray 602c could interact with at least one contained region and thus allow the shadow ray to be terminated.

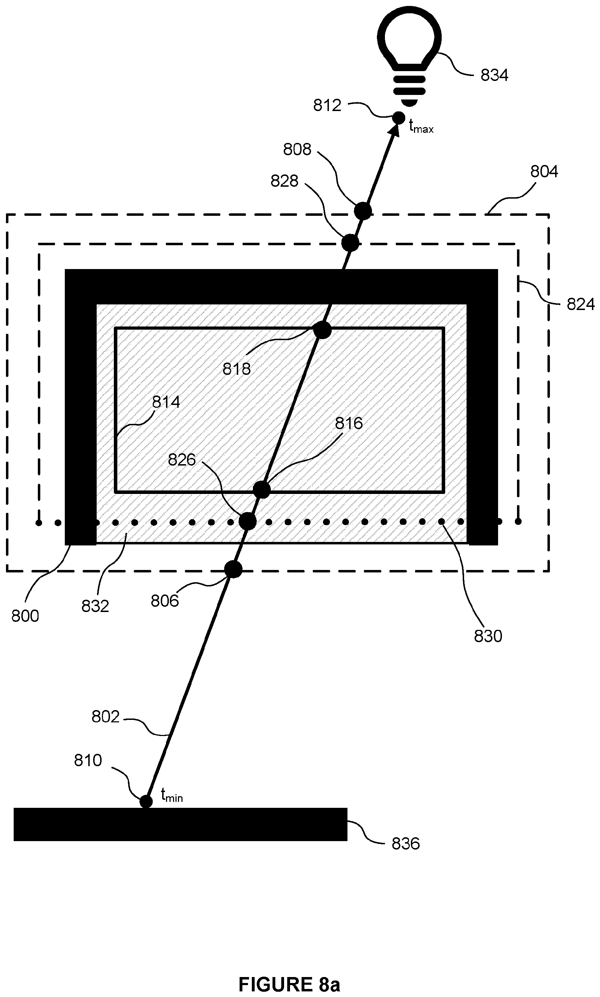

Figure 8a specifically illustrates the behaviour of a shadow ray 802 passing through a concave object 800 comprising an open cavity. In this example at least, the ray 802 is projected from a surface 836 towards a light source 834. In other ray-tracing schemes, traversing from the light source to a 'hit' may be performed; the direction of the traversal may be scene-dependent. Although the partial bounding region 824 and its exception surface are shown, in the specific case of figure 8a the surface-types of the partial bounding region are not needed to determine with certainty that the shadow ray can be terminated. In other cases, e.g., where multiple exception surfaces exist, or where the start or end of the ray lies inside the partial bounding region, the surfaces of the partial bounding region would be taken into account. Returning to figure 8a, the shadow ray can be terminated because it is possible to infer an intersection between a shadow ray and the concave object 800 based on determining i) that the ray intersects with the contained region 814, and ii) that the bounding box 804 and contained region lie within $t_{max}$ and $t_{min}$ of the ray. Since these conditions are met, an intersection with the object 800 can be inferred with certainty. This is because, in the case of figure 8a, it would not be possible for a ray to pass through both the 'standard' bounding region 804 and the contained region 814 (which in this case is contained within the cavity and convex deficiency 832) without also passing through the walls of the object 800. Consequently, if the start of the ray 810 is outside of the boundary of the bounding region 804, the partial bounding region need not be considered. Following this determination, the processing of the ray can be terminated.

In general, provided that the start of the ray and the endpoint of the ray (i.e., the light source) both lie outside the 'standard' bounding region, termination of shadow ray processing is agnostic to the orientation of an open object (i.e., an object having a cavity). In other words, for figure 8a, the shadow ray would be found to intersect the object 800 in all orientations (including if the object were 3-dimensional) provided that the ray 802 starts outside the bounding region 804 and intersects the contained region. This is in contrast to the processing of intersection rays where, even when the intersection ray starts outside the bounding region, updating the position of $t_{max}$ depends on which type of surface of the partial bounding region (i.e., whether or not the surface is an exception surface) the ray exits and/or enters. This difference arises because the processing of shadow rays is concerned only with the existence of an intersection; the position of the intersection for a shadow ray (i.e., whether the shadow ray intersects the object after or before intersecting the contained region) need not be determined. Since the existence of an intersection can always be determined, irrespective of the orientation of the open object (provided that the ray starts outside of the bounding region), the existence of an intersection with the object can be safely inferred.

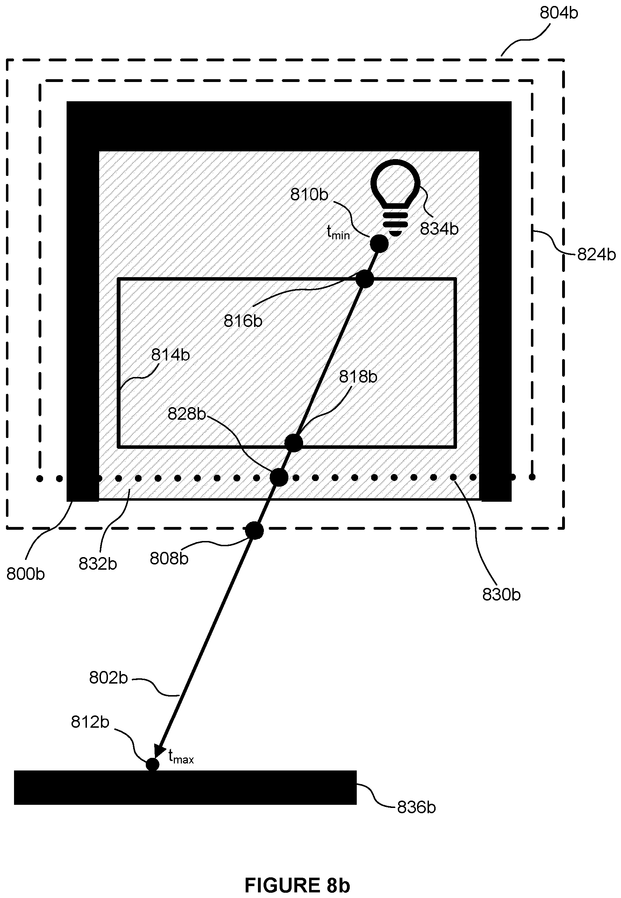

Figure 8b illustrates another example of the behaviour of a shadow ray 802b passing through a concave object 800b comprising an open cavity. In this example the light source 834b lies within the object cavity 832b and bounding regions. Therefore, in figure 8b, the surface type of the partial bounding region 824b (i.e., whether or not the surface is an exception surface) the ray exits and/or enters needs is considered for determining whether to terminate a shadow ray. In this example, the ray 802b is projected towards a surface 836b from a light source 834b. Thus, the light traverses in the opposite direction from figure 8a. Since the start point of the ray lies inside the partial bounding region 830b, it needs to be determined what type of surfaces the ray intersects. Since, in figure 8a, the ray only intersects (at 828b) 'exception surfaces' of the partial bounding region 824b, and thus does not intersect any 'standard' surfaces of the partial bounding region 824b, processing of the ray cannot be safely terminated. This is despite the fact that the ray intersects the contained region 814b at entry/exit points 816b and 818b.

On the other hand, if the ray 802b in figure 8b hypothetically intersected the contained region and intersected at least one 'standard' surface of the partial bounding region 824b, provided the intersections occurred within $t_{max}$ and $t_{min}$ of the ray, the shadow ray could be terminated. This is because it could be inferred, in this hypothetical case, based on the fact the shadow ray exits via a standard surface of partial bounding region 824b and intersected a contained region, that the ray must have intersected a wall of the concave object 800b. In general terms, intersection of a shadow ray with an object having a concavity can be determined on the basis that:

> 1) The shadow ray intersects at least one contained region, provided that the contained region is contained within i) the partial bounding region and ii) the cavity of the object.
> 2) The shadow ray intersects at least one 'standard' surface of the partial bounding region (i.e., the shadow ray may still enter or exit via an exception surface of the partial bounding region).
> 3) The intersections in steps 1) and 2) both occur within $t_{max}$ and $t_{min}$ of the shadow ray.

Examples: Non-closed objects

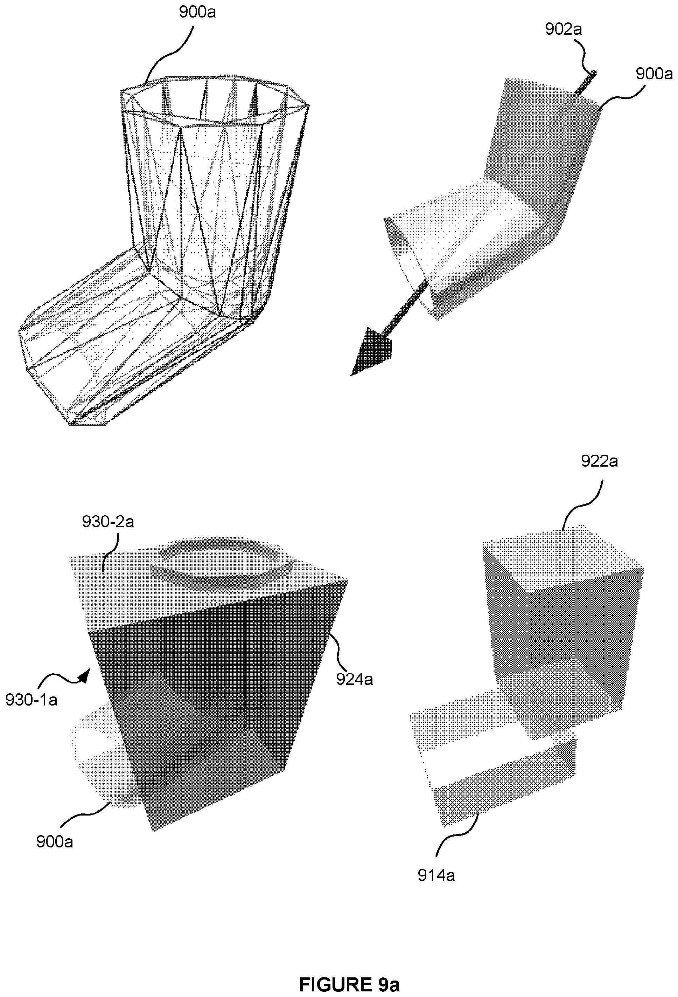

Figure 9a shows an example of a non-closed object that requires a specialised partial bounding region to deal with intersection tests involving contained regions. The object 900a shown in figure 9a is an angled or 'elbow' pipe, which has two openings. As indicated, there are (straight) rays, such as ray 902a, that can pass un-occluded thorough one opening and out the other. Additionally, figure 9a shows a partial bounding region 924a, which in this case is a box, and two contained regions 914a, 922a that are intended to lie within the externally-facing walls of the pipe, and also within the partial bounding region 924a. In this example the contained regions are volumes/boxes that are axis-aligned. As with the examples in figures 7a-e, the partial bounding region 924a does not contain portions of the object 900a defining openings or concavities. In this case, the elbow pipe has two openings, which are both excluded by the partial bounding region 924a as shown in the lower left drawing of figure 9a. Consequently, the two surfaces that exclude the openings of the elbow pipe are treated as exception surfaces 930-1a, 930-2a. The lower right drawing indicates the two contained regions 914a, 922a, which are axis-aligned boxes (not to scale). Although not indicated in figure 9a, the contained regions 914a, 922a are intended to lie wholly within the cavity (i.e., the interior) of the pipe 900a.

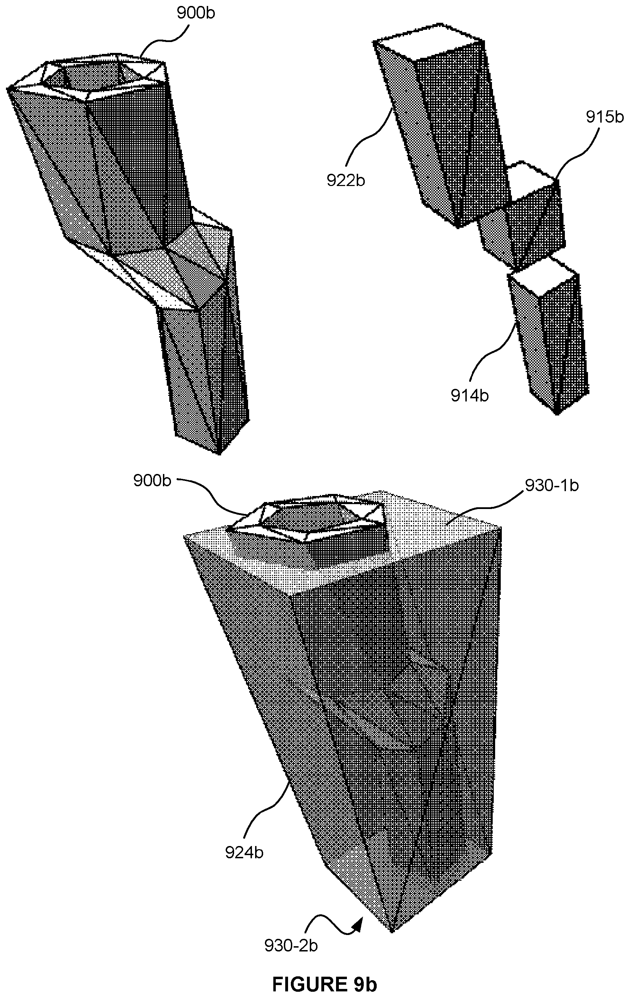

Figure 9b shows another example of a pipe 900b having a crook through its centre, and again having an opening at both ends. Again, there exist rays (not shown) that can pass un-occluded through one opening and out the other. Three contained regions 900b, 914b, 915b that could be used in conjunction with the crooked pipe are shown in the upper right drawing. As with other examples, the contained regions should be contained within the outward facing surfaces of the pipe and also contained within the partial bounding region. The contained regions 900b, 914b, 915b in this example are axis-aligned boxes. An example partial bounding region 924b for use with the crooked pipe is shown in the lower drawing. Since the pipe has two openings, the upper and lower faces of the bounding box 924b are treated as exception surfaces 930-1b, 930-2b. The upper exception surface 930-1b is shown. As before, these as exception surfaces 930-1b, 930-2b are used to exclude the openings of the pipe from the partial bounding region.

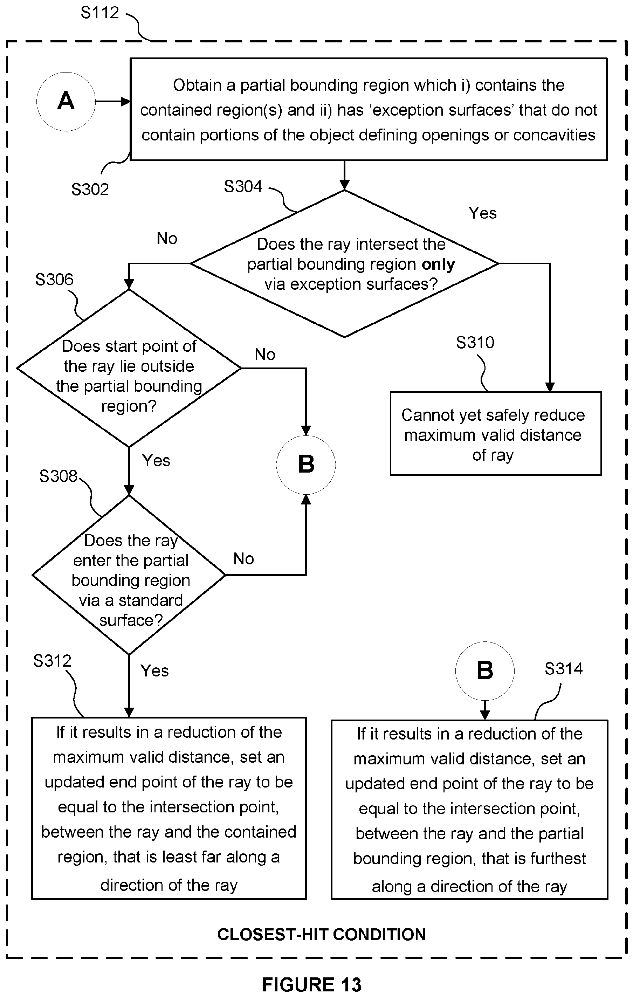

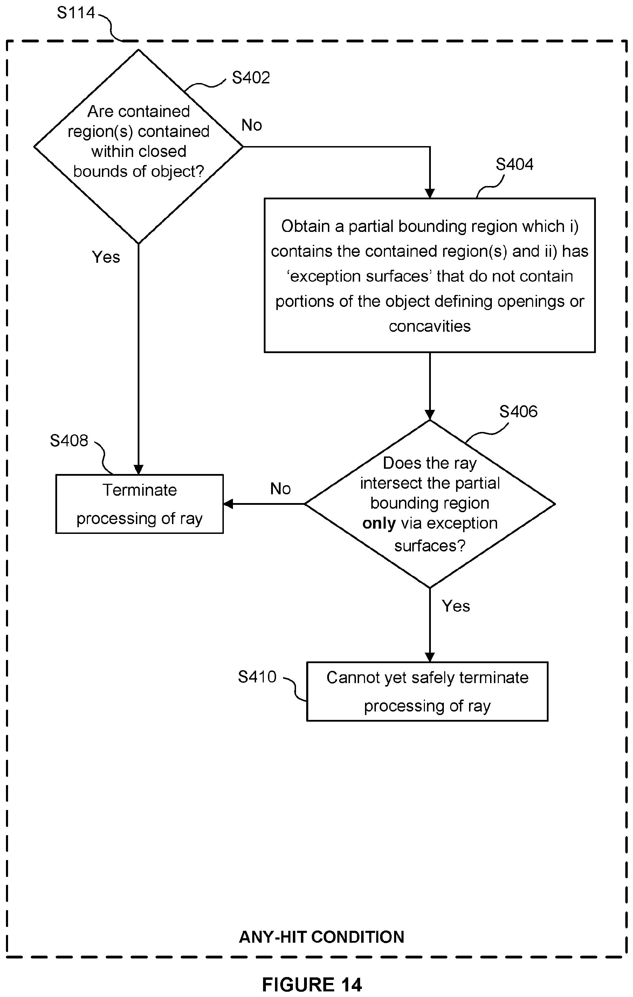

It should be apparent from figures 9a and 9b that, in order to infer an intersection between a ray and the pipe objects 900a, 900b the ray should intersect at least one 'standard' surface of the partial bounding region. In this disclosure, 'standard' surface is used to indicate a surface of a partial bounding region that is not an exception surface. In other words, an intersection ray that intersects with the partial bounding region only via exception surfaces cannot conservatively be deemed to intersect with the object. This should be apparent, because in the case of figure 9b, a ray that intersects with both of the exception surfaces may pass through the centre of the pipe and therefore not intersect the pipe 900b. Thus, figures 9a and 9b provide examples in which a ray cannot always have its maximum valid distance reduced (or, for a shadow ray, have its processing terminated) even if the ray intersects with two faces of a bounding region and one or more contained regions. The flowcharts in figures 13 and 14 show in detail how rays for all object types are dealt with and include embodiments of rays interacting with unusually-shaped objects such as the pipes in figures 9a and 9b.

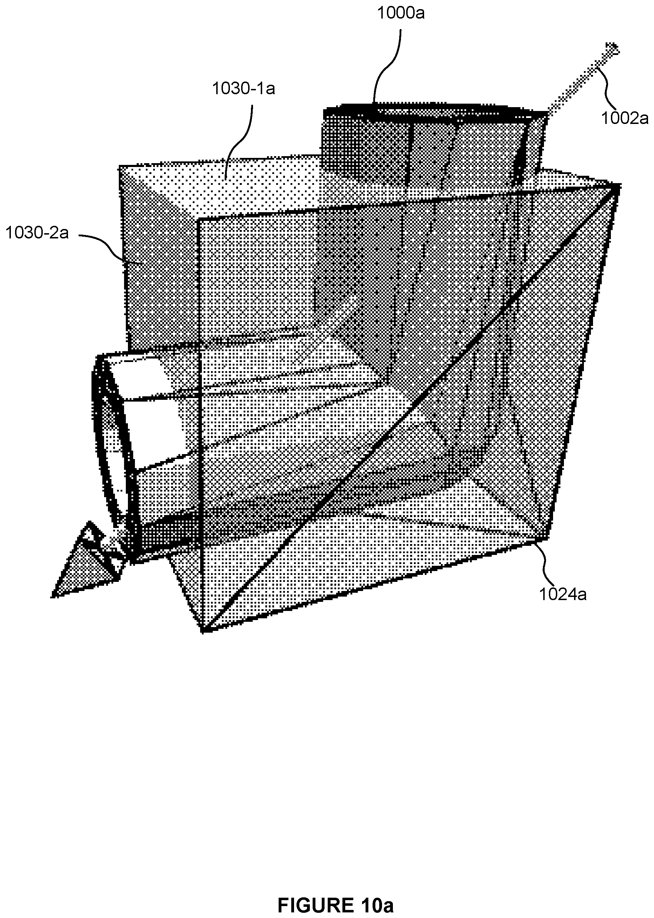

The examples of Figures 9a and 9b are 'safe' in that correct decisions will aways be made but, at times, they may be considered too conservative. Consider Figure 10a which is a variant of the shape shown in Figure 9a. Specifically, the elbow pipe 1000a in figure 10a has a 90 degree angled bend, which does not allow a ray to pass through the pipe un-occluded. In Figure 10a, which uses a similar arrangement of partial bounding regions and contained regions to that of Figure 9a, a ray 1002ais shown that passes through the top exception surface 1030-1a and the side exception 1030-2a surface of the partial bounding region 1024a and, though not shown explicitly, through two contained regions. Because the ray has entered and exited by exception surfaces 1030-1a, 1030-2a, we cannot immediately infer a hit with the elbow object 1000a even though the ray 1002a has intersected it multiple times. By performing more extensive analysis of the object, additional combinations of partial and contained boxes can be generated to reduce rendering costs.

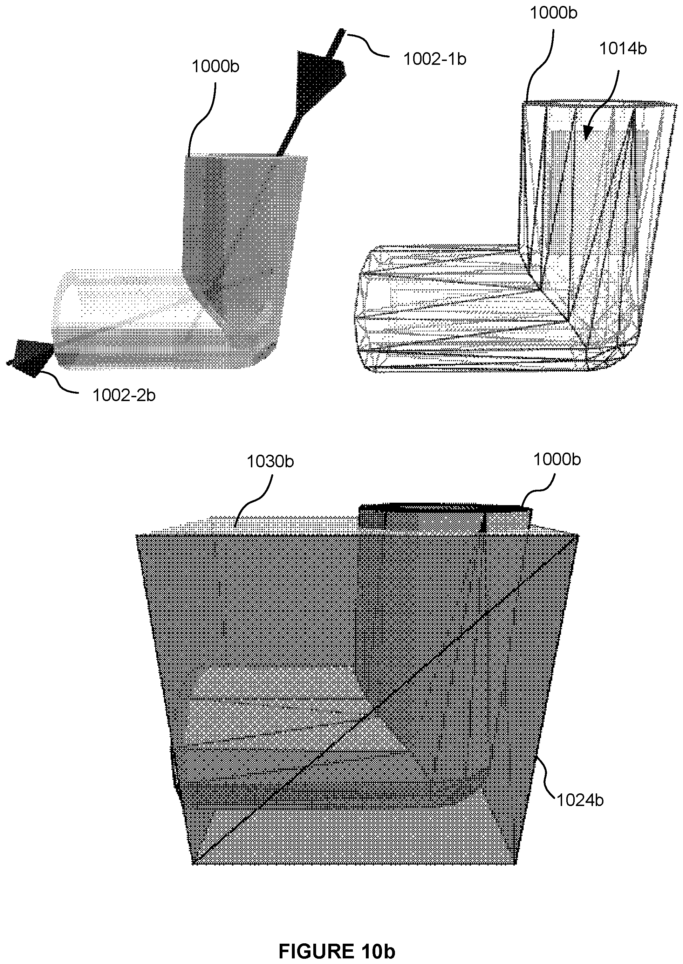

Figure 10b is a variant of the elbow pipe in figure 10a. In this example, because of the particular arrangement of the single contained region 1014b inside the elbow pipe 1000b, and because the pipe is angled such that it cannot allow a ray to pass through un-occluded, only one exception surface 1030b is needed. Consider the elbow pipe 1000b and any ray, such as ray 1002-1b entering (or 'exiting') purely through the top opening. Because rays are straight, with this given object 1000b it is impossible for such a ray 1002-1b not to intersect the object. Further, consider any ray 1002-2b entering through the left opening. There exists exactly one contained region 1014b inside the elbow which cannot be reached by any such ray 1002-2b entering from the left. A new combination of contained region 1014b, which cannot be intersected directly by any ray entering from the left opening, and a partial bounding region 1024b with only one exception surface 1030b at the top corresponding to the top opening, can be produced, as shown in the lower drawing. Such a combination will determine the existence of an intersection with the ray of the example of figure 10b. A similar combination of contained region (not shown) and partial bounding region can be derived for the left opening.

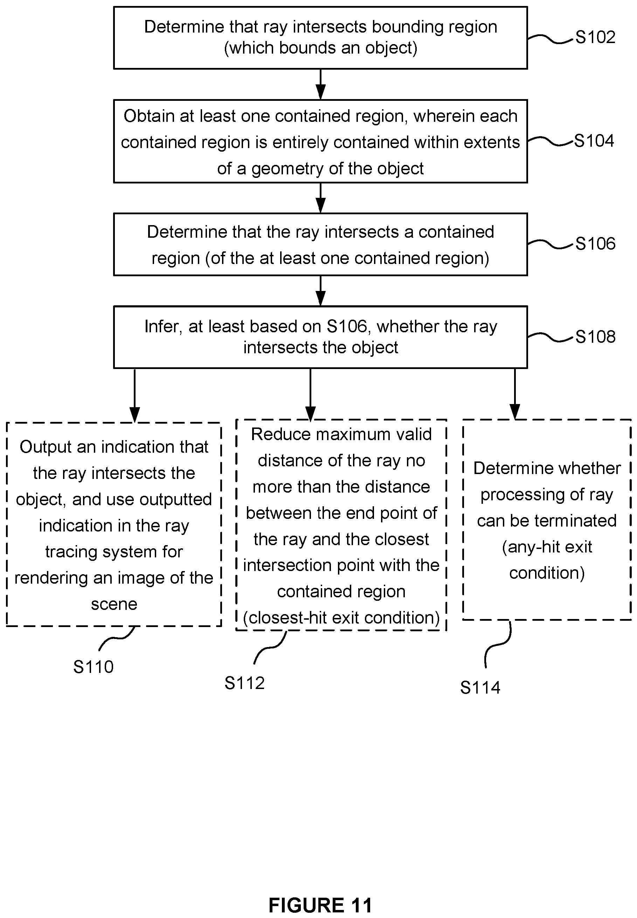

Figure 11 shows a flowchart for a general method of determining whether a ray intersects an object. This method is applicable to shadow rays or intersection rays, substantially convex objects and 'open' objects containing cavities, and generally all object-ray combinations. Step S102 comprises determining that a ray intersects a bounding region, where the object is contained within the bounding region. Step S104 comprises obtaining at least one contained region, wherein each at least one contained region is contained within (and thus smaller than) extents of a geometry defined by the object. The geometry defined by an object is object-dependent, and can comprise different aspects of an object. For a closed object (e.g., like a sphere, cube, or more complex closed object such as the 'Stanford bunny') the geometry is usually the outer surface of the object, thus the extents of the geometry defined by the object may be the outer surface of the object. Some objects are concave, i.e., have substantial concavities like a mug or vase, or have at least one opening, e.g., a pipe. For convex and open objects, the geometry defined by the object may be the convex hull, cavity, interior volume, or the externally facing boundary the object. Thus, the extents of a geometry may be defined by the cavity or convex hull of an object. In some cases, the extents of a geometry may be defined by the convex deficiency of an object. For objects which have concave regions on their exterior, e.g., an elbow pipe, the extents of the geometry may be defined by the cavity, or interior volume, or the object. Some objects may be 2D or 3D surfaces, and thus cannot form a closed container around the object. Nevertheless, geometry of surfaces includes the external edge/boundary of the surface, e.g., the rim of a disc, or the unpaired edges of polygons in a mesh (that has no holes or gaps) formed of tessellating polygons. Thus, for surface objects, the extents of a geometry may be defined by the outermost edge or boundary of that surface. Thus, for some surface objects, the contained region can be formed of a rectangle or box that is contained within the dimensions of the outermost edges of the surface. In some cases, for some surface objects, the contained region can be formed of a rectangle or box whose projection onto the surface of the surface object is contained within the dimensions of the outermost edges of the surface object.

The contained region may be dynamically generated when the BVH or other acceleration structure is defined or may have already been generated/designed and be associated with the object. The region defined by the geometry of the object, for a closed convex object, may be the external surface (or boundary, for a 2D object) of the object. Step S106 comprises determining that the ray intersects at least one of the contained regions. Step S108 comprises determining/inferring, based at least on the intersection with the contained region, whether the ray intersects the object. It will be appreciated that the intersection test with the contained region is a conservative test, and so it is not always possible to determine that an intersection exists. In general, the result of determining whether the ray intersects the object based at least on the intersection with the contained region is one of: 1) determining that the ray definitely hits the object, though the position of the intersection is not determined or 2) inconclusive, i.e., it is unknown whether the ray hits or misses the object.

Reduction of $t_{max}$, for intersection rays, need not be performed immediately at this stage. For example, it may be advantageous in some examples to test multiple nodes of a BVH, each at the same hierarchical level, prior to descending the BVH to test child nodes. This can be done in order to more efficiently select the closest-intersecting object, or e.g., to avoid the cost overhead of immediately and continually communicating all hits between parallel processors testing different nodes of an acceleration structure.

As shown in step S112, following S108, the value of the maximum culling distance, $t_{max}$, may be reduced. This corresponds to the handling of intersection rays, i.e., which are processed using the 'closest-hit' exit condition. The magnitude of the reduction may be no greater than the distance between the endpoint of the ray (i.e., the current value of $t_{max}$) and the closest intersection point between the ray and the contained region. At step S114, the processing of the ray may be terminated, where the ray is a shadow ray and is thus processed with an 'any hit' exit condition. Further optionally, and independently of steps S112 and S114, S110 involves outputting an indication that the ray intersects the object and using the outputted indication in the ray tracing system for rendering an image of the scene.

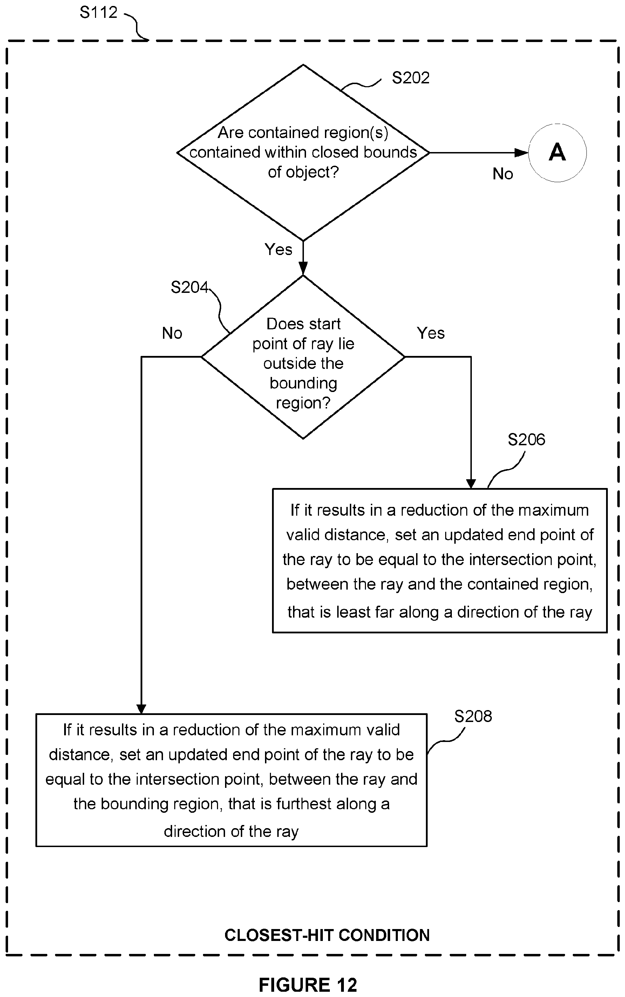

Figure 12 shows a flowchart illustrating one possible algorithm for determining whether, and how much, to reduce the value of $t_{max}$. This flowchart is thus representative of intersection rays, having a "closest-hit" exit condition. Figure 12 represents merely one possible algorithm for processing intersection rays, where other equivalent formulations may be provided for individual steps, or the algorithm as a whole. Moreover, the steps shown may in some cases be re-ordered. The method in figure 12 works on the presumption that an intersection with at least one contained region has already been determined (in step S106).

Step S202 indicates determining which type of object is under consideration. This step may not necessarily be performed. For example, in some embodiments, it may be the case that only closed objects are present, or that the contained regions are only used for closed objects and are always contained within the closed boundaries of the closed object, in which case S202 would be redundant. Step S202 is merely intended to determine whether a different set of steps may apply for handling objects that are not closed (e.g., a pipe), or are closed but have large concave regions (e.g., a vase with think walls) and so the contained regions are positioned inside those concave regions instead of inside the boundaries of the object. Thus, if the contained regions are not located inside the closed bounds of the object (e.g., the contained regions are located inside the concavity of an object), the algorithm may follow path **A,** which is dealt with in figure 11. Dealing with objects that are not closed is described in more detail with respect to figures 15a and 15b.

At step S204, it is determined whether the ray starts inside the bounding region (i.e., whether $t_{min}$ lies within the bounding region). If the ray starts outside of the bounding region and thus S204 is determined positively, the method proceeds to S206, at which $t_{max}$ is updated by setting its new value to be equal to the intersection point, between the ray and the contained region, that is least far along the direction of the ray. In other words, the position of $t_{max}$ is reduced to the earliest intersection point, i.e., the entry point, with the contained region. This reduction is of course conditional on the updated value of $t_{max}$ having a smaller value than the current value of $t_{max}$ (since the value of $t_{max}$ should not be increased). As mentioned above, this can be determined with a simple MIN function in which: updated $t_{max}$ = MIN(current $t_{max}$, proposed updated $t_{max}$). The outcome at S206 thus corresponds to the scenario shown in figures 5a and 5b.

If, at step S204, it is determined that the start point of the ray lies inside the bounding region, the method proceeds to S208 which involves updated $t_{max}$ to be equal to the intersection point, between the ray and the bounding region, that is furthest along a direction of the ray. This outcome is representative of the situation in each of figures 6a, 6b, and 6d. If the object contains more than one contained region, the outcome of S204 is unchanged provided that the ray intersects at least one of the contained regions, i.e., as illustrated in figure 6d. Furthermore, the outcome of step S204 is irrespective of whether the start point of the ray lies inside a contained region or not, i.e., as demonstrated by figures 6a and 6b.

Figure 13 shows an example algorithm for handling the processing of intersection rays with objects containing cavities. As with the algorithm in figure 12, figure 13 represents merely one possible algorithm, where other equivalent formulations may be provided for individual steps or the algorithm as a whole, as would be apparent to the skilled person. Again, the steps shown may in some cases be re-ordered. As with figure 12, the algorithm of figure 13 is intended to follow on from figure 11 (more specifically, figures 12 and 13 show detailed examples of step S112 of figure 11). Thus, it can be taken as pre-determined for the purposes of figure 13 that at least one contained region has been intersected by the ray (as determined at S106, which precedes step S112).

Step S302 illustrates the step of obtaining the partial bounding region. The partial bounding region may already be pre-determined and form part of the geometry obtained for the object, e.g., as indicated by the "geometry data" arrow in figure 1. It should be appreciated that the algorithm in figure 13 will only proceed if the ray also intersects (at least once) with the partial bounding region, as well as the bounding region. This step is not shown in the flowchart, but would implicitly be carried out, e.g., in between steps S302 and S304 (or, has already been determined to an extent i.e., as shown in steps S102). Step S304 involves determining whether the ray intersects the partial bounding region only via exception surfaces.

If S304 is determined positively, the method can be halted immediately at step S310, because it cannot be conservatively determined whether an intersection exists, and thus the maximum valid distance of the ray cannot be safely reduced. For example, the processing of figure 7d would result in a positive determination at S304, and thus the method would halt at S310.

If at S304 it is determined that the ray hits at least 'standard' surface of the partial bounding region (i.e., S304 is determined in the negative) the method proceeds to step S306 where it is determined whether the start point of the ray lies outside the partial bounding region. If step S306 is determined negatively, i.e., it is determined that the start point of the ray lies inside the partial bounding region (as shown in figure 7b), the method proceeds (via B) to S314 at which $t_{max}$ can be set to be equal to the intersection point, between the ray and the partial bounding region, that is furthest along a direction of the ray (again, as in figure 7b). In order to reach outcome S314, it is implicit, based on the negative result of S304, that at least one intersection with a 'standard' surface of the partial bounding region exists. Thus, step S314 involves updating $t_{max}$ to the furthest intersection point between the ray and the partial bounding region.

A positive determination at S306, indicating that the ray starts outside the partial bounding region (as in figures 7a or 7c) leads to step S308. The extent to which the maximum valid distance of the ray can be reduced depends on whether the ray enters or exits the partial bounding region via an exception surface. Step S308 disambiguates between these two scenarios. If S308 is determined positively, i.e., the entry point of the ray is a 'standard' surface (shown in figure 7a) and thus implying that the ray has not entered the object via the opening of the cavity, $t_{max}$ can be reduced by the largest, conservative, amount as shown in figure 7a at step S312. S312 thus involves reducing $t_{max}$ to the closest intersection point between the ray and the contained region, i.e., the entry point of the contained region (or, where there are multiple contained regions, the closest intersection point amongst any of the contained regions). However, if step S308 is determined negatively, i.e., the entry point of the ray is an exception surface of the partial bounding region, S308 proceeds via route 'B' to outcome S314. Step S314 involves updating $t_{max}$ to the furthest intersection point between the ray and the partial bounding region, e.g., as shown in figure 7c.

Figure 14 shows an example algorithm for handling the processing of shadow rays, or more generally rays with an 'any-hit' exit condition. The method shown relates both to closed objects (which, preferably, are substantially convex) and objects having cavities. This algorithm represents merely one possibility, where other equivalent formulations may be provided for individual steps or the algorithm as a whole, as would be apparent to the skilled person. The steps shown in figure 12 may also be re-ordered in some cases.

Step S402 comprises determining where the contained regions are located with respect to the bounds of the object (equivalent to step S202 of figure 12). This step may not necessarily be performed. For example, in some embodiments, it may be the case that all contained regions are contained within the bounds of the objects, and only closed objects are present, in which case S402 would be redundant. Step S402 is intended to indicate that a different set of steps may apply for handling objects that are not closed (e.g., a pipe), or are closed but have large concave regions (e.g., a vase with thick walls) and so the contained regions are positioned inside those concave regions instead of inside the boundary/walls of the object. It is theoretically possible to handle all closed objects in the same way, i.e., by placing the contained regions inside the walls of the object regardless of its shape, in the usual way via pathway S408. However, for objects with large cavities, e.g., a vase where the cavity represents the majority of the volume that the object occupies, it can be more advantageous to modify the handling of the intersection testing by placing the contained regions inside the cavity portion of the object, i.e., as illustrated by figures 7a to 7d.

If it is determined at S402 that the object can be processed in the standard way, i.e., that the contained regions are within the closed bounds of the object as illustrated in figured 5a, 5b, and 6a-d, processing of the shadow ray can immediately be terminated at step S408. This is because it has already been determined that the ray intersects at least one contained region (i.e., at step S106 shown in figure 11). Figure 14 thus highlights the significant advantage of using a contained region for shadow ray processing. Specifically, for the cost of only one additional intersection test (with a contained region, which preferably is an axis-aligned box such that the functionality of an existing box testing unit/logic can be exploited) the processing of a shadow ray can immediately be terminated. Thus, the substantial cost associated with traversing the BVH in order to reach a leaf node of an object can be avoided.

Furthermore, the processing of objects with cavities can be simplified for shadow rays compared to intersection rays. If the contained regions is not contained by closed boundaries of an object (e.g., a pipe or a vase), step S404 generates the partial bounding region as previously described. Step S406 determines whether the ray intersects only exception surfaces of the partial bounding region. In other words, it is determined whether the ray intersects at least one 'standard' surface of the partial bounding region. If S406 is determined in the negative (i.e., meaning that the ray does intersects at least one 'standard' surface of the partial bounding region), processing of the ray can immediately be terminated since it can be inferred that the ray must intersect the object at some point. Advantageously, the location of the start and end points of the ray relative to the bounding regions need not be explicitly considered, because an intersection with a portion of the object can be inferred based only on determining i) an intersection with the contained region, and ii) that the ray intersects at least one 'standard' surface of the partial bounding region. As described above, this is subject to the constraints that the intersections in i) and ii) occur within $t_{max}$ and $t_{min}$ of the shadow ray, and that the contained region is contained within i) the partial bounding region and ii) the externally facing surface of the object.

If, on the other hand, S406 is determined positively, i.e., the ray does intersect only the exception surfaces of the partial bounding region, it cannot conservatively be determined that an intersection exists without further testing, and the processing of the ray cannot be terminated. Thus, the process concludes at S410. This result would be reached for the example shown in figure 8b, in which the start point of the shadow ray (in this case the light source) is inside the cavity 832b of the object and therefore inside the partial bounding region 824b. As a result, the ray only intersects with one surface of the partial bounding region, which is an exception surface 830b.

Surface objects: contained regions

The above-described methods of using contained regions to speed up the traversal through an object partition hierarchy (such as BVH), can also include, or be extended/adapted to include objects that are not closed and/or do not contain concave portions. Such objects include surfaces and partial objects (i.e., a portion of a mesh defining the walls of a larger object that may or may not be closed).

Thus, the above-described techniques may be extended and/or adapted to work with surfaces, including portions of an object, that might not, for example, enclose a volume. This includes high complexity models such as those that have generated from laser scans or photogrammetry, for which it would be advantageous if likelihood of traversing to the primitive level could be reduced significantly. For example, the "Stanford 3D Scanning Repository" models 'Dragon' and 'Armadillo' have, respectively, approximately 5.5 and 7.5 million triangles. Further, such scans may, by default, not be 'watertight' throughout the full extent of the object, and so the previously-described methods (e.g., those related to figure 12) might not deal with the entire object, even accounting for the possibility of using exception surfaces. Consequently, it would be advantageous to deal with subsets of an object's surface separately, where those subsets are watertight, using embodiments disclosed herein. Similarly, captures of natural world scenes, e.g., cave walls, may comprise thin facades formed of many millions of triangles making them costly to ray trace using known techniques.

Figure 15a illustrates one example of this kind, where the object 1500 is a finite surface (or a portion of a larger surface that is treated as a finite surface) that can be dealt with using the above-described method. The surface object 1500 is bounded by a bounding region 1504 in the usual way. The bounding region is preferably a bounding box, such as an axis-aligned bounding box (AABB, for the same reasons described above (i.e., box testing units, BTUs, work efficiently with AABBs)). The surface shown 1500 is made of a plurality of discrete primitives, which tesselate without gaps or holes thus forming a contiguous surface. As before, the surface object 1500 is entirely contained with the bounding region 1504. Given that, usually, an intersection with a leaf-node (i.e., a primitive) of the surface would be needed to determine an intersection with the surface, it would be advantageous if the existence of an intersection could be determined using fewer and/or cheaper intersection tests.

Thus, in the same manner as before, a contained region 1514a is defined that is wholly contained within the bounding region, and which is also contained within the extents of the geometry defined by the surface 1500. In this case, the extents of the surface 1500 are defined by the outer edge of the surface, made up of unpaired edges of primitives. Thus, the contained region 1514a is defined such that the dimensions of the region aligned with the major plane of the surface (i.e., the x and z dimensions of the contained region) are entirely contained within the extents of the surface 1500. Put another way, the contained region 1514a is defined such that a planar projection (in this case, a projection along the y dimension, since this is perpendicular to the plane of the contained region 1514a) of the surface mesh 1500 onto the plane of the contained region entirely covers/contains the contained region 1514a. Once constructed, the intersection testing of an intersection ray can be treated according to figure 12, and similarly the intersection testing of a shadow ray can be treated according to figure 14.

The 'major plane' of a surface or object may be understood as referring to the plane of the space coordinate system most closely aligned with the approximate average plane of the surface object. For example, a surface object that lies substantially along the xz plane (and in figure 15a) would have the xz plane as its major plane. Alternatively, some surface objects lie in an oblique orientation relative to the space coordinate system. In this case, it may be more advantageous to use object-oriented bounding volumes and contained regions, i.e., those that are aligned with a plane that most closely matches an orientation of the surface object 1500.

Figure 15a shows an intersection 1502, with maximum valid distance $t_{max}$, 1512, and minimum valid distance $t_{min}$, 1510, passing through the object 1500. The intersection entry point 1506 and intersection exit point 1508 with the bounding region 1504 are indicated in both the upper and lower drawings (in the lower drawing the bounding region is omitted for illustrative clarity). The intersection with the contained region, 1507, is also indicated. The intersection with the object itself can therefore be inferred based on determining an intersection with the contained region 1514a. Since it is known that the ray 1502 intersects the bounding region 1504 on opposing faces and the contained region 1514a, and since the contained region has been constructed to lie within the extents defined by the object 1500, it can be inferred that the ray must also intersect with the surface. The exact position of the intersection with the surface object 1500 is not yet known. Therefore, the maximum culling distance 1508 of the ray can be conservatively reduced, at most, by setting the updated end point 1520 of the ray to be equal to the intersection point 1508, between the ray and the bounding region 1504, that is furthest along a direction of the ray. In other words, $t_{max}$ is set to the exit point 1508 of intersection between the ray 1502 and the bounding region 1504.

In order to mitigate false positives when testing against a surface object 1500, another constraint (relative to the examples disclosed in figures 5a and 6a) is considered when determining whether to conservatively reduce $t_{max}$ of an intersection ray, or to terminate a shadow ray. Since the contained region is contained only within 2 dimensions (in figure 15a, the x and z dimensions) of the surface, it would be possible for a ray to intersect both the bounding box and the contained region but not the surface. For example, a ray may not pass into the bounding volume by a sufficient depth to reach the surface. Alternatively, the ray may travel through the bounding region and intersect the contained region, but travel substantially along the plane of the surface 1500 (e.g., the xz plane) and thus skim over the surface object 1500 without actually intersecting it. Consequently, in order to conservatively infer an intersection with the surface, it is determined whether or not the ray intersects the bounding box via the opposing faces. In most cases, it will be most efficient to select opposing faces whose dimensions align with the major plane (or the approximate average plane) of the surface. In other words, the ray should intersect the opposing sides of the box with the largest surface area (given that the box is preferably formed to fit around the dimensions of the surface).

In order to facilitate the intersection testing between the ray 1502 and the contained region 1514a, the contained region may be formed into a thin box 1514a, as illustrated by the lower drawing in figure 15a. This facilitates the testing by enabling the contained 1514a region to be tested using a standard BTU, and/or more generally allows the contained region to be tested using the same box testing logic/unit that tests the bounding box 1504 for intersection. The contained region 1514a may be formed into a thin box by first forming a 2D rectangle (as illustrated in the upper drawing of figure 15a) based on the constraint that the rectangle's dimensions should be contained within the lateral extents/outer edge of the surface object 1500. Once obtained, the rectangle can be formed into a cuboid by extending/translating the rectangle along the y dimension by a small amount, provided that the contained region does not extend into or past the bounding region 1504. The y dimension of the contained region 1514a can be very small, e.g., such that the box is as thin as possible in the y dimension without intersecting the surface object The lower drawing of figure 15a shows a contained region 1514a formed into a thin box for this purpose. Alternatively, the contained region may be kept as a 2D rectangle and tested directly against the ray for intersection using suitable testing logic and/or testing unit. In some examples, a BTU configured to test for box-ray intersections can be modified to be configured to directly test a ray for intersection against a 2D rectangle or plane.

The processing of a shadow ray in the figure 15a scenario would proceed in an analogous manner, i.e., the processing of the shadow ray may be terminated in dependence on determining that i) the shadow ray intersects the bounding region on opposing faces whose dimensions align with the major plane of the surface, and ii) intersects the contained region.

As mentioned, the method of dealing with a surface object described above can apply to finite surfaces in an object partitioning hierarchy within a ray tracing acceleration structure, and can generally be applied to any node within an object partitioning hierarchy having a planar-like shape. Put another way, the method described in figure 15a can be applied to any object that has two dimensions substantially larger than its third dimension, whether or not the object is formed of a mesh of contiguous tessellating primitives.

Construction of contained region dimension shown in the upper drawing of figure 15 a may proceed as follows, for a surface constructed from a mesh of contiguous primitives:

1. Process triangles to identify unpaired edges (e.g., construct a half edge table). Define the border of the surface by the perimeter formed of the unpaired triangle edges.
2. Generate a conservatively small rectangle within the bounding box, e.g., having dimensions [0.5, 0.5], which represents fractional dimensions of the bounding box along the dimensions oriented with the surface.
3. If all primitive vertices defining the border/extents of the surface fall outside of the rectangle, repeatedly increase the size of the rectangle (e.g., in a binary search fashion) until the largest rectangle is found for which vertices defining the border/extents of the surface still fall outside of the extents of the rectangle.

Although the axes of the contained region 1514a are aligned with the bounding volume 1504 in figure 15a, this does not have to be the case. For example, the contained region could be oriented to align with the dimensions/axes of the surface object. Generally, the contained region may be oriented in order to increase the amount of surface area of the object 1500 that is covered by the container region. Aligning the contained region in this way can serve to increase the probability that a ray intersects with the contained region, thus reducing the likelihood that the ray needs to unnecessarily traverse child nodes within the acceleration structure hierarchy.

Surface objects: single-volume intersection testing

Previously disclosed examples for inferring the intersection with an object generally use a contained region and a bounding region. Where the object is 3D, the bounding region is a volume, and the contained region is usually a volume, but may be a 2D rectangle. In examples that exploit the efficiency of BTUs, both the contained and bounding regions are axis-aligned (i.e., an AABB and AACB). However, when the object being tested is a surface, or other flat object (including a closed 3D object) having two dimensions substantially larger than its third dimension, it is possible to use exactly one volume to conservatively infer an intersection between a ray and an object without needing to traverse the object partitioning hierarchy down to the primitive-level. Specifically, the contained region need not be a volume, and in some examples can be forgone altogether. This category of tests is therefore referred to as 'single-volume intersection testing'.

Figure 15b illustrates a 2D projection of a 3D surface and object that can be dealt with using the 'single-volume intersection testing' method. This example is related to the example shown in figure 15a, i.e., the object 1500 and bounding region 1504 in figure 15b are the same 3D objects as shown in the upper drawing of figure 15a. However, in this example, the contained region 1514b is kept as a 2D rectangle whose dimensions are contained within the extents/outer edge of the surface object 1500 as described above for figure 15a. Further, as with figure 15a, the extents of the surface object 1500 may be defined by the outer edge of the surface 1500 formed of unpaired edges of primitives. In this example, the contained rectangle 2D is also referred to a 'safe zone' 1514b.

In figure 15b, no intersection test with the safe zone 1514b is performed. Instead, it is first determined whether the ray intersects with the bounding volume 1504 on the opposing faces that are aligned faces whose dimensions align with the major plane of the surface. In this case, the two relevant opposing faces are those which lie in the xz plane, as indicated in figure 15b. The two intersection points 1506, 1508 with these opposing faces is indicated. These correspond to the same entry and exit points illustrated in figure 15a. In this example, the position of the intersection points 1506, 1508 is determined. Since the bounding volume 1504 is axis aligned in this case, the y dimension of the intersection points 1506, 1508 with the bounding region is not needed in order to infer intersection between the ray and the object 1500. Thus, only the x and z coordinates of the intersection points 1506, 1508 need to be determined in this case. In cases where the bounding volume 1504 and safe zone are 1514b are not axis aligned, all 3D coordinates of the intersection points with the bounding region 1504 are obtained.

In order to infer an intersection safely and conservatively between a ray and the surface object in figure 15b, the exit and entry points of the ray need to lie inside the safe zone. Thus, the next step is to determine whether the intersection points 1506, 1508 on opposing faces of the bounding volume lie within the safe zone defined by the contained rectangle 1514b. This is done by performing a projection of the intersection points 1506, 1508 onto the plane/surface of the safe zone 1514b. If the planar projection of the entry and exit intersection points 1506, 1508 lie within the safe zone rectangle 1514b, it can safely be inferred that the ray intersects with the surface object 1500. The case in figure 15b shows such an example in which the intersection points 1506, 1508 do lie within the extents of the safe zone, and thus and intersection can be inferred between the ray and the object 1500. For an intersection ray, the result of inferring the existence of the intersection would enable the $t_{max}$ of the ray to be set to a reduced position equal to the exit intersection point 1508 between the ray and the bounding volume (equivalent to the reduced position 1520 indicated in figure 15a). For a shadow ray, processing of the ray could be immediately terminated.

For the specific case in figure 15b, since the bounding volume 1504 and the safe zone rectangle 1514b are axis-aligned, no planar projection is necessary to infer intersection. This is because the x and z coordinates of the entry and exit intersection points 1506, 1508 may be directly compared to the x and z coordinates defining extents of the safe zone 1514b. In general, or if the bounding region 1504 and/or the safe zone rectangle 1514b are not axis-aligned, the entry and exit intersection points 1506, 1508 between the ray and the bounding volume 1504 should be projected onto the plane of the safe zone 1514b, where the direction of projection lies along a normal (i.e., perpendicular) to the plane of the safe zone 1514b.

Advantageously, the safe region 1514b may be represented using as few as four bits within the node of an object partitioning hierarch. Two bits may be used to indicate the direction of the shortest dimension (e.g., X: '00', Y: '01', Z: '11'), such that the major plane of the surface and/or the axes with which the safe region is aligned can be inferred. The other two bits may be used to define the size of the safe region, provided that the sizes are normalised in some fashion (e.g., [0.5, 0.5]: '00'; [0.75, 0.75]: '01'; [0.875, 0.875]: '10'; [0.9375, 0.9375]: '11').

Some box testing units do not report the exact intersection coordinates with the surfaces of the bounding regions. Other logic or logic units can therefore be employed to report this information, or the BTUs may be modified to report exact intersection coordinates. Nevertheless, it would be advantageous to be able infer an intersection with a surface without the need to determine the exact intersection coordinates with the bounding region.

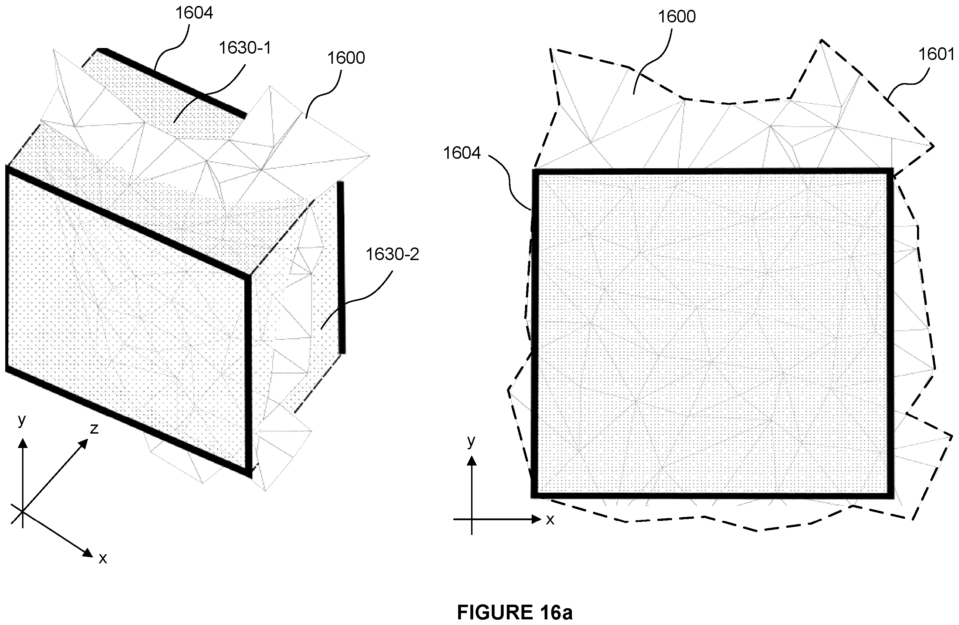

Figure 16a illustrates a way of constructing a partial bounding region that intersects a surface. Doing so enables the existence of an intersection with a surface to be inferred without determining the exact intersection coordinates with the bounding region. In this particular example in figure 16a, the triangles forming the surface object 1600 have been partially enclosed by an axis aligned box, but other bounding regions are possible. For example, it would also be possible to use a bounding sphere.

Figure 16a thus shows another example of dealing with surfaces using the 'single-volume intersection testing' method. The object 1600 in figure 16a is comprised of a mesh of triangles. The mesh of triangles in this specific case have been selected from a much larger surface, and are watertight (i.e., contain no gaps). The bounding volume 1604 is used here to encase a specific portion of the mesh object 1600. The bounding volume 1604 is considered a partial bounding volume in this case, since it does not entirely contain the surface object 1600. Instead, the partial bounding volume 1604 has the following properties:

i. Two opposing faces contain a contiguous portion of the surface (i.e., the contained portion of the surface has no gaps). In this example, the front and back faces, i.e., those lying in the yx plane, contain the contiguous portion of the surface.

ii. The remaining four surfaces are set to be 'exception' surfaces, since they are arranged to exclude the edges/outer boundary 1601 of the surface. The two exception surfaces shown in the left-hand drawing are indicated as 1630-1, 1630-2.

In other words, the partial bounding volume 1604 is arranged relative to the surface 1600 to ensure that unpaired edges 1601 of the primitives are not contained within any part of the bounding volume 1604. This can be seen from the right-hand drawing, which shows the partial bounding volume viewed along the z-axis direction, and illustrates that the bounding volume 1604 is arranged with respect to the surface 1600 such that the surface entirely bisects the partial bounding volume 1604. The boundary edge 1601, defined by the unpaired edges of the triangles, are indicated in the dashed line, and can be seen to fall outside of the partial bounding volume 1604. Thus, the partial bounding volume 1604 comprises two separate volumes whose boundary is defined by the surface 1600, and no gaps exist in the portion of the surface 1600 contained within the partial bounding region 1604.

The front and back facing surfaces of the bounding volume 1604, i.e., those lying in the yx plane, are considered 'standard' surfaces of the bounding volume. In this example, these faces were chosen to be perpendicular to the narrowest dimension of the surface object 1600. The positions of the exception surfaces may be set so that opposing sides are as far apart as possible, but so that each of the exception surfaces is divided/bisected by a subset of triangles forming the surface object 1600. Each of the four exception surfaces of the bounding 1604 (shown with dashed lines), is divided into (at least) two disjoint regions. Consequently, any straight line drawn from the front surface of the bounding box 1604 (in the yx plane) to the back surface (in the yx plane) must necessarily intersect the surface object 1600 (provided that there are no holes in the triangle mesh forming the object 1600). Preferably, the opposing faces that are the 'standard' (i.e., non-exception) surfaces, can be set to be as close together as possible (in a conservative manner) provided the contained portions of the triangles do not intersect those surfaces of the bounding volume 1604. In the example of Figure 16a, the front and back surfaces' positions have been chosen in a slightly conservative manner based on the bounds of all the triangles rather than just the portions within the bounds of the exception surfaces: thus, the back face could be moved slightly closer to the surface.

Consequently, in figure 16a there is no contained volume, and moreover no contained volume is needed to infer intersection with the surface 1604. It should now be appreciated that if a ray enters via either of the non-exception surfaces of the partial bounding volume 1604, and exits by the other non-exception surface, then the ray must intersect at least one of the selected triangles forming part of the surface 1600. The $t_{max}$ value of the ray can then be adjusted to the intersection exit point on the far side of the bounding region 1604. If, however, the ray enters or exits through an exception surface, it is not immediately possible to determine the existence of an intersection.

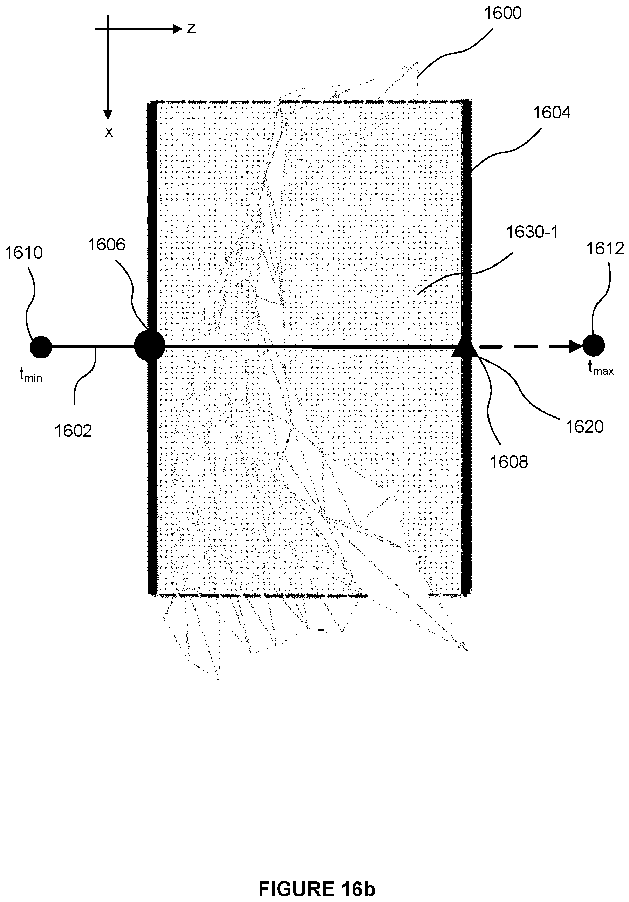

Figure 16b illustrates explicitly how an intersection ray can be dealt with using the partial bounding volume of figure 16a. Figure 16b shows the surface object 1600 and bounding volume 1604 from a new perspective, i.e., view along the negative direction of the y axis, such that only the upper-most exception surface 1630-1 (shown in figure 16a) of the bounding volume 1604 is seen. Figure 16b shows a ray 1602 having a with maximum valid distance $t_{max}$, 1612, and minimum valid distance $t_{min}$, 1610, passing through the surface object 1600. The ray also passes through the opposing non-exception surfaces of the partial bounding volume 1604, via entry point 1606 and exit point 1608. As explained above, since the bounding volume 1604 is arranged to contain only a portion of the surface, where that contained portion of surface comprises no gaps, it is possible to infer an intersection with the surface for a ray that passes through both non-exception surfaces of the partial bounding volume 1604. Such a scenario is indicated in figure 16b. Consequently, figure 16b illustrates that the $t_{max}$ value of the ray is updated, i.e. as shown with triangular point 1620, to the intersection exit point between the ray and the bounding region that is furthest along a direction of the ray, i.e., the exit point 1608 of the partial bounding region 1604. If the ray in figure 16b were a shadow ray, processing of the shadow ray could be immediately terminated based on the intersection criteria above.

In the example above, the surface object 1600 formed by the triangles happens to be substantially perpendicular to a major axis (the z axis in this case). In other examples, when encountering more 'oblique' surfaces that are not substantially perpendicular to a major axis of the space-coordinate system, an oriented box might be a chosen for the partial bounding volume 1604. An oriented box in this case would be a box having one dimension aligned with the approximate average plane of the surface object. Further, in the examples described for the intersection testing with surfaces, the bounding volume could be a rectangular prism, or generally any suitable convex shape could be chosen provided that it is possible to identify at least two non-exception surfaces that are separated by sets of exception surfaces through which the surface passes. For example, a cylinder or truncated pyramid are other suitable candidates for a partial bounding volume for use in 'single-volume intersection testing' scenarios.

Non-Closed Self-Concealing Object

Figure 9a showed an example of a non-closed object that requires a specialised partial bounding region to deal with intersection tests involving contained regions. In this case, every region inside the object can be reached by at least one ray via one of the two openings. The same is true of the concave objects shown in figures 7a to 7e, i.e., every portion of the interior defined by the concavity of the object can be reached by a ray entering the 'opening' of the object. As a result, special bounding values with 'exception surfaces' are defined, and special rules are defined to handle the intersection testing for both the any-hit condition and the closest-hit condition. However, there is another class of non-closed objects for which this is not the case, and for all intents and purposes with respect to AACBs and intersection testing can be treated in substantially the same way as fully closed objects.

This class of objects is referred to as a non-closed self-concealing object with a hidden region. The mesh of the object itself may be watertight (i.e., contain no cracks or gaps), but the object contains some opening or slot. Generally, , a self-concealing object means an object which has an internal region that behaves as a closed object. More specifically, a 'hidden region' in this context means a region within an object (which may be 2D or 3D) that is

> i) not fully enclosed by a watertight boundary, i.e., it is accessible by some curved or multi-step pathway from the exterior of the object; and
> ii) fully hidden from view from the exterior of the object, i.e., no straight line is able to intersect any part of the hidden region via any opening, hole, or gap in the object.

Practical examples of such a non-closed self-concealing object might be a conch shell, a post-box, or a tunnel with multiple sharp bends. In other words, a hidden region is obscured from all possible viewing angles external to the non-closed self-concealing object.

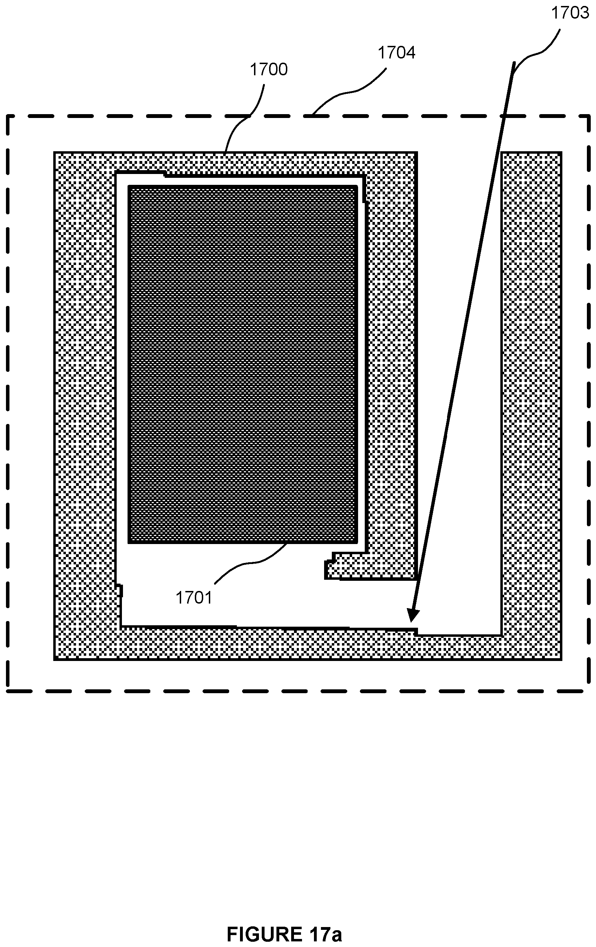

Figure 17a illustrates a 2D example of a non-closed self-concealing object object 1700 having a hidden region. This object 1700 curves around on itself such that it encloses a hidden region 1701. It should be appreciated that not all non-closed self-concealing objects fit into the class of objects. For example, at least one condition that should be met in order to be able to treat the non-closed self-concealing object as if it were a closed object for intersection testing purposes. This condition is that, for a suitable bounding volume around the object (e.g., an AABB), it must be impossible for any ray, i.e., a straight line, to intersect both the outer bounding volume and the hidden region without striking a surface of the object on entry and exit. In other words, for a ray that starts and ends (i.e., has $t_{min}$ and $t_{max}$) outside the bounding volume, and intersects the hidden region, it must be guaranteed that the ray will intersect the object at least twice (i.e., on entry and exit).

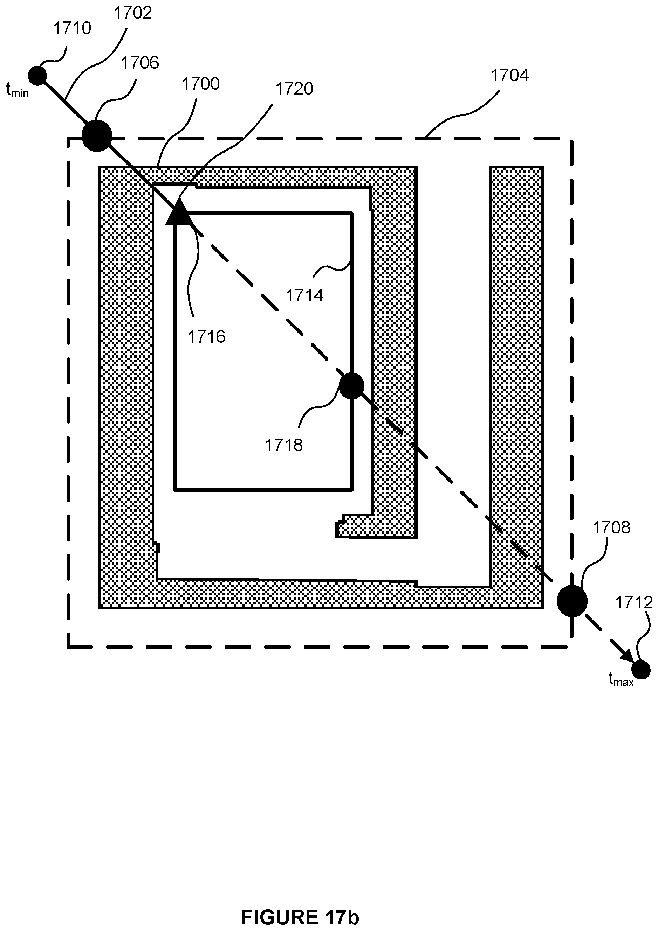

Nevertheless, as for the closed object case, it is possible for the $t_{min}$ of the ray to start inside the bounding region 1704. Provided that the ray still intersects the hidden region, even if the ray starts inside the bounding region 1704 it can still be guaranteed that the ray will at least intersect the object at least once (i.e., at least after the point that it intersects the hidden region). Therefore, similar to the closed object case, if $t_{min}$ of the ray starts inside the bounding region that, at best, the position of $t_{max}$ can be updated to the intersection point with the bounding region that is furthest along the ray, i.e., point 1708 in Figure 17b.

Figure 17a illustrates this rule by showing a bounding volume 1704 and an incident ray 1703 that enters an opening in the object 1700. Even this ray 1703, which penetrates into the object as far as is possible (given that is starts outside of the bounding volume 1704) cannot reach the hidden region 1701. Thus, as mentioned above, the hidden region is defined as the region that is entirely inaccessible by any ray that is incident on the object. For the avoidance of doubt, the hidden region 1701 shown in Figure 17a is not the complete hidden region (for illustrative clarity). In reality, the hidden region may not be a uniform polygon or polyhedron. However, for the purposes of conservative intersection testing, it is sufficient that a suitable contained region (e.g., an axis aligned contained volume, but generally any suitable contained region or volume) is wholly contained within the hidden region.

Figure 17b shows an example of how a the $t_{max}$ of a ray may be culled for a non-closed self-concealing object with a hidden region, in a manner equivalent to the culling of $t_{max}$ for close object. In this figure, the contained region 1714 is fully contained within the hidden region 1701 (not shown in Figure 17b). The contained region 1714 may be as large as the hidden region itself, but it will be understood that the shape of the region 1714 in Figure 17b is chosen for illustrative clarity. It will also be appreciated that a valid contained region may even extend into the neighbouring solid walls of the object, provided that the contained region is still entirely contained within the outermost exterior of the object's walls.

The ray 1702 in Figure 17b intersects the bounding box 1704 at entry point 1706 and exit point 1708 (based on the ray direction). The ray can also be seen to intersect with the contained region 1714 at points 1716 and 1718. Given that the start point of the ray lies outside the bounding region 1704, there is no need to determine whether the start point of the ray lies outside the contained region (because, by inference, it must do).For completeness, it is noted that the ray intersects with the contained region an even number of times, i.e., at points 1716 and 1718, but even if the ray ended (i.e., the position of $t_{max}$) within the bounding volume 1704 or the contained region 1714, the $t_{max}$ value could still be updated to the entry point intersection 1716 with the contained region. Due to the fact that the ray 1702 starts outside the bounding region 1704, and intersects with the contained region 1714, it can be determined that the ray intersects the object 1700, because it is also known that the contained region is within the hidden region of the object. This is because it can be inferred, with certainty, that the intersection point between the object 1700 and the ray 1702 occurs at some point between the first intersection with the bounding region 1706, and the first intersection with the contained region 1716. This inference is possible because the object behaves as if it were closed from the perspective of the hidden region, and the contained region is fully within the hidden region object, and the bounding region is fully outside the object.

As with the closed object example shown in Figure 5a, it is therefore possible to reduce $t_{max}$ by the largest conservative amount. The motivation for reducing $t_{max}$ as far as (conservatively) allows, is to reduce the possibility that the ray 1702 will be needlessly tested against more distant, occluded, objects, or indeed further portions of the object 1700 itself. It should be appreciated that if the object 1700 has a non-trivial (i.e., large) number of primitive/triangles, it may constitute a large sub-tree of a BVH, and so 'pruning' portions of that subtree as early as possible is a worthwhile saving. $t_{max}$ can be reduced, at most, to the intersection point 1716, between the ray and the contained region, that is closest to the start point of the ray (i.e., the first intersection point 1716 with the contained region). Consequently, $t_{max}$ can be updated to an 'updated maximum culling distance' 1720, denoted by the triangle in Figure 17b. Referring to the flow chart in Figure 12, the updating of $t_{max}$ illustrated for this non-closed self-concealing object would follow the path of S202 (yes), S204 (yes), resulting in S206.

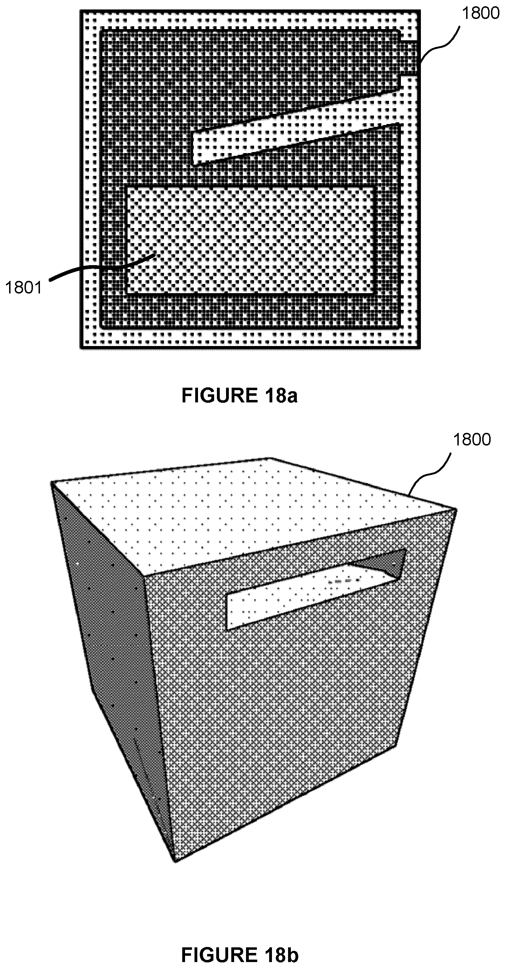

The 2D example of a non-closed self-concealing object with a hidden region applies equally to 3D objects. Figure 18a shows a 2D profile view of a post-box type object 1800 that contains a 'slot' entrance point and a hidden region 1801 within the cavity of the object. Figure 18b shows the post-box object 1800 in 3D, where the entry slot can be seen on the front face. The 'hidden region' 1801 cannot be shown in Figure 18b because, by definition, it is hidden from external view since no single light ray can access the hidden region via the exterior of the object.

One further type of non-closed self-concealing object is also envisaged by the present inventors, which is a direct 3D extension of the 2D non-closed self-concealing object 1700 shown in Figures 17a and 17b. If this object 1700 is extended out of the plane of the viewing plane, it forms an extended pipe which is open at both ends, but is not enclosed in the same way a pipe would be. In other words, a conventional pipe (open at both ends, such as the pipe object 900a shown in Figure 9a) has the topology of a torus, whereas the non-closed self-concealing object has no closed loops.

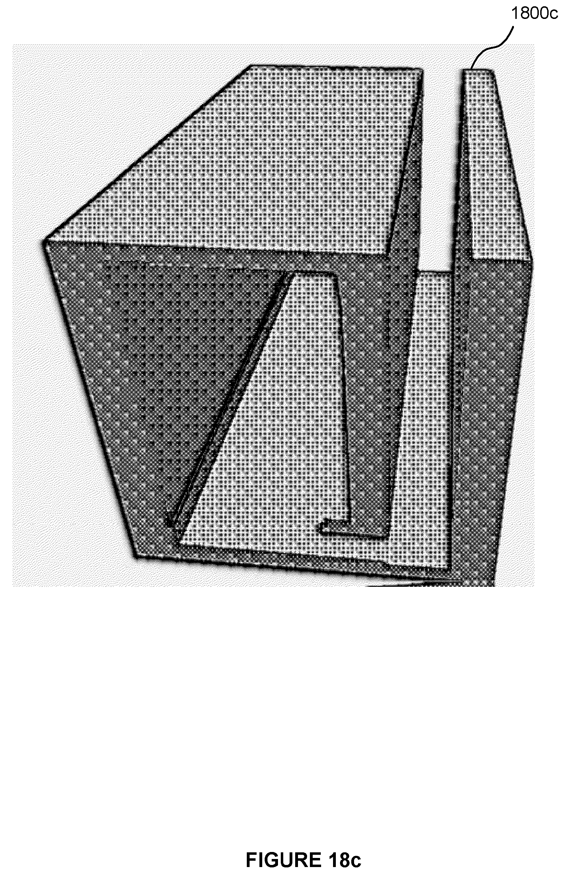

Figure 18c shows a 3D object 1800c, resembling a non-joined pipe, that would result from the extension of the non-closed self-concealing 'hidden region' object 1700 in Figure 17a. The non-joined pipe object 1800c is not joined, and nor does it contain a hidden region. It can be seen from the image that every part of the interior of the non-closed pipe object 1800c could be reached by a ray of light. Nevertheless, the interior of the pipe can only be reached by a ray that enters from the large openings at either side, and no light rays could penetrate the interior of the pipe via the small slot-like opening Consequently, the non-joined pipe can still be treated in the same way as a normal pipe, e.g., such as the pipe 900b shown in Figure 9b, provided that appropriate partial bounding volumes with exception surfaces are used.

Specifically, a partial bounding region, like partial bounding region 924b in Figure 9b, may be constructed around the non-joined pipe 1800c with two exception surfaces (corresponding to the two exception surfaces 930-1b, and 930-2b, shown in Figure 9b) that exclude the main openings of the pipe at either end. Since a ray can only access the contained regions via the main openings, the exception surfaces may be selected such that they exclude only the 'main' two openings of the object, but not the slot-like opening. Thus, one or more contained regions can be contained within the main cavity of the pipe, and within the partial bounding region. Those contained regions, contained within the non-joined pipe, may then be treated for intersection testing purposes in the same manner as the pipe object and contained regions in Figure 9b. In other words, as with the Figure 9b example, in order to infer an intersection between a ray and the non-joined pipe object 1800c, a ray should intersect at least one 'standard' surface (i.e., a non-exception surface) of the partial bounding region, and at least one contained region.

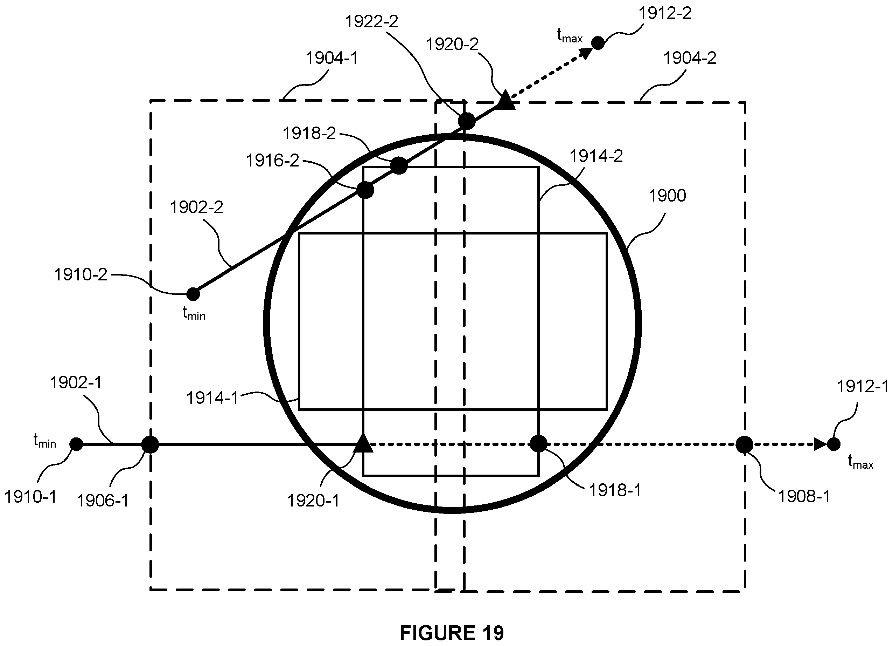

Figure 19 illustrates one further example behaviour of ray tracing, this time concerning a standard closed object but contained with multiple bounding regions, or more specifically contained within the union of multiple bounding regions. The circular object 1900, as illustrated in Figure 5a, is contained within two bounding regions 1904-1, 1904-2. Each bounding region 1904-1, 1904-2 contains only a part of the object 1900, but the union of the overlapping bounding regions 1904-1, 1904-2 contains the whole of the object. It is therefore possible to treat the union of a plurality of bounding regions as if it were a single bounding region for the purposes of defining and testing contained regions. That is, intersections with contained regions within one or more bounding regions can be determined with respect to a region defined by the union of the one or more bounding regions. This is advantageous because it allows objects having unusual or erratic shapes to be bounded efficiently using a plurality of overlapping boxes, without unnecessarily limiting the extent of a contained region within the object. Furthermore, it will be observed that no singular bounding region contains a whole contained region 1914-1, 1914-2. However, since the union of the overlapping bounding regions 1904-1, 1904-2 contains both contained regions 1914-1, 1914-2, the contained regions operate in substantially the same way as for the closed object case with a single bounding region.

For example, consider a first ray 1902-1 having $t_{min}$ 1910-1 and $t_{max}$ 1912-1 placed outside the union of the bounding regions 1904-1, 1904-2, and which intersects the bounding regions at the entry point 1906-1 and exit point 1908-1. The first ray 1902-1 intersects one of the contained regions 1914-1 at entry point 1920-1 and exit point 1918-1. Since $t_{min}$ 1910-1 and $t_{max}$ 1912-1 lie outside the union of the bounding regions, the value of $t_{max}$ 1912-1 can be updated to the intersection point with a contained region that is the least far along the direction of the ray, i.e., point 1920-1. This is equivalent to the behaviour in Figure 5a, the only difference being that the union of bounding region is treated as a single bounding region.

Now consider a second ray 1902-2, which has the start point $t_{min}$ 1910-2 of the ray being inside a bounding region 1904-1, but $t_{max}$ 1912-2 outside the union of the bounding regions 1904-1, 1904-2. The second ray 1902-2 intersects the bounding regions at the final exit point 1920-2. The second ray 1902-2 intersects one of the contained regions 1914-2 at entry point 1916-2 and exit point 1918-2. Since $t_{min}$ 1910-1 lies inside the region (which in this 2D case is a perimeter) defined by the union of the bounding regions, the value of $t_{max}$ 1912-2 cannot be updated to the first intersection point with the contained region 1916-2. Instead, to be conservative, $t_{max}$ can only be updated to the intersection with the union of the bounding regions that is farthest along the direction of the ray, i.e., intersection potin 1920-2. It should be noted that the second ray 1902-2 also intersects with the first bounding region at exit point 1922-2. This exit point 1922-2 is earlier along the ray that the exit point between the union of the bounding regions 1920-2. However, in order to ensure correct behaviour, for conservativism, the value of $t_{max}$ is preferably not updated to the earlier point 1922-2 (even though this point 1922-2 technically an exit point of a bounding region). This ensures that the point at which the value of $t_{max}$ is updated 1920-2 is guaranteed not to cause any undesirable consequences. Again, this behaviour is equivalent to the behaviour illustrated in Figure 6a for the same closed object. Again, the only difference is that the region defined by the union of bounding region is treated as a single bounding region, and portions of the individual bounding regions (e.g., point 1922-2) that are inside the region/perimeter defined by the union of bounding regions 1904-1, 1904-2 is ignored for the purposes of updating $t_{max}$.

For the avoidance of doubt, although the multiple overlapping bounding regions 1904-1, 1904-2 form a region that is substantially rectangular, there is no requirement for this, nor is there any special advantage. The region defined by the union of a plurality of bounding regions can by any irregular shape, and indeed part of the advantage of having a plurality of overlapping bounding regions is that they can be combined/unified to form an irregular shape that compactly bounds an irregular object.

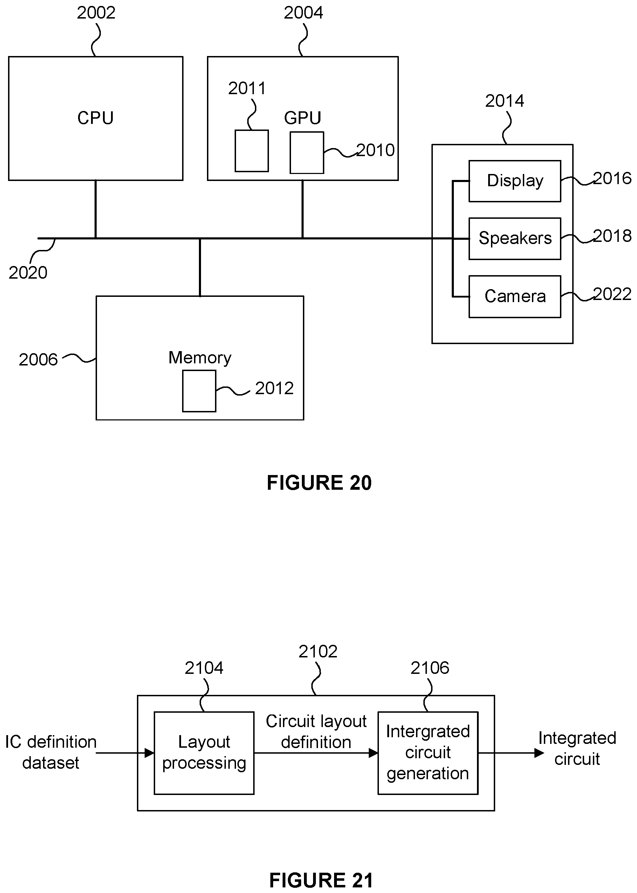

Figure 20 shows a computer system in which the graphics processing systems described herein may be implemented. The computer system comprises a CPU 2002, a GPU 2004, a memory 2006, a neural network accelerator (NNA) 2008 and other devices 2014, such as a display 2016, speakers 2018 and a camera 2022. A ray tracing unit 2010 (corresponding to ray tracing unit 102) is implemented on the GPU 2004, as well as a Neural Network Accelerator (NNA) 2011. In other examples, the ray tracing unit 2010 may be implemented on the CPU 2002 or within the NNA 2011 or as a separate processing unit in the computer system. The components of the computer system can communicate with each other via a communications bus 2020. A store 2012 (corresponding to memory 104) is implemented as part of the memory 2006. In other examples, one or more of the depicted components may be omitted from the system.

The ray tracing system of figure 1 is shown as comprising a number of functional blocks. This is schematic only and is not intended to define a strict division between different logic elements of such entities. Each functional block may be provided in any suitable manner. It is to be understood that intermediate values described herein as being formed by a ray tracing system need not be physically generated by the ray tracing system at any point and may merely represent logical values which conveniently describe the processing performed by the ray tracing system between its input and output. Reference to 'ray tracing system' in the present disclosure should be understood to encompass/include embodiments of the object intersection testing methods and systems as disclosed herein.

The ray tracing systems, and specifically the testing modules 108, 112, 114 described herein described herein may be embodied in hardware on an integrated circuit. The ray tracing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a ray tracing system configured to perform any of the methods described herein, or to manufacture a ray tracing system comprising any apparatus described herein. An integrated circuit definition dataset may be, for example, an integrated circuit description.

Therefore, there may be provided a method of manufacturing, at an integrated circuit manufacturing system, a ray tracing system as described herein. Furthermore, there may be provided an integrated circuit definition dataset that, when processed in an integrated circuit manufacturing system, causes the method of manufacturing a ray tracing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a ray tracing system will now be described with respect to Figure 21.

Figure 21 shows an example of an integrated circuit (IC) manufacturing system 2102 which is configured to manufacture a ray tracing system as described in any of the examples herein. In particular, the IC manufacturing system 2102 comprises a layout processing system 2104 and an integrated circuit generation system 2106. The IC manufacturing system 2102 is configured to receive an IC definition dataset (e.g. defining a ray tracing system as described in any of the examples herein), process the IC definition dataset, and generate an IC according to the IC definition dataset (e.g. which embodies a ray tracing system as described in any of the examples herein). The processing of the IC definition dataset configures the IC manufacturing system 2102 to manufacture an integrated circuit embodying a ray tracing system as described in any of the examples herein.

The layout processing system 2104 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g., in terms of logical components (e.g., NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 2104 has determined the circuit layout it may output a circuit layout definition to the IC generation system 2106. A circuit layout definition may be, for example, a circuit layout description.

The IC generation system 2106 generates an IC according to the circuit layout definition, as is known in the art. For example, the IC generation system 2106 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 2106 may be in the form of computer-readable code which the IC generation system 2106 can use to form a suitable mask for use in generating an IC.

The different processes performed by the IC manufacturing system 2102 may be implemented all in one location, e.g., by one party. Alternatively, the IC manufacturing system 2102 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a ray tracing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g., by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 18 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 18, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g., in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

According to examples of the disclosure provided herein, the following clauses are provided:

1. A method of determining, in a ray tracing system, whether a ray intersects an object of a scene, wherein the object comprises a surface, and wherein at least a portion of the surface of the object is contained within a bounding volume, the method comprising:

determining that the ray intersects the bounding volume at two intersection points, wherein the two intersection points represent an entry point and an exit point;

determining that the entry point and the exit point lie on opposing faces of the bounding volume, wherein the opposing faces of the bounding volume are arranged on opposing sides of the portion of the surface of the object contained within the bounding volume; and

determining whether the ray intersects the object at least in dependence on determining that the entry point and the exit point lie on an opposing faces of the bounding volume.

2. The method of clause 1, wherein the portion of the surface of the object contained within the bounding volume contains no gaps, and wherein the bounding volume is partitioned, by the portion of the surface of the object, into two distinct volumes.

3. The method of clause 2, wherein all faces of the bounding volume intersected by the object are deemed exception surfaces, the method further comprising:
in response to determining that the entry point and the exit point do not lie on exception surfaces of the bounding volume, determining that the ray intersects the object.

4. The method of clause 1, wherein the portion of the surface of the object contained within the bounding volume does not intersect any face of the bounding volume, the method further comprising:
determining a contained planar region whose boundary is contained within a projection of the portion of the surface of the object onto a plane of the contained planar region.

5. The method of clause 4, further comprising:

determining a position of the entry point and the exit point;
projecting the positions of the entry point and the exit point onto the plane of the contained planar region to obtain projected entry and exit points;
in response to determining that the projected entry and exit points lie within the boundary of the contained planar region, determining that that the ray intersects the object.

6. The method of clause 3 or 5, further comprising, in response to determining that the ray intersects the object:
reducing a maximum valid distance that defines an endpoint of the ray by updating the endpoint of the ray to be equal to the exit point.

7. The method of clause 6, comprising forming a queue of a plurality of intersection tests between the ray and a plurality of further bounding regions, the method comprising culling a subset of intersection tests in the queue in dependence on determining that the ray intersects the object.

8. The method of clause 6 or 7, wherein an exit condition of the ray is a closest-hit exit condition.

9. The method of clauses 3 or 5, wherein an exit condition for the ray is an any-hit exit condition, the method further comprising terminating processing for that ray in response to determining that the ray intersects the object.

10. The method of any preceding clause, wherein the bounding volume is arranged such that the opposing faces of the bounding volume are aligned with a plane of the portion of the surface of the object contained within the bounding volume, and wherein each of the opposing faces has a larger surface area than each of the other faces of the bounding volume.

11. The method of any preceding clause, wherein the bounding volume is an axis-aligned box.

12. The method of any of clauses 1 to 10, wherein the bounding volume is object-oriented box having one dimension aligned with a plane of the portion of the surface of the object contained within the bounding volume.

13. The method of any preceding clause, wherein the object is a 3D object, and wherein the surface of the object comprises two dimensions substantially greater than a third dimension.

14. The method of any preceding clause, wherein the surface of object is comprised of a plurality of tessellating convex polygons, wherein the portion of the surface contained within the bounding volume is a contiguous surface.

15. The method of any preceding clause, wherein determining that the ray intersects the bounding volume at two intersection points comprises determining that the two intersection points lie within a maximum valid distance and a minimum valid distance of the ray.

16. The method of any preceding clause, wherein the bounding volume forms part of an object partitioning hierarchy.

17. The method of any preceding clause, wherein determining whether the ray intersects the object is performed without determining that the ray intersects a primitive or leaf node associated with the object.

18. The method of any preceding clause, further comprising outputting an indication that the ray intersects the object, wherein the outputted indication is used in the ray tracing system for rendering an image of a scene.

19. A graphics processing system configured to perform the method of any of clauses 1 to 18.

20. The graphics processing system of clause 19 wherein the graphics processing system is embodied in hardware on an integrated circuit.

21. Computer readable code configured to cause the method of any of clauses 1 to 18 to be performed when the code is run.

22. An integrated circuit definition dataset that, when processed in an integrated circuit manufacturing system, configures the integrated circuit manufacturing system to manufacture a graphics processing system as provided in clause 19 or 20.

According to other examples of the disclosure provided herein, the following clauses are provided:

1. A method of determining, in a ray tracing system, whether a ray intersects an object of a scene, wherein the object is contained within a union of one or more bounding regions that are finite, wherein the one or more bounding regions form part of an object partitioning hierarchy, the method comprising:

determining that the ray intersects a region defined by the union of the one or more bounding regions;
obtaining at least one contained region, wherein each at least one contained region is contained within, and smaller than, extents of a geometry defined by the object;
determining that the ray intersects a contained region of the at least one contained region; and
determining whether the ray intersects the object in dependence on at least determining that the ray intersects the contained region.

2. The method of clause 1, further comprising, in response to determining that the ray intersects the object: updating an endpoint of the ray, defined by a maximum valid distance of the ray, by reducing the maximum valid distance by an amount that is no greater than a distance between the endpoint of the ray and an intersection point between the ray and the contained region.

3. The method of clause 2, comprising determining the amount by which to reduce the maximum valid distance in dependence on a position of an intersection point between at least one of i) the ray and the contained region and ii) the ray and the region defined by the union of the one or more bounding regions.

4. The method of any preceding clause, comprising forming a queue of a plurality of intersection tests between the ray and a plurality of further bounding regions, the method comprising culling a subset of intersection tests in the queue in dependence on determining that the ray intersects the object.

5. The method of clause 4, when dependent on clause 2, wherein culling the subset of intersection tests comprises determining whether a maximum distance condition is satisfied, wherein the maximum distance condition is satisfied if an updated endpoint of the ray defined by the reduced maximum valid distance is at least as far along a direction of the ray as an intersection point between the ray and a further bounding region associated with a respective queued intersection test.

6. The method of any of clauses 2 to 5, wherein updating the end point of the ray comprises setting an updated end point of the ray to be equal to an intersection point, between the ray and the contained region, that is least far along a direction of the ray.

7. The method of clause 6, wherein updating the endpoint of the ray comprises:

determining that a start point of the ray lies outside the region defined by the union of the one or more bounding regions; and
determining that the intersection point, between the ray and the contained region, that is least far along a direction of the ray is less far along a direction of the ray than the endpoint of the ray.

8. The method of clause 6 or 7, wherein there is a plurality of contained regions, and wherein updating the endpoint of the ray comprises:

determining that the ray intersects a subset of contained regions of the plurality of contained regions; and

setting an updated endpoint of the ray to be equal to an intersection point between the ray and a contained region in the subset that is least far along a direction of the ray.

9. The method of any of clauses 2 to 5, wherein updating the endpoint of the ray comprises setting an updated endpoint of the ray to be equal to an intersection point, between the ray and the region defined by the union of the one or more bounding regions, that is furthest along a direction of the ray.

10. The method of clause 9, comprising:

determining that a start point of the ray lies within the bounding region; and
determining that the intersection point, between the ray and the region defined by the union of the one or more bounding regions, that is furthest along a direction of the ray is less far along a direction of the ray than the endpoint of the ray.

11. The method of any preceding clause, wherein the object is a closed object, and wherein the extents of the geometry of the object is an external surface of the object.

12. The method of any of clauses 1 to 10, wherein the object is non-closed self-concealing object that contains a hidden region, wherein the hidden region is contained entirely within an interior of the non-closed self-concealing object, the hidden region defined by being obscured from all possible viewing angles external to the non-closed self-concealing object, wherein each at least one contained region is contained within the hidden region of the non-closed self-concealing object.

13. The method of any of clauses 2 to 5, wherein the object comprises an open cavity, and wherein the extents of the geometry of the object defining the region that contains the contained region is an externally facing surface of the object, wherein the method comprises:
in response to determining that the ray intersects the region defined by the union of the one or more bounding regions, obtaining a partial bounding region which i) contains the at least one contained region and ii) excludes all portions of the object defining openings of the open cavity.

14. The method of clause 13, wherein one or more exception surface of the partial bounding region defines a surface of the partial bounding region which excludes the portions of the object defining the opening of the open cavity, and wherein updating the endpoint of the ray is performed in dependence on determining that the ray intersects at least one surface of the partial bounding region that is not an exception surface.

15. The method of clause 14, wherein the one or more exception surfaces are selected to exclude only a subset of openings of the open cavity, wherein the subset of openings is defined such that the at least one contained region is viewable via the openings.

16. The method of clause 14 or 15, wherein updating the endpoint of the ray comprises:

determining that a start point of the ray lies outside of the partial bounding region;
determining that an intersection point, between the ray and the partial bounding volume, that is least far along a direction of the ray does not lie on an exception surface; and
setting an updated endpoint of the ray to be equal to an intersection point, between the ray and the contained region, that is least far along a direction of the ray.

17. The method of clause 16, wherein updating the endpoint of the ray further comprises:

determining that a start point of the ray lies outside of the partial bounding region;
determining that an intersection point, between the ray and the partial bounding region, that is least far along a direction of the ray lies on an exception surface; and
setting an updated end point of the ray to be equal to said intersection point, between the ray and the partial bounding region, that is furthest along a direction of the ray.

18. The method of clause 14 or 15, wherein updating the endpoint of the ray comprises:

determining that a start point of the ray lies inside the partial bounding region;

setting an updated end point of the ray to be equal to said intersection point, between the ray and the partial bounding region, that is furthest along a direction of the ray.

19. The method of any preceding clause, wherein an exit condition of the ray is a closest-hit exit condition.

20. The method of any preceding clause, wherein determining an intersection with the bounding region comprises determining the existence of an intersection between a ray and a box.

21. The method of clause 1, wherein the exit condition for the ray is an any-hit exit condition, the method further comprising:

terminating processing for that ray in response to determining that the ray intersects the object.

22. The method of clause 21, wherein either:

the object is a closed object, and the geometry of the closed object is an external surface of the object, or the object is a non-closed self-concealing object, and the extents of a geometry defined by the non-closed self-concealing object comprises a hidden region contained entirely within an interior of the non-closed object, the hidden region defined by being obscured from all possible viewing angles external to the non-closed object; wherein determining that the ray intersects the object comprises determining that the ray intersects at least one contained region of the contained region at least once.

23. The method of clause 21, wherein the object comprises an open cavity, and the extents of the geometry defined by the object defining the region that contains the contained region is an externally facing surface of the object.

24. The method of clause 23, wherein the method comprises:

obtaining a partial bounding region which i) contains the at least one contained region and ii) excludes all portions of the object defining openings of the open cavity, wherein the partial bounding region comprises one or more exception surfaces which exclude the portions of the object defining openings of the open cavity.

25. The method of clause 24, wherein determining that the ray intersects the object comprises:

determining that the ray intersects at least one surface of the partial bounding region that is not an exception surface.

26. The method of any of clauses 1 to 5 or 21, wherein the object is a contiguous surface, and wherein the extents of the geometry defined by the object comprises an outer boundary of the surface.

27. The method of clause 26, wherein the one or more bounding regions comprise one or more bounding boxes aligned in one dimension with a plane of the contiguous surface, and wherein the at least one contained region is a contained volume that is contained within the outer boundary of the surface.

28. The method of clause 27, further comprising:

determining that the ray intersects the contiguous surface in dependence on determining that the ray intersects opposing faces of the bounding box, where the opposing faces are aligned with the plane of the surface.

29. The method of any preceding clause, wherein determining that the ray intersects the object is performed without determining that the ray intersects a primitive or leaf node associated with the object.

30. The method of any preceding clause, wherein the object is a 3D object, and the one or more bounding regions comprise one or more axis-aligned bounding boxes.

31. The method of any preceding clause, wherein each at least one contained region is an axis-aligned box.

32. The method of any preceding clause, further comprising outputting an indication that the ray intersects the object, wherein the outputted indication is used in the ray tracing system for rendering an image of a scene.

33. The method of any preceding clause, wherein the at least one contained region is wholly contained within the union of one or more bounding regions.

34. A graphics processing system configured to perform the method of any of clauses 1 to 27.

35. The graphics processing system of clause 31 wherein the graphics processing system is embodied in hardware on an integrated circuit.

36. Computer readable code configured to cause the method of any of clauses 1 to 30 to be performed when the code is run.

37. An integrated circuit definition dataset that, when processed in an integrated circuit manufacturing system, configures the integrated circuit manufacturing system to manufacture a graphics processing system clause 34 or 35.

38. An intersection testing module, for use in a ray tracing system, configured to determine whether a ray intersects an object of a scene, wherein the object is contained within a union of one or more bounding regions that are finite, and the one or more bounding regions forms part of an object partitioning hierarchy, the intersection testing module being configured to:

determine whether the ray intersects the bounding region;
in response to determining that the ray intersects a region defined by the union of the one or more bounding regions, obtain at least one contained region, wherein each at least one contained region is contained within, and smaller than, extents of a geometry defined by the object;
determine whether the ray intersects a contained region of the at least one contained region; and

determine whether the ray intersects the object at least in response to determining that the ray intersects the contained region.

**Features Table**

| Reference | Feature description |
|---|---|
| 100 | Ray tracing system |
| 102, 810 | Ray tracing unit |
| 104 | Memory |
| 106 | Processing module |
| 108 | Intersection testing module |
| 110 | Processing logic |
| 112 | Box intersection testing unit (BTU) |
| 114 | Triangle intersection testing units (TTU) |
| 202a, 202b, 302, 502, 602a, 602b, 602c, 602d, 702a, 702b, 702c, 702d, 802, 802b, 1502, 1602 | Ray |
| 204a, 204b, 504 | Axis-aligned bounding box (AABB) |
| 206a, 206b, 506, 706a, 806 | Intersection point between ray and bounding region that is least far along direction of ray |
| 208a, 208b, 508, 608a, 608b, 608c, 608d, 708a, 808 | Intersection point between ray and bounding region that is furthest along direction of ray |
| 210a, 210b, 310, 510, 610a, 610b, 610c, 610d, 710a, 710b, 710c, 710d, 810, 1510, 1610 | Ray minimum culling distance ($t_{min}$) |
| 212a, 212b, 312, 512, 612a, 612b, 612c, 612d, 712a, 712b, 712c, 712d, 812, 1512, 1612 | Ray maximum culling distance ($t_{max}$) |

(continued)

| Reference | Feature description |
|---|---|
| 300A, 300B, 300C, 604a, 604b, 604c, 604d, 704a, 704b, 704c, 704d, 804 | Object bounding region |
| 304A-L, 304B-L, 304C-L, 304A-R, 304B-R, 304B-R | Left-hand and right-hand bounding regions corresponding to first-generation child nodes for each 'object bounding region' of the three objects |
| 306A-L(1), 306A-L(2)... 306A-L(n), | Bounding regions corresponding to second-generation child nodes for the Left-hand bounding region of object 308A |
| 308A, 308B, 308C, 500, 600a, 600b, 600c, 600d | Closed object |
| 400 | Acceleration structure, specifically a bounding volume hierarchy (BVH) |
| 401 | Parent node in a bounding volume hierarchy corresponding to region containing each of objects 308A, 308B, 308C |
| 402a, 402b, 402c | Nodes corresponding to the object bounding regions for each of objects 308A, 308B, 308C |
| 404a, 404b | First-generation child nodes for the left-hand and right-hand bounding regions of object 308A |
| 406a, 406b, 406c | Second-generation child nodes corresponding to the bounding regions contained within the Left-hand bounding region of object 308A |
| 514, 614a, 614b, 614c, 614d | Contained region within an object (optionally an axis-aligned contained box, AACB) |
| 516, 616a, 616d, 716a, 716b, 716c, 716d, 816 | Intersection point between ray and contained region that is least far along direction of ray (i.e., closest intersection point between ray and contained region) |
| 518, 618a, 618b, 618d, 818 | Intersection point between ray and contained region that is furthest along direction of ray (i.e., furthest intersection point between ray and contained region) |
| 520, 620a, 620b, 620d, 720a, 720b, 720c | Updated ray maximum culling distance ($t_{max}$) |
| 622d | Additional contained region within object |
| 700a, 700b, 700c, 700d, 800 | Object with open cavity |
| 714a, 714b, 714c, 714d, 814, 914, 922, 1002, 1014, 1022, | Contained region within non-closed object with open cavity (i.e., contained region inside cavity of an object) |
| 724a, 724b, 724c, 724d, 824, 924, 1024 | Partial bounding region which excludes portions of object defining an opening and/or an opening of a concavity |
| 726a, 726c, 826 | Intersection point between ray and partial bounding region that is least far along the direction of the ray |
| 728a, 728b, 728c, 728d, 828 | Intersection point between ray and partial bounding region that is furthest along the direction of the ray |
| 730a, 730b, 730c, 730d, 830, 930-1, 930-2, 1030-1, 1030-2 | Exception surface of the partial bounding region. Defines a surface of the partial bounding region which excludes all portions of the object defining an opening of the open cavity |
| 732a, 732b, 732c, 732d, 832 | Convex deficiency of open object |
| 834, 834b | Light source |

**Claims**

1. A method of determining, in a ray tracing system, whether a ray intersects an object of a scene, wherein the object is contained within a bounding region that is finite and forms part of an object partitioning hierarchy, the method comprising:

   determining that the ray intersects the bounding region;
   obtaining at least one contained region, wherein each at least one contained region is contained within, and smaller than, extents of a geometry defined by the object;
   determining that the ray intersects a contained region of the at least one contained region; and
   determining whether the ray intersects the object in dependence on at least determining that the ray intersects the contained region.

2. The method of claim 1, further comprising, in response to determining that the ray intersects the object:

   updating an endpoint of the ray, defined by a maximum valid distance of the ray, by reducing the maximum valid distance by an amount that is no greater than a distance between the endpoint of the ray and an intersection point between the ray and the contained region; and
   determining the amount by which to reduce the maximum valid distance in dependence on a position of an intersection point between at least one of i) the ray and the contained region and ii) the ray and the bounding region.

3. The method of claim 2, comprising forming a queue of a plurality of intersection tests between the ray and a plurality of further bounding regions, the method comprising culling a subset of intersection tests in the queue in dependence on determining that the ray intersects the object and wherein culling the subset of intersection tests comprises determining whether a maximum distance condition is satisfied, wherein the maximum distance condition is satisfied if an updated endpoint of the ray defined by the reduced maximum valid distance is at least as far along a direction of the ray as an intersection point between the ray and a further bounding region associated with a respective queued intersection test.

4. The method of claim 2 or 3, wherein updating the end point of the ray comprises:

   setting an updated end point of the ray to be equal to an intersection point, between the ray and the contained region, that is least far along a direction of the ray;
   determining that a start point of the ray lies outside the bounding region; and
   determining that the intersection point, between the ray and the contained region, that is least far along a direction of the ray is less far along a direction of the ray than the endpoint of the ray,
   wherein there is a plurality of contained regions, and wherein updating the endpoint of the ray comprises:

      determining that the ray intersects a subset of contained regions of the plurality of contained regions; and
      setting an updated endpoint of the ray to be equal to an intersection point between the ray and a contained region in the subset that is least far along a direction of the ray.

5. The method of claim 2 or 3, wherein updating the endpoint of the ray comprises:

   setting an updated endpoint of the ray to be equal to an intersection point, between the ray and the bounding region, that is furthest along a direction of the ray;
   determining that a start point of the ray lies within the bounding region; and
   determining that the intersection point, between the ray and the bounding region, that is furthest along a direction of the ray is less far along a direction of the ray than the endpoint of the ray.

6. The method of any preceding claim, wherein the object is non-closed self-concealing object that contains a hidden region, wherein the hidden region is contained entirely within an interior of the non-closed self-concealing object, the hidden region defined by being obscured from all possible viewing angles external to the non-closed self-concealing object, wherein each at least one contained region is contained within the hidden region of the non-closed self-concealing object.

7. The method of claim 2 or 3, wherein the object comprises an open cavity, and wherein the extents of the geometry of the object defining the region that contains the contained region is an externally facing surface of the object, wherein the method comprises:

in response to determining that the ray intersects the bounding region, obtaining a partial bounding region which i) contains the at least one contained region and ii) excludes all portions of the object defining openings of the open cavity, and wherein one or more exception surface of the partial bounding region defines a surface of the partial bounding region which excludes the portions of the object defining the opening of the open cavity, and wherein updating the endpoint of the ray is performed in dependence on determining that the ray intersects at least one surface of the partial bounding region that is not an exception surface, and wherein the one or more exception surfaces are selected to exclude only a subset of openings of the open cavity, wherein the subset of openings is defined such that the at least one contained region is viewable via the openings.

8. The method of claim 7, wherein updating the endpoint of the ray comprises:

determining that a start point of the ray lies outside of the partial bounding region;
determining that an intersection point, between the ray and the partial bounding volume, that is least far along a direction of the ray does not lie on an exception surface;
setting an updated endpoint of the ray to be equal to an intersection point, between the ray and the contained region, that is least far along a direction of the ray;
determining that a start point of the ray lies outside of the partial bounding region;
determining that an intersection point, between the ray and the partial bounding volume, that is least far along a direction of the ray lies on an exception surface; and
setting an updated end point of the ray to be equal to said intersection point, between the ray and the partial bounding region, that is furthest along a direction of the ray.

9. The method of claim 7, wherein updating the endpoint of the ray comprises:

determining that a start point of the ray lies inside the partial bounding region; and
setting an updated end point of the ray to be equal to said intersection point, between the ray and the partial bounding region, that is furthest along a direction of the ray.

10. The method of any preceding claim, wherein either:

an exit condition of the ray is a closest-hit exit condition, or
the exit condition for the ray is an any-hit exit condition, wherein the method further comprises:
terminating processing for that ray in response to determining that the ray intersects the object.

11. The method of claim 10, wherein the exit condition of the ray is the any-hit exit condition, wherein either:

the object is a closed object, and the geometry of the closed object is an external surface of the object, or
the object is a non-closed self-concealing object, and the extents of a geometry defined by the non-closed self-concealing object comprises a hidden region contained entirely within an interior of the non-closed object, the hidden region defined by being obscured from all possible viewing angles external to the non-closed object;
wherein determining that the ray intersects the object comprises determining that the ray intersects at least one contained region of the contained region at least once.

12. The method of claim 10, wherein the exit condition of the ray is the any-hit exit condition, wherein the object comprises an open cavity, and the extents of the geometry defined by the object defining the region that contains the contained region is an externally facing surface of the object, wherein the method further comprises:
obtaining a partial bounding region which i) contains the at least one contained region and ii) excludes all portions of the object defining openings of the open cavity, wherein the partial bounding region comprises one or more exception surfaces which exclude the portions of the object defining openings of the open cavity, and wherein determining that the ray intersects the object comprises:
determining that the ray intersects at least one surface of the partial bounding region that is not an exception surface.

13. The method of any of claims 1 to 3 or 10, wherein the object is a contiguous surface, and wherein the extents of the geometry defined by the object comprises an outer boundary of the surface, and wherein the bounding region is a bounding box aligned in one dimension with a plane of the contiguous surface, and wherein the at least one contained region is a contained volume that is contained within the outer boundary of the surface, and wherein the method further comprises:
determining that the ray intersects the contiguous surface in dependence on determining that the ray intersects opposing faces of the bounding box, where the opposing faces are aligned with the plane of the surface.

14. The method of any preceding claim, further comprising outputting an indication that the ray intersects the object, wherein the outputted indication is used in the ray tracing system for rendering an image of a scene.

15. An intersection testing module, for use in a ray tracing system, configured to determine whether a ray intersects an object of a scene, wherein the object is contained within a bounding region that is finite and forms part of an object partitioning hierarchy, the intersection testing module being configured to:

determine whether the ray intersects the bounding region;
in response to determining that the ray intersects the bounding region, obtain at least one contained region, wherein each at least one contained region is contained within, and smaller than, extents of a geometry defined by the object;
determine whether the ray intersects a contained region of the at least one contained region; and
determine whether the ray intersects the object at least in response to determining that the ray intersects the contained region.

100

102

104

106 — Processing module

108

112 — Box intersection testing unit(s)

Geometric data →

Ray data →

Triangle intersection testing unit(s)

114

Intersection testing module

110 — Processing logic

Ray tracing unit

Memory

**FIGURE 1**

FIGURE 2a

FIGURE 2b

**FIGURE 3**

EP 4 654 144 A1

FIGURE 4

FIGURE 5a

FIGURE 5b

**FIGURE 6a**

**FIGURE 6b**

600c  604c

$t_{max}$

612c

608c

614c

622c

$t_{min}$

602c

610c

**FIGURE 6c**

600d  604d

614d

618d

$t_{max}$

608d

616d

612d

620d

$t_{min}$

622d

610d  602d

**FIGURE 6d**

**FIGURE 7a**

**FIGURE 7b**

FIGURE 7c

FIGURE 7d

FIGURE 7e

FIGURE 8a

**FIGURE 8b**

FIGURE 9a

FIGURE 9b

**FIGURE 10a**

FIGURE 10b

| Determine that ray intersects bounding region (which bounds an object) | S102 |

↓

| Obtain at least one contained region, wherein each contained region is entirely contained within extents of a geometry of the object | S104 |

↓

| Determine that the ray intersects a contained region (of the at least one contained region) | S106 |

↓

| Infer, at least based on S106, whether the ray intersects the object | S108 |

Output an indication that the ray intersects the object, and use outputted indication in the ray tracing system for rendering an image of the scene

S110

Reduce maximum valid distance of the ray no more than the distance between the end point of the ray and the closest intersection point with the contained region (closest-hit exit condition)

S112

Determine whether processing of ray can be terminated (any-hit exit condition)

S114

## FIGURE 11

S112

S202

Are contained region(s) contained within closed bounds of object?

No → **A**

Yes

S204

No

Does start point of ray lie outside the bounding region?

Yes

S206

If it results in a reduction of the maximum valid distance, set an updated end point of the ray to be equal to the intersection point, between the ray and the contained region, that is least far along a direction of the ray

S208

If it results in a reduction of the maximum valid distance, set an updated end point of the ray to be equal to the intersection point, between the ray and the bounding region, that is furthest along a direction of the ray

**CLOSEST-HIT CONDITION**

**FIGURE 12**

S112

S302

**A** → Obtain a partial bounding region which i) contains the contained region(s) and ii) has 'exception surfaces' that do not contain portions of the object defining openings or concavities

S304

Yes

No

Does the ray intersect the partial bounding region **only** via exception surfaces?

S306

Does start point of the ray lie outside the partial bounding region?

No

Yes

S310

Cannot yet safely reduce maximum valid distance of ray

**B**

S308

Does the ray enter the partial bounding region via a standard surface?

No

Yes

S312

Yes

If it results in a reduction of the maximum valid distance, set an updated end point of the ray to be equal to the intersection point, between the ray and the contained region, that is least far along a direction of the ray

**B** S314

If it results in a reduction of the maximum valid distance, set an updated end point of the ray to be equal to the intersection point, between the ray and the partial bounding region, that is furthest along a direction of the ray

**CLOSEST-HIT CONDITION**

**FIGURE 13**

S114

S402

**Are contained region(s) contained within closed bounds of object?**

No

Yes

S404

Obtain a partial bounding region which i) contains the contained region(s) and ii) has 'exception surfaces' that do not contain portions of the object defining openings or concavities

S406

**Does the ray intersect the partial bounding region only via exception surfaces?**

S408

Terminate processing of ray

No

Yes

S410

Cannot yet safely terminate processing of ray

**ANY-HIT CONDITION**

**FIGURE 14**

FIGURE 15a

**FIGURE 15b**

EP 4 654 144 A1

FIGURE 16a

**FIGURE 16b**

**FIGURE 17a**

**FIGURE 17b**

**FIGURE 18a**

**FIGURE 18b**

1800c

**FIGURE 18c**

FIGURE 19

2002　　　　　　2004

CPU

2011　GPU

2010

2014

Display　　2016

Speakers　　2018

Camera　　2022

2020

2006　Memory

2012

**FIGURE 20**

2104　　2102　　2106

IC definition dataset → Layout processing → Circuit layout definition → Integrated circuit generation → Integrated circuit

**FIGURE 21**

| | Europäisches Patentamt European Patent Office Office européen des brevets | **EUROPEAN SEARCH REPORT** | **Application Number** EP 25 17 8166 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AILA TIMO ET AL: "Understanding the efficiency of ray traversal on GPUs", ACM SIGGRAPH ASIA 2009 PAPERS ON, SIGGRAPH ASIA '09, ACM PRESS, NEW YORK, NEW YORK, USA, 1 August 2009 (2009-08-01), pages 145-149, XP058607035, DOI: 10.1145/1572769.1572792 ISBN: 978-1-60558-858-2 | 1-13,15 | INV. G06T15/06 |
| A | * abstract * * section 2: introductory part * ----- | 14 | |
| X | Gribble Christiaan: "Multi-Hit Ray Tracing in DXR: High-Quality and Real-Time Rendering with DXR and Other APIs", , 1 February 2019 (2019-02-01), XP093296433, DOI: 10.1007/978-1-4842-4427-2_9 Retrieved from the Internet: URL:https://www.researchgate.net/publicati on/331333394_Multi-Hit_Ray_Tracing_in_DXR_ High-Quality_and_Real-Time_Rendering_with_ DXR_and_Other_APIs | 1-13,15 | |
| A | * abstract * * section 9.2: introductory part * ----- | 14 | **TECHNICAL FIELDS SEARCHED (IPC)** G06T |
| X | Yoshimura Atsushi ET AL: "Subspace Culling for Ray-Box Intersection", , 15 May 2023 (2023-05-15), XP093296445, Retrieved from the Internet: URL:https://arxiv.org/pdf/2305.08343 | 1-13,15 | |
| A | * abstract * * section 3: introductory part; figure 2 * ----- | 14 | |

The present search report has been drawn up for all claims

| Place of search | Date of completion of the search | Examiner |
|---|---|---|
| Berlin | 17 July 2025 | Gao, Miao |

EPO FORM 1503 03.82 (P4C01)

**EP 4 654 144 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2407459 A

- GB 2505211 A

**Non-patent literature cited in the description**

- **DJEU**. Accelerating Shadow Rays Using Volumetric Occluders and Modified kd-Tree Traversal. *High Performance Graphics*, 2009